(19) Europäisches Patentamt

European Patent Office

Office européen des brevets

(11) **EP 4 586 196 A1**

(12) **EUROPEAN PATENT APPLICATION**

(43) Date of publication:
**16.07.2025 Bulletin 2025/29**

(21) Application number: **25151988.0**

(22) Date of filing: **15.01.2025**

(51) International Patent Classification (IPC):
**G06T 9/00** $^{(2006.01)}$     **H04N 19/597** $^{(2014.01)}$
**H04N 19/96** $^{(2014.01)}$     **H04N 19/54** $^{(2014.01)}$
**H04N 19/70** $^{(2014.01)}$

(52) Cooperative Patent Classification (CPC):
**H04N 19/597; G06T 9/001; H04N 19/54;
H04N 19/70; H04N 19/96**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.01.2024 US 202463621100 P**

(71) Applicant: **Comcast Cable Communications, LLC
Philadelphia, PA 19103 (US)**

(72) Inventors:
 • **TAQUET, Jonathan
  Philadelphia, 19103 (US)**
 • **LASSERRE, Sébastien
  Philadelphia, 19103 (US)**

(74) Representative: **V.O.
P.O. Box 87930
2508 DH Den Haag (NL)**

(54) **MOTION COMPENSATION RECOLORING OF POINT CLOUDS**

(57) Systems, apparatuses, methods, and computer-readable media are described for determining and/or coding attribute information of a point cloud frame associated with content. The attribute information may be predicted, for example, based on a reference point cloud frame and a motion vector field used for reconstructed points of a point cloud frame. Attributes of one or more reference points in the reference point cloud frame may be used to determine the attributes of each reconstructed point, for example, if the one or more reference points are neighboring points of a motion-compensated point of the reconstructed point. Using motion compensation for the reconstructed points may lead to increased accuracy of attribute prediction, reduced memory use, and lower power consumption.

*FIG. 21*

**Description**

CROSS REFERENCE TO RELATED APPLICATIONS

This application claims the benefit of U.S. Provisional Application No. 63/621,100 filed on January 15, 2024. The above referenced application is hereby incorporated by reference in their entirety.

BACKGROUND

An object or scene may be described using volumetric visual data consisting of a series of points. The points may be stored as a point cloud format that includes a collection of points in three-dimensional space. As point clouds can get quite large in data size, transmitting and processing point cloud data may need a data compression scheme that is specifically designed with respect to the unique characteristics of point cloud data.

SUMMARY

The following summary presents a simplified summary of certain features. The summary is not an extensive overview and is not intended to identify key or critical elements.
Point cloud frames associated with content may comprise geometry information and attribute information (e.g., color or texture of the geometry). Attribute information may be coded separately from geometry information. A reference point cloud frame and a motion vector field may be used to predict attributes of reconstructed points (or decoded geometry) of a point cloud frame. A reconstructed point may be applied with a motion vector, of the motion vector field, to obtain a motion-compensated point in the neighborhood of the reference point cloud frame. One or more neighboring reference points in the reference point cloud frame may be searched and selected, so as to determine (e.g., predict, estimate) the attributes of the reconstructed point associated with the motion-compensated point. The one or more neighboring reference points may be the point(s) closest to (or nearest to, with the smallest distance(s) from) the motion-compensated point. Attributes of the one or more neighboring reference points may be used to determine the attributes of the reconstructed point. Increased accuracy of attribute prediction, reduced memory use, and/or lower power consumption may be achieved, for example, due to motion compensation being used for the decoded geometry instead of the reference point cloud frame.
These and other features and advantages are described in greater detail below.

BRIEF DESCRIPTION OF THE DRAWINGS

Some features are shown by way of example, and not by limitation, in the accompanying drawings. In the drawings, like numerals reference similar elements.

FIG. 1 shows an example point cloud coding system.
FIG. 2 shows an example Morton order.
FIG. 3 shows an example scanning order.
FIG. 4 shows an example neighborhood of cuboids for entropy coding the occupancy of a child cuboid.
FIG. 5 shows an example of a dynamic reduction function DR that may be used in dynamic Optimal Binary Coders with Update on the Fly (OBUF).
FIG. 6 shows an example method for coding occupancy of a cuboid using dynamic OBUF.
FIG. 7 shows an example of an occupied cuboid.
FIG. 8A shows an example cuboid corresponding to a TriSoup node.
FIG. 8B shows an example refinement to the TriSoup model.
FIG. 8C shows an example of coding a centroid residual vector.
FIG. 9A and FIG. 9B show examples of voxelization.
FIG. 10 shows an example encoding method using inter-frame prediction.
FIG. 11 shows an example method for encoding point cloud attributes.
FIG. 12 shows an example method for decoding point cloud attributes.
FIG. 13 shows an example method for encoding point cloud attributes.
FIG. 14 shows an example method for decoding point cloud attributes.
FIG. 15 shows an example region adaptive hierarchical transform (RAHT) transformation.
FIG. 16 shows another example of the RAHT transformation.
FIG. 17 shows an example method for encoding point cloud frames.
FIG. 18 shows an example method for decoding point cloud frames.

FIG. 19 shows an example method for obtaining projected attributes.

FIG. 20A and FIG. 20B show examples of different approaches of projecting attributes.

FIG. 21 shows an example method for obtaining projected attributes.

FIG. 22 shows an example method for obtaining projected attributes.

FIG. 23 shows an example method for encoding attributes of a point cloud frame.

FIG. 24 shows an example method for decoding attributes of a point cloud frame.

FIG. 25 shows an example computer system in which examples of the present disclosure may be implemented.

FIG. 26 shows example elements of a computing device that may be used to implement any of the various devices described herein.

## DETAILED DESCRIPTION

The accompanying drawings and descriptions provide examples. It is to be understood that the examples shown in the drawings and/or described are non-exclusive, and that features shown and described may be practiced in other examples. Examples are provided for operation of point cloud or point cloud sequence encoding or decoding systems. More particularly, the technology disclosed herein may relate to point cloud compression as used in encoding and/or decoding devices and/or systems.

At least some visual data may describe an object or scene in content and/or media using a series of points. Each point may comprise a position in two dimensions (x and y) and one or more optional attributes like color. Volumetric visual data may add another positional dimension to these visual data. For example, volumetric visual data may describe an object or scene in content and/or media using a series of points that each may comprise a position in three dimensions (x, y, and z) and one or more optional attributes like color, reflectance, time stamp, etc. Volumetric visual data may provide a more immersive way to experience visual data, for example, compared to the at least some visual data. For example, an object or scene described by volumetric visual data may be viewed from any (or multiple) angles, whereas the at least some visual data may generally only be viewed from the angle in which it was captured or rendered. As a format for the representation of visual data (e.g., volumetric visual data, three-dimensional video data, etc.), point clouds are versatile in their capability in representing all types of three-dimensional (3D) objects, scenes, and visual content. Point clouds are well suited for use in various applications including, among others: movie post-production, real-time 3D immersive media or telepresence, extended reality, free viewpoint video, geographical information systems, autonomous driving, 3D mapping, visualization, medicine, multi-view replay, and real-time Light Detection and Ranging (LiDAR) data acquisition.

As explained herein, volumetric visual data may be used in many applications, including extended reality (XR). XR encompasses various types of immersive technologies, including augmented reality (AR), virtual reality (VR), and mixed reality (MR). Sparse volumetric visual data may be used in the automotive industry for the representation of three-dimensional (3D) maps (e.g., cartography) or as input to assisted driving systems. In the case of assisted driving systems, volumetric visual data may be typically input to driving decision algorithms. Volumetric visual data may be used to store valuable objects in digital form. In applications for preserving cultural heritage, a goal may be to keep a representation of objects that may be threatened by natural disasters. For example, statues, vases, and temples may be entirely scanned and stored as volumetric visual data having several billions of samples. This use-case for volumetric visual data may be particularly relevant for valuable objects in locations where earthquakes, tsunamis and typhoons are frequent. Volumetric visual data may take the form of a volumetric frame. The volumetric frame may describe an object or scene captured at a particular time instance. Volumetric visual data may take the form of a sequence of volumetric frames (referred to as a volumetric sequence or volumetric video). The sequence of volumetric frames may describe an object or scene captured at multiple different time instances.

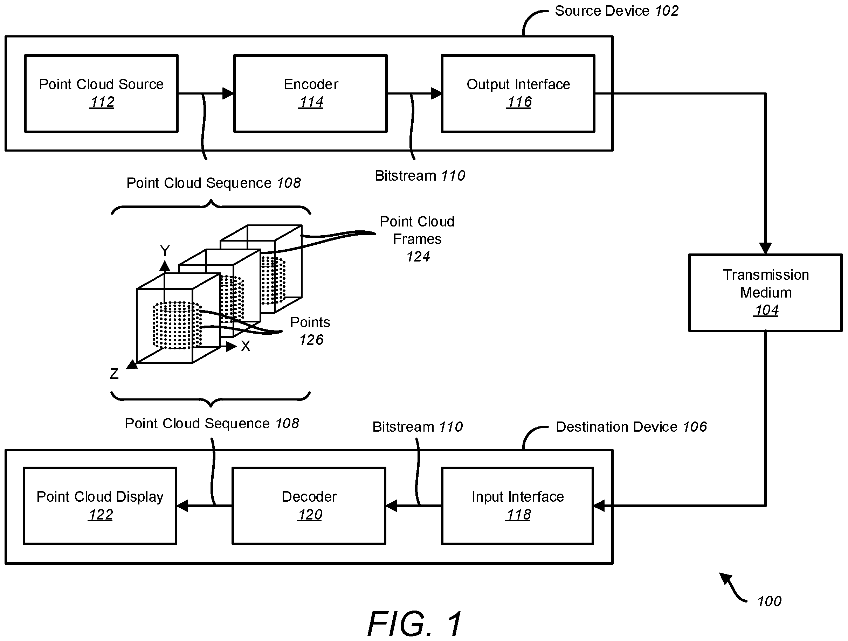

Volumetric visual data may be stored in various formats. A point cloud may comprise a collection of points in a 3D space. Such points may be used create a mesh comprising vertices and polygons, or other forms of visual content. As described herein, point cloud data may take the form of a point cloud frame, which describes an object or scene in content that is captured at a particular time instance. Point cloud data may take the form of a sequence of point cloud frames (e.g., point cloud video). As further described herein, point cloud data may be encoded by a source device (e.g., source device 102 as described herein with respect to FIG. 1) that outputs a bitstream containing the encoded point cloud data. The source device may encode the point cloud data based on point cloud compression coding, for example, geometry-based point cloud compression (G-PCC) coding and/or video-based point cloud compression (V-PCC) coding, or next generation coding. A destination device (e.g., destination device 106 as described herein with respect to FIG. 1) receives the bitstream containing the point cloud data and decodes the bitstream containing the point cloud data. The destination device may decode the point cloud data by performing point cloud decompression coding. The decompression coding may be an inverse process of the point cloud compression coding. The point cloud decompression coding may include, for example, G-PCC coding. Decoding may be used to decompress the point cloud data for display and/or other forms of consumption (e.g., further analysis, storage, etc.). The destination device (or a different device) may include, for example, a renderer for rendering the decoded point cloud data. The renderer may output content, for example, by rendering the point cloud data. The renderer may output content, for example, by rendering the point cloud data along with other data (e.g., audio data).

One format for storing volumetric visual data may be point clouds. A point cloud may comprise a collection of points in 3D space. Each point in a point cloud may comprise geometry information that may indicate the point's position in 3D space. For example, the geometry information may indicate the point's position in 3D space, for example, using three Cartesian coordinates (x, y, and z) and/or using spherical coordinates (r, phi, theta) (e.g., if acquired by a rotating sensor). The positions of points in a point cloud may be quantized according to a space precision. The space precision may be the same or different in each dimension. The quantization process may create a grid in 3D space. One or more points residing within each sub-grid volume may be mapped to the sub-grid center coordinates, referred to as voxels. A voxel (also referred to as a volumetric pixel) may be considered as a 3D extension of pixels corresponding to the 2D image grid coordinates. For example, similar to a pixel being the smallest unit in the example of dividing the 2D space (or 2D image) into discrete, uniform (e.g., equally sized) regions, a voxel may be the smallest unit of volume in the example of dividing 3D space into discrete, uniform regions. A point in a point cloud may comprise one or more types of attribute information. Attribute information may indicate a property of a point's visual appearance. For example, attribute information may indicate a texture (e.g., color) of the point, a material type of the point, transparency information of the point, reflectance information of the point, a normal vector to a surface of the point, a velocity at the point, an acceleration at the point, a time stamp indicating when the point was captured, or a modality indicating how the point was captured (e.g., running, walking, or flying). A point in a point cloud may comprise light field data in the form of multiple view-dependent texture information. Light field data may be another type of optional attribute information.

The points in a point cloud may describe an object or a scene. For example, the points in a point cloud may describe the external surface and/or the internal structure of an object or scene. The object or scene may be synthetically generated by a computer. The object or scene may be generated from the capture of a real-world object or scene. The geometry information of a real-world object or a scene may be obtained by 3D scanning and/or photogrammetry. 3D scanning may include different types of scanning, for example, laser scanning, structured light scanning, and/or modulated light scanning. 3D scanning may obtain geometry information. 3D scanning may obtain geometry information, for example, by moving one or more laser heads, structured light cameras, and/or modulated light cameras relative to an object or scene being scanned. Photogrammetry may obtain geometry information. Photogrammetry may obtain geometry information, for example, by triangulating the same feature or point in different spatially shifted 2D photographs. Point cloud data may take the form of a point cloud frame. The point cloud frame may describe an object or scene captured at a particular time instance. Point cloud data may take the form of a sequence of point cloud frames. The sequence of point cloud frames may be referred to as a point cloud sequence or point cloud video. The sequence of point cloud frames may describe an object or scene captured at multiple different time instances.

The data size of a point cloud frame or point cloud sequence may be excessive (e.g., too large) for storage and/or transmission in many applications. For example, a single point cloud may comprise over a million points or even billions of points. Each point may comprise geometry information and one or more optional types of attribute information. The geometry information of each point may comprise three Cartesian coordinates (x, y, and z) and/or spherical coordinates (r, phi, theta) that may be each represented, for example, using at least 10 bits per component or 30 bits in total. The attribute information of each point may comprise a texture corresponding to a plurality of (e.g., three) color components (e.g., R, G, and B color components). Each color component may be represented, for example, using 8-10 bits per component or 24-30 bits in total. For example, a single point may comprise at least 54 bits of information, with at least 30 bits of geometry information and at least 24 bits of texture. If a point cloud frame includes a million such points, each point cloud frame may require 54 million bits or 54 megabits to represent. For dynamic point clouds that change over time, at a frame rate of 30 frames per second, a data rate of 1.32 gigabits per second may be required to send (e.g., transmit) the points of the point cloud sequence. Raw representations of point clouds may require a large amount of data, and the practical deployment of point-cloud-based technologies may need compression technologies that enable the storage and distribution of point clouds with a reasonable cost.

Encoding may be used to compress and/or reduce the data size of a point cloud frame or point cloud sequence to provide for more efficient storage and/or transmission. Decoding may be used to decompress a compressed point cloud frame or point cloud sequence for display and/or other forms of consumption (e.g., by a machine learning based device, neural network-based device, artificial intelligence-based device, or other forms of consumption by other types of machine-based processing algorithms and/or devices). Compression of point clouds may be lossy (introducing differences relative to the original data) for the distribution to and visualization by an end-user, for example, on AR or VR glasses or any other 3D-capable device. Lossy compression may allow for a high ratio of compression but may imply a trade-off between compression and visual quality perceived by an end-user. Other frameworks, for example, frameworks for medical applications or autonomous driving, may require lossless compression to avoid altering the results of a decision obtained, for example, based on the analysis of the sent (e.g., transmitted) and decompressed point cloud frame.

FIG. 1 shows an example point cloud coding (e.g., encoding and/or decoding) system 100. Point cloud coding system 100 may comprise a source device 102, a transmission medium 104, and a destination device 106. Source device 102 may encode a point cloud sequence 108 into a bitstream 110 for more efficient storage and/or transmission. Source device 102 may store and/or send (e.g., transmit) bitstream 110 to destination device 106 via transmission medium 104. Destination device 106 may decode bitstream 110 to display point cloud sequence 108 or for other forms of consumption (e.g., further analysis, storage, etc.). Destination device 106 may receive bitstream 110 from source device 102 via a storage medium or transmission medium 104. Source device 102 and destination device 106 may include any number of different devices. Source device 102 and destination device 106 may include, for example, a cluster of interconnected computer systems acting as a pool of seamless resources (also referred to as a cloud of computers or cloud computer), a server, a desktop computer, a laptop computer, a tablet computer, a smart phone, a wearable device, a television, a camera, a video gaming console, a set-top box, a video streaming device, a vehicle (e.g., an autonomous vehicle), or a head-mounted display. A head-mounted display may allow a user to view a VR, AR, or MR scene and adjust the view of the scene, for example, based on movement of the user's head. A head-mounted display may be connected (e.g., tethered) to a processing device (e.g., a server, a desktop computer, a set-top box, or a video gaming console) or may be fully self-contained.

A source device 102 may comprise a point cloud source 112, an encoder 114, and an output interface 116. A source device 102 may comprise a point cloud source 112, an encoder 114, and an output interface 116, for example, to encode point cloud sequence 108 into a bitstream 110. Point cloud source 112 may provide (e.g., generate) point cloud sequence 108, for example, from a capture of a natural scene and/or a synthetically generated scene. A synthetically generated scene may be a scene comprising computer generated graphics. Point cloud source 112 may comprise one or more point cloud capture devices, a point cloud archive comprising previously captured natural scenes and/or synthetically generated scenes, a point cloud feed interface to receive captured natural scenes and/or synthetically generated scenes from a point cloud content provider, and/or a processor(s) to generate synthetic point cloud scenes. The point cloud capture devices may include, for example, one or more laser scanning devices, structured light scanning devices, modulated light scanning devices, and/or passive scanning devices.

Point cloud sequence 108 may comprise a series of point cloud frames 124 (e.g., an example shown in FIG. 1). A point cloud frame may describe an object or scene captured at a particular time instance. Point cloud sequence 108 may achieve the impression of motion by using a constant or variable time to successively present point cloud frames 124 of point cloud sequence 108. A point cloud frame may comprise a collection of points (e.g., voxels) 126 in 3D space. Each point 126 may comprise geometry information that may indicate the point's position in 3D space. The geometry information may indicate, for example, the point's position in 3D space using three Cartesian coordinates (x, y, and z). One or more of points 126 may comprise one or more types of attribute information. Attribute information may indicate a property of a point's visual appearance. For example, attribute information may indicate, for example, a texture (e.g., color) of a point, a material type of a point, transparency information of a point, reflectance information of a point, a normal vector to a surface of a point, a velocity at a point, an acceleration at a point, a time stamp indicating when a point was captured, a modality indicating how a point was captured (e.g., running, walking, or flying), etc. One or more of points 126 may comprise, for example, light field data in the form of multiple view-dependent texture information. Light field data may be another type of optional attribute information. Color attribute information of one or more of points 126 may comprise a luminance value and two chrominance values. The luminance value may represent the brightness (e.g., luma component, Y) of the point. The chrominance values may respectively represent the blue and red components of the point (e.g., chroma components, Cb and Cr) separate from the brightness. Other color attribute values may be represented, for example, based on different color schemes (e.g., an RGB or monochrome color scheme).

Encoder 114 may encode point cloud sequence 108 into a bitstream 110. To encode point cloud sequence 108, encoder 114 may use one or more lossless or lossy compression techniques to reduce redundant information in point cloud sequence 108. To encode point cloud sequence 108, encoder 114 may use one or more prediction techniques to reduce redundant information in point cloud sequence 108. Redundant information is information that may be predicted at a decoder 120 and may not be needed to be sent (e.g., transmitted) to decoder 120 for accurate decoding of point cloud sequence 108. For example, Motion Picture Expert Group (MPEG) introduced a geometry-based point cloud compression (G-PCC) standard (ISO/IEC standard 23090-9: Geometry-based point cloud compression). G-PCC specifies the encoded bitstream syntax and semantics for transmission and/or storage of a compressed point cloud frame and the decoder operation for reconstructing the compressed point cloud frame from the bitstream. During standardization of G-PCC, a reference software (ISO/IEC standard 23090-21: Reference Software for G-PCC) was developed to encode the geometry and attribute information of a point cloud frame. To encode geometry information of a point cloud frame, the G-PCC reference software encoder may perform voxelization. The G-PCC reference software encoder may perform voxelization, for example, by quantizing positions of points in a point cloud. Quantizing positions of points in a point cloud may create a grid in 3D space. The G-PCC reference software encoder may map the points to the center coordinates of the sub-grid volume (e.g., voxel) that their quantized locations reside in. The G-PCC reference software encoder may perform geometry analysis using an occupancy tree to compress the geometry information. The G-PCC reference software encoder may entropy encode the result of the geometry analysis to further compress the geometry information. To encode attribute information of a point cloud, the G-PCC reference software encoder may use a transform tool, such as Region Adaptive Hierarchical Transform (RAHT), the Predicting Transform, and/or the Lifting Transform. The Lifting Transform may be built on top of the Predicting Transform. The Lifting Transform may include an extra update/lifting step. The Lifting Transform and the Predicting Transform may be referred to as Predicting/Lifting Transform or pred lift. Encoder 114 may operate in a same or similar manner to an encoder provided by the G-PCC reference software.

Output interface 116 may be configured to write and/or store bitstream 110 onto transmission medium 104. The bitstream 110 may be sent (e.g., transmitted) to destination device 106. In addition or alternatively, output interface 116 may be configured to send (e.g., transmit), upload, and/or stream bitstream 110 to destination device 106 via transmission medium 104. Output interface 116 may comprise a wired and/or wireless transmitter configured to send (e.g., transmit), upload, and/or stream bitstream 110 according to one or more proprietary, open-source, and/or standardized communication protocols. The one or more proprietary, open-source, and/or standardized communication protocols may include, for example, Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, Wireless Application Protocol (WAP) standards, and/or any other communication protocol.

Transmission medium 104 may comprise a wireless, wired, and/or computer readable medium. For example, transmission medium 104 may comprise one or more wires, cables, air interfaces, optical discs, flash memory, and/or magnetic memory. In addition or alternatively, transmission medium 104 may comprise one or more networks (e.g., the Internet) or file server(s) configured to store and/or send (e.g., transmit) encoded video data.

Destination device 106 may decode bitstream 110 into point cloud sequence 108 for display or other forms of consumption. Destination device 106 may comprise one or more of an input interface 118, a decoder 120, and/or a point cloud display 122. Input interface 118 may be configured to read bitstream 110 stored on transmission medium 104. Bitstream 110 may be stored on transmission medium 104 by source device 102. In addition or alternatively, input interface 118 may be configured to receive, download, and/or stream bitstream 110 from source device 102 via transmission medium 104. Input interface 118 may comprise a wired and/or wireless receiver configured to receive, download, and/or stream bitstream 110 according to one or more proprietary, open-source, standardized communication protocols, and/or any other communication protocol. Examples of the protocols include Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, and Wireless Application Protocol (WAP) standards.

Decoder 120 may decode point cloud sequence 108 from encoded bitstream 110. For example, decoder 120 may operate in a same or similar manner as a decoder provided by G-PCC reference software. Decoder 120 may decode a point cloud sequence that approximates a point cloud sequence 108. Decoder 120 may decode a point cloud sequence that approximates a point cloud sequence 108 due to, for example, lossy compression of the point cloud sequence 108 by encoder 114 and/or errors introduced into encoded bitstream 110, for example, if transmission to destination device 106 occurs.

Point cloud display 122 may display a point cloud sequence 108 to a user. The point cloud display 122 may comprise, for example, a cathode rate tube (CRT) display, a liquid crystal display (LCD), a plasma display, a light emitting diode (LED) display, a 3D display, a holographic display, a head-mounted display, or any other display device suitable for displaying point cloud sequence 108.

Point cloud coding (e.g., encoding/decoding) system 100 is presented by way of example and not limitation. Point cloud coding systems different from the point cloud coding system 100 and/or modified versions of the point cloud coding system 100 may perform the methods and processes as described herein. For example, the point cloud coding system 100 may comprise other components and/or arrangements. Point cloud source 112 may, for example, be external to source device 102. Point cloud display device 122 may, for example, be external to destination device 106 or omitted altogether (e.g., if point cloud sequence 108 is intended for consumption by a machine and/or storage device). Source device 102 may further comprise, for example, a point cloud decoder. Destination device 106 may comprise, for example, a point cloud encoder. For example, source device 102 may be configured to further receive an encoded bit stream from destination device 106. Receiving an encoded bit stream from destination device 106 may support two-way point cloud transmission between the devices.

As described herein, an encoder may quantize the positions of points in a point cloud according to a space precision, which may be the same or different in each dimension of the points. The quantization process may create a grid in 3D space. The encoder may map any points residing within each sub-grid volume to the sub-grid center coordinates, referred to as a voxel or a volumetric pixel. A voxel may be considered as a 3D extension of pixels corresponding to 2D image grid coordinates.

An encoder may represent or code a point cloud (e.g., a voxelized). An encoder may represent or code a point cloud, for example, using an occupancy tree. For example, the encoder may split the initial volume or cuboid containing the point cloud into sub-cuboids. The initial volume or cuboid may be referred to as a bounding box. A cuboid may be, for example, a cube. The encoder may recursively split each sub-cuboid that contains at least one point of the point cloud. The encoder may not further split sub-cuboids that do not contain at least one point of the point cloud. A sub-cuboid that contains at least one point of the point cloud may be referred to as an occupied sub-cuboid. A sub-cuboid that does not contain at least one point of the point cloud may be referred to as an unoccupied sub-cuboid. The encoder may split an occupied sub-cuboid into, for example, two sub-cuboids (to form a binary tree), four sub-cuboids (to form a quadtree), or eight sub-cuboids (to form an octree). The encoder may split an occupied sub-cuboid to obtain further sub-cuboids. The sub-cuboids may have the same size and shape at a given depth level of the occupancy tree. The sub-cuboids may have the same size and shape at a given depth level of the occupancy tree, for example, if the encoder splits the occupied sub-cuboid along a plane passing through the middle of edges of the sub-cuboid.

The initial volume or cuboid containing the point cloud may correspond to the root node of the occupancy tree. Each occupied sub-cuboid, split from the initial volume (e.g., cuboid), may correspond to a node (of the root node) in a second level of the occupancy tree. Each occupied sub-cuboid, split from an occupied sub-cuboid in the second level, may correspond to a node (off the occupied sub-cuboid in the second level from which it was split) in a third level of the occupancy tree. The occupancy tree structure may continue to form in this manner for each recursive split iteration until, for example, a maximum depth level of the occupancy tree is reached or each occupied sub-cuboid has a volume corresponding to one voxel.

Each non-leaf node of the occupancy tree may comprise or be associated with an occupancy word representing the occupancy state of the cuboid corresponding to the node. For example, a node of the occupancy tree corresponding to a cuboid that is split into 8 sub-cuboids may comprise or be associated with a 1-byte occupancy word. Each bit (referred to as an occupancy bit) of the 1-byte occupancy word may represent or indicate the occupancy of a different one of the eight sub-cuboids. Occupied sub-cuboids may be each represented or indicated by a binary value of "1" in the 1-byte occupancy word. Unoccupied sub-cuboids may be each represented or indicated by a binary value of "0" in the 1-byte occupancy word. Occupied and unoccupied sub-cuboids may be represented or indicated by opposite 1-bit binary values (e.g., a binary "0" representing or indicating an occupied sub-cuboid and a binary "1" representing or indicating an unoccupied sub-cuboid) in the 1-byte occupancy word.

Each bit of an occupancy word may represent or indicate the occupancy of a different one of the eight sub-cuboids. Each bit of an occupancy word may represent or indicate the occupancy of a different one of the eight sub-cuboids, for example, following the so-called Morton order. For example, the least significant bit of an occupancy word may represent or indicate, for example, the occupancy of a first one of the eight sub-cuboids following the Morton order. The second least significant bit of an occupancy word may represent or indicate, for example, the occupancy of a second one of the eight sub-cuboids following the Morton order, etc.

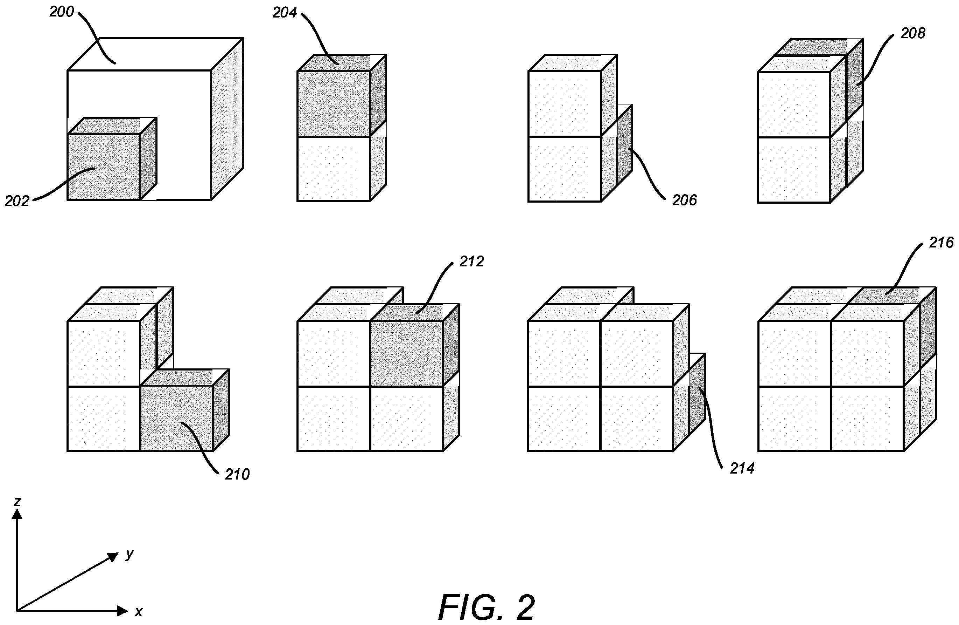

FIG. 2 shows an example Morton order. More specifically, FIG. 2 shows a Morton order of eight sub-cuboids 202-216 split from a cuboid 200. Sub-cuboids 202-216 may be labeled, for example, based on their Morton order, with child node 202 being the first in Morton order and child node 216 being the last in Morton order. The Morton order for sub-cuboids 202-216 may be a local lexicographic order in xyz.

The geometry of a point cloud may be represented by, and may be determined from, the initial volume and the occupancy words of the nodes in an occupancy tree. An encoder may send (e.g., transmit) the initial volume and the occupancy words of the nodes in the occupancy tree in a bitstream to a decoder for reconstructing the point cloud. The encoder may entropy encode the occupancy words. The encoder may entropy encode the occupancy words, for example, before sending (e.g., transmitting) the initial volume and the occupancy words of the nodes in the occupancy tree. The encoder may encode an occupancy bit of an occupancy word of a node corresponding to a cuboid. The encoder may encode an occupancy bit of an occupancy word of a node corresponding to a cuboid, for example, based on one or more occupancy bits of occupancy words of other nodes corresponding to cuboids that are adjacent or spatially close to the cuboid of the occupancy bit being encoded.

An encoder and/or a decoder may code (e.g., encode and/or decode) occupancy bits of occupancy words in sequence of a scan order. The scan order may also be referred to as a scanning order. For example, an encoder and/or a decoder may scan an occupancy tree in breadth-first order. All the occupancy words of the nodes of a given depth (e.g., level) within the occupancy tree may be scanned. All the occupancy words of the nodes of a given depth (e.g., level) within the occupancy tree may be scanned, for example, before scanning the occupancy words of the nodes of the next depth (e.g., level). Within a given depth, the encoder and/or decoder may scan the occupancy words of nodes in the Morton order. Within a given node, the encoder and/or decoder may scan the occupancy bits of the occupancy word of the node further in the Morton order.

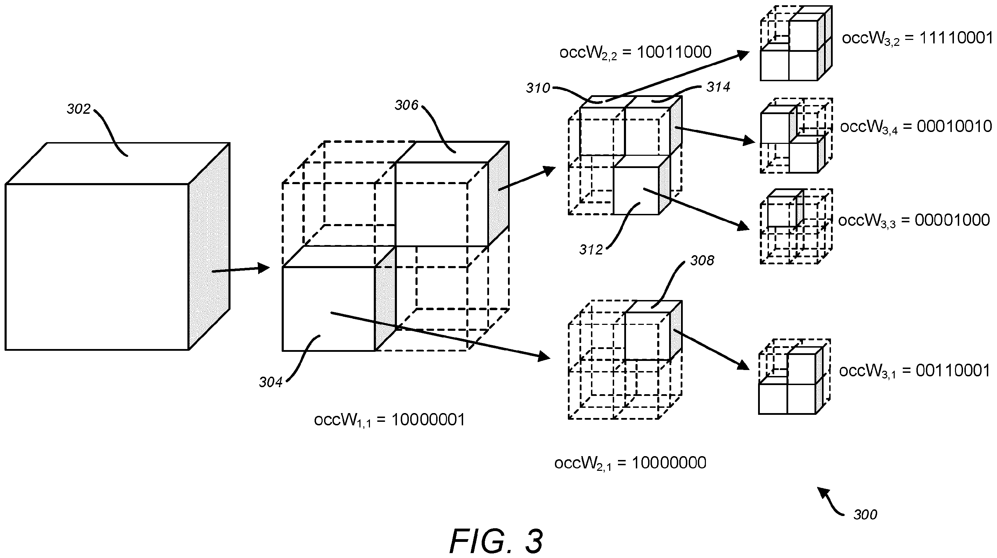

FIG. 3 shows an example scanning order. FIG. 3 shows an example scanning order (e.g., breadth-first order as described herein) for an occupancy tree 300. More specifically, FIG. 3 shows a scanning order for the first three example levels of an occupancy tree 300. A plurality of cuboids (e.g., cubes) may be generated, for example, at each level of the occupancy tree 300. In FIG. 3, a cuboid (e.g., cube) 302 corresponding to a root node of the occupancy tree 300 may be divided into eight sub-cuboids (e.g., sub-cubes). Two sub-cuboids 304 and 306 of the eight sub-cuboids may be occupied.

The other six sub-cuboids of the eight sub-cuboids may be unoccupied. Following the Morton order, a first eight-bit occupancy word (e.g., $occW_{1,1}$) may be constructed to represent the occupancy word of the root node. An (e.g., each) occupancy bit of the first eight-bit occupancy word (e.g., $occW_{1,1}$) may represent or indicate the occupancy of a sub-cube of the eight sub-cuboids in the Morton order. For example, the least significant occupancy bit of the first eight-bit occupancy word $occW_{1,1}$ may represent or indicate the occupancy of the first sub-cuboid of the eight sub-cuboids in the Morton order. The second least significant occupancy bit of the first eight-bit occupancy word $occW_{1,1}$ may represent or indicate the occupancy of the second sub-cuboid of the eight sub-cuboids in the Morton order, etc.

Each of occupied sub-cuboids (e.g., two occupied sub-cuboids 304 and 306) may correspond to a node off the root node in a second level of an occupancy tree 300. The occupied sub-cuboids (e.g., two occupied sub-cuboids 304 and 306) may be each further split into eight sub-cuboids. For example, one of the sub-cuboids 308 of the eight sub-cuboids split from the sub-cube 304 may be occupied, and the other seven sub-cuboids may be unoccupied. Three of the sub-cuboids 310, 312, and 314 of the eight sub-cuboids split from the sub-cube 306 may be occupied, and the other five sub-cuboids of the eight sub-cuboids split from the sub-cube 306 may be unoccupied. Two second eight-bit occupancy words $occW_{2,1}$ and $occW_{2,2}$ may be constructed in this order to respectively represent the occupancy word of the node corresponding to the sub-cuboid 304 and the occupancy word of the node corresponding to the sub-cuboid 306.

Each of occupied sub-cuboids (e.g., four occupied sub-cuboids 308, 310, 312, and 314) may correspond to a node in a third level of an occupancy tree 300. The occupied sub-cuboids (e.g., four occupied sub-cuboids 308, 310, 312, and 314) may be each further split into eight sub-cuboids or 32 sub-cuboids in total. For example, four third level eight-bit occupancy words $occW_{3,1}$, $occW_{3,2}$, $occW_{3,3}$ and $occW_{3,4}$ may be constructed in this order to respectively represent the occupancy word of the node corresponding to the sub-cuboid 308, the occupancy word of the node corresponding to the sub-cuboid 310, the occupancy word of the node corresponding to the sub-cuboid 312, and the occupancy word of the node corresponding to the sub-cuboid 314.

Occupancy words of an example occupancy tree 300 may be entropy coded (e.g., entropy encoded by an encoder and/or entropy decoded by a decoder), for example, following the scanning order discussed herein (e.g., Morton order). The occupancy words of the example occupancy tree 300 may be entropy coded (e.g., entropy encoded by an encoder and/or entropy decoded by a decoder) as the succession of the seven occupancy words $occW_{1,1}$ to $occW_{3,4}$, for example, following the scanning order discussed herein. The scanning order discussed herein may be a breadth-first scanning order. The occupancy word(s) of all node(s) having the same depth (or level) as a current parent node may have already been entropy coded, for example, if the occupancy word of a current child node belonging to the current parent node is being entropy coded. For example, the occupancy word(s) of all node(s) having the same depth (e.g., level) as the current child node and having a lower Morton order than the current child node may have also already been entropy coded. Part of the already coded occupancy word(s) may be used to entropy code the occupancy word of the current child node. The already coded occupancy word(s) of neighboring parent and child node(s) may be used, for example, to entropy code the occupancy word of the current child node. The occupancy bit(s) of the occupancy word having a lower Morton order than a particular occupancy bit may have also already been entropy coded and may be used to code the occupancy bit of the occupancy word of the current child node, for example, if the particular occupancy bit of the occupancy word of the current child node is being coded (e.g., entropy coded).

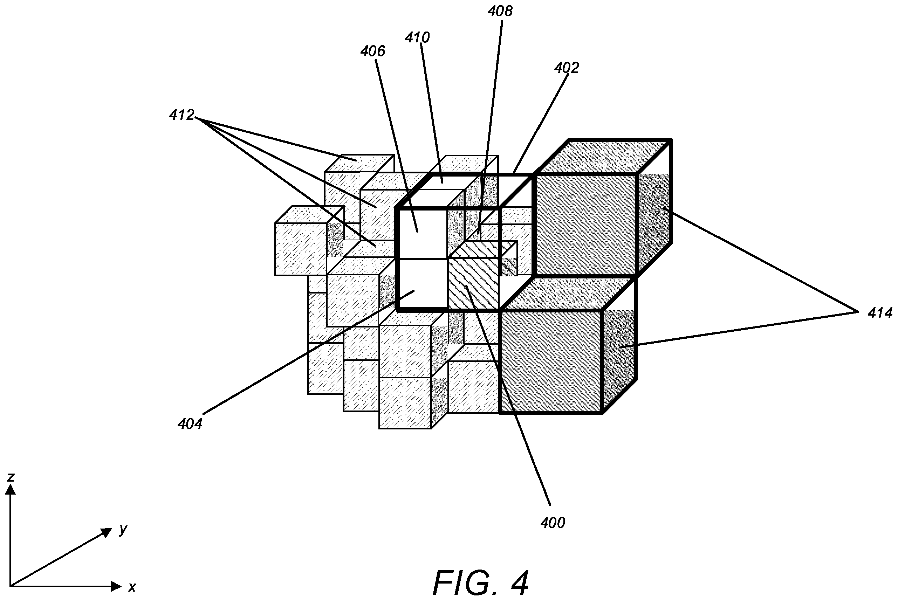

FIG. 4 shows an example neighborhood of cuboids for entropy coding the occupancy of a child cuboid. More specifically, FIG. 4 shows an example neighborhood of cuboids with already-coded occupancy bits. The neighborhood of cuboids with already-coded occupancy bits may be used to entropy code the occupancy bit of a current child cuboid 400. The neighborhood of cuboids with already-coded occupancy bits may be determined, for example, based on the scanning order of an occupancy tree representing the geometry of the cuboids in FIG. 4 as discussed herein. The neighborhood of cuboids, of a current child cuboid, may include one or more of: a cuboid adjacent to the current child cuboid, a cuboid sharing a vertex with the current child cuboid, a cuboid sharing an edge with the current child cuboid, a cuboid sharing a face with the current child cuboid, a parent cuboid adjacent to the current child cuboid, a parent cuboid sharing a vertex with the current child cuboid, a parent cuboid sharing an edge with the current child cuboid, a parent cuboid sharing a face with the current child cuboid, a parent cuboid adjacent to the current parent cuboid, a parent cuboid sharing a vertex with the current parent cuboid, a parent cuboid sharing an edge with the current parent cuboid, a parent cuboid sharing a face with the current parent cuboid, etc. As shown in FIG. 4, current child cuboid 400 may belong to a current parent cuboid 402. Following the scanning order of the occupancy words and occupancy bits of nodes of the occupancy tree, the occupancy bits of four child cuboids 404, 406, 408, and 410, belonging to the same current parent cuboid 402, may have already been coded. The occupancy bit of child cuboids 412 of preceding parent cuboids may have already been coded. The occupancy bits of parent cuboids 414, for which the occupancy bits of child cuboids have not already been coded, may have already been coded. The already-coded occupancy bits of cuboids 404, 406, 408, 410, 412, and 414 may be used to code the occupancy bit of the current child cuboid 400.

The number (e.g., quantity) of possible occupancy configurations (e.g., sets of one or more occupancy words and/or occupancy bits) for a neighborhood of a current child cuboid may be $2^N$, where N is the number (e.g., quantity) of cuboids in the neighborhood of the current child cuboid with already-coded occupancy bits. The neighborhood of the current child cuboid may comprise several dozens of cuboids. The neighborhood of the current child cuboid (e.g., several dozens of cuboids) may comprise 26 adjacent parent cuboids sharing a face, an edge, and/or a vertex with the parent cuboid of the current child cuboid and also several adjacent child cuboids having occupancy bits already coded sharing a face, an edge, or a vertex with the current child cuboid. The occupancy configuration for a neighborhood of the current child cuboid may have billions of possible occupancy configurations, even limited to a subset of the adjacent cuboids, making its direct use impractical. An encoder and/or decoder may use the occupancy configuration for a neighborhood of the current child cuboid to select the context (e.g., a probability model), among a set of contexts, of a binary entropy coder (e.g., binary arithmetic coder) that may code the occupancy bit of the current child cuboid. The context-based binary entropy coding may be similar to the Context Adaptive Binary Arithmetic Coder (CABAC) used in MPEG-H Part 2 (also known as High Efficiency Video Coding (HEVC)).

An encoder and/or a decoder may use several methods to reduce the occupancy configurations for a neighborhood of a current child cuboid being coded to a practical number (e.g., quantity) of reduced occupancy configurations. The $2^6$ or 64 occupancy configurations of the six adjacent parent cuboids sharing a face with the parent cuboid of the current child cuboid may be reduced to 9 occupancy configurations. The occupancy configurations may be reduced by using geometry invariance. An occupancy score for the current child cuboid may be obtained from the $2^{26}$ occupancy configurations of the 26 adjacent parent cuboids. The score may be further reduced into a ternary occupancy prediction (e.g., "predicted occupied," "unsure", or "predicted unoccupied") by using score thresholds. The number (e.g., quantity) of occupied adjacent child cuboids and the number (e.g., quantity) of unoccupied adjacent child cuboids may be used instead of the individual occupancies of these child cuboids.

An encoder and/or a decoder using/employing one or more of the methods described herein may reduce the number (e.g., quantity) of possible occupancy configurations for a neighborhood of a current child cuboid to a more manageable number (e.g., a few thousands). It has been observed that instead of associating a reduced number (e.g., quantity) of contexts (e.g., probability models) directly to the reduced occupancy configurations, another mechanism may be used, namely Optimal Binary Coders with Update on the Fly (OBUF). An encoder and/or a decoder may implement OBUF to limit the number (e.g., quantity) of contexts to a lower number (e.g., 32 contexts).

OBUF may use a limited number (e.g., 32) of contexts (e.g., probability models). The number (e.g., quantity) of contexts in OBUF may be a fixed number (e.g., fixed quantity). The contexts used by OBUF may be ordered, referred to by a context index (e.g., a context index in the range of 0 to 31), and associated from a lowest virtual probability to a highest virtual probability to code a "1". A Look-Up Table (LUT) of context indices may be initialized at the beginning of a point cloud coding process. For example, the LUT may initially point to a context (e.g., with a context index 15) with the median virtual probability to code a "1" for all input. The LUT may initially point to a context with the median virtual probability to code a "1", among the limited number (e.g., quantity) of contexts, for all input. This LUT may take an occupancy configuration for a neighborhood of current child cuboid as input and output the context index associated with the occupancy configuration. The LUT may have as many entries as reduced occupancy configurations (e.g., around a few thousand entries). The coding of the occupancy bit of a current child cuboid may comprise steps including determining the reduced occupancy configuration of the current child node, obtaining a context index by using the reduced occupancy configuration as an entry to the LUT, coding the occupancy bit of the current child cuboid by using the context pointed to (or indicated) by the context index, and updating the LUT entry corresponding to the reduced occupancy configuration, for example, based on the value of the coded occupancy bit of the current child cuboid. The LUT entry may be decreased to a lower context index value, for example, if a binary "0" (e.g., indicating the current child cuboid is unoccupied) is coded. The LUT entry may be increased to a higher context index value, for example, if a binary "1" (e.g., indicating the current child cuboid is occupied) is coded. The update process of the context index may be, for example, based on a theoretical model of optimal distribution for virtual probabilities associated with the limited number (e.g., quantity) of contexts. This virtual probability may be fixed by a model and may be different from the internal probability of the context that may evolve, for example, if the coding of bits of data occurs. The evolution of the internal context may follow a well-known process similar to the process in CABAC.

An encoder and/or a decoder may implement a "dynamic OBUF" scheme. The "dynamic OBUF" scheme may enable an encoder and/or a decoder to handle a much larger number (e.g., quantity) of occupancy configurations for a neighborhood of a current child cuboid, for example, than general OBUF. The use of a larger number (e.g., quantity) of occupancy configurations for a neighborhood of a current child cuboid may lead to improved compression capabilities, and may maintain complexity within reasonable bounds. By using an occupancy tree compressed by OBUF, an encoder and/or a decoder may reach a lossless compression performance as good as 1 bit per point (bpp) for coding the geometry of dense point clouds. An encoder and/or a decoder may implement dynamic OBUF to potentially further reduce the bit rate by more than 25% to 0.7 bpp.

OBUF may not take as input a large variety of reduced occupancy configurations for a neighborhood of a current child cuboid, and may potentially cause a loss of useful correlation. With OBUF, the size of the LUT of context indices may be increased to handle more various occupancy configurations for a neighborhood of a current child cuboid as input. Due to such increase, statistics may be diluted, and compression performance may be worsened. For example, if the LUT has millions of entries and the point cloud has a hundred thousand points, then most of the entries may be never visited (e.g.,

looked up, accessed, etc.). Many entries may be visited only a few times and their associated context index may not be updated enough times to reflect any meaningful correlation between the occupancy configuration value and the probability of occupancy of the current child cuboid. Dynamic OBUF may be implemented to mitigate the dilution of statistics due to the increase of the number (e.g., quantity) of occupancy configurations for a neighborhood of a current child cuboid. This mitigation may be performed by a "dynamic reduction" of occupancy configurations in dynamic OBUF.

Dynamic OBUF may add an extra step of reduction of occupancy configurations for a neighborhood of a current child cuboid, for example, before using the LUT of context indices. This step may be called a dynamic reduction because it evolves, for example, based on the progress of the coding of the point cloud or, more precisely, based on already visited (e.g., looked up in the LUT) occupancy configurations.

As discussed herein, many possible occupancy configurations for a neighborhood of a current child cuboid may be potentially involved but only a subset may be visited if the coding of a point cloud occurs. This subset may characterize the type of the point cloud. For example, most of the visited occupancy configurations may exhibit occupied adjacent cuboids of a current child cuboid, for example, if AR or VR dense point clouds are being coded. On the other hand, most of the visited occupancy configurations may exhibit only a few occupied adjacent cuboids of a current child cuboid, for example, if sensor-acquired sparse point clouds are being coded. The role of the dynamic reduction may be to obtain a more precise correlation, for example, based on the most visited occupancy configuration while putting aside (e.g., reducing aggressively) other occupancy configurations that are much less visited. The dynamic reduction may be updated on-the-fly. The dynamic reduction may be updated on-the-fly, for example, after each visit (e.g., a lookup in the LUT) of an occupancy configuration, for example, if the coding of occupancy data occurs.

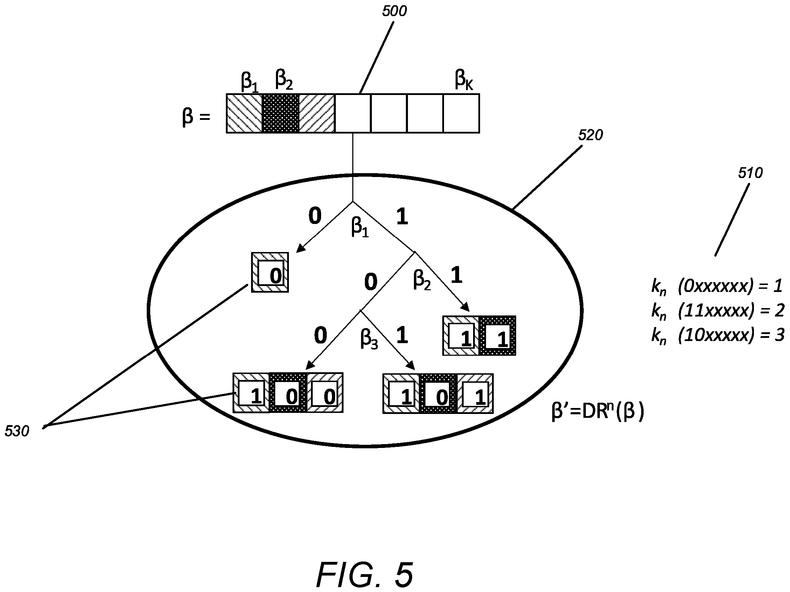

FIG. 5 shows an example of a dynamic reduction function DR that may be used in dynamic OBUF. The dynamic reduction function DR may be obtained by masking bits $\beta_j$ of occupancy configurations 500:

$$\beta = \beta_1 \ldots \beta_K$$

made of K bits. The size of the mask may decrease, for example, if occupancy configurations are visited (e.g., looked up in the LUT) a certain number (e.g., quantity) of times. The initial dynamic reduction function $DR^0$ may mask all bits for all occupancy configurations such that it is a constant function $DR^0(\beta) = 0$ for all occupancy configurations $\beta$. The dynamic reduction function may evolve from a function $DR^n$ to an updated function $DR^{n+1}$. The dynamic reduction function may evolve from a function $DR^n$ to an updated function $DR^{n+1}$, for example, after each coding of an occupancy bit. The function may be defined by:

$$\beta' = DR^n(\beta) = \beta_1 \ldots \beta_{k_n(\beta)}$$

where $k_n(\beta)$ 510 is the number (e.g., quantity) of non-masked bits. The initialization of $DR^0$ may correspond to $k_0(\beta)=0$, and the natural evolution of the reduction function toward finer statistics may lead to an increasing number (e.g., quantity) of non-masked bits $k_n(\beta) \leq k_{n+1}(\beta)$. The dynamic reduction function may be entirely determined by the values of $k_n$ for all occupancy configurations $\beta$.

The visits (e.g., instances of a lookup in the LUT) to occupancy configurations may be tracked by a variable NV(P') for all dynamically reduced occupancy configurations $\beta = DR^n(\beta)$. The corresponding number (e.g., quantity) of visits $NV(\beta^V{}')$ may be increased by one, for example, after each instance of coding of an occupancy bit based on an occupancy configuration $\beta^V$. If this number (e.g., quantity) of visits $NV(\beta^V{}')$ is greater than a threshold $th_V$,

$$NV(\beta^{V'}) > th_V$$

then the number (e.g., quantity) of unmasked bits $k_n(\beta)$ may be increased by one for all occupancy configurations $\beta$ being dynamically reduced to $\beta^V{}'$. This corresponds to replacing the dynamically reduced occupancy configuration $\beta^V{}'$ by the two new dynamically reduced occupancy configurations ($\beta^{0'}$ and $\beta^{1'}$ defined by

$$\beta^{0'} = \beta^{V'}0 = \beta^V{}_1 \ldots \beta^V{}_{k_n(\beta)}0 \text{ and } \beta^{1'} = \beta^{V'}1 = \beta^V{}_1 \ldots \beta^V{}_{k_n(\beta)}1$$

In other words, the number (e.g., quantity) of unmasked bits has been increased by one $k_{n+1}(\beta) = k_n(\beta) + 1$ for all occupancy configurations $\beta$ such that $DR^n(\beta) = \beta^{V'}$. The number (e.g., quantity) of visits of the two new dynamically reduced occupancy configurations may be initialized to zero:

$$NV(\beta^{0'}) = NV(\beta^{1'}) = 0. \qquad (I)$$

At the start of the coding, the initial number (e.g., quantity) of visits for the initial dynamic reduction function $DR^0$ may be set

to

$$NV(DR^0(\beta)) = NV(0) = 0,$$

and the evolution of NV on dynamically reduced occupancy configurations may be entirely defined.

The corresponding LUT entry LUT[$\beta^{V'}$] may be replaced by the two new entries LUT[$\beta^{0'}$] and LUT[$\beta^{1'}$] that are initialized by the coder index associated with $\beta^{V'}$. The corresponding LUT entry LUT[$\beta^{V'}$] may be replaced by the two new entries LUT[$\beta^{0'}$] and LUT[$\beta^{1'}$] that are initialized by the coder index associated with $\beta^{V'}$, for example, if a dynamically reduced occupancy configuration $\beta^{V'}$ is replaced by the two new dynamically reduced occupancy configurations ($\beta^{0'}$ and $\beta^{1'}$,

$$LUT[\beta^{0'}] = LUT[\beta^{1'}] = LUT[\beta^{V'}], \qquad (II)$$

and then evolve separately. The evolution of the LUT of coder indices on dynamically reduced occupancy configurations may be entirely defined.

The reduction function $DR^n$ may be modeled by a series of growing binary trees $T^n$ 520 whose leaf nodes 530 are the reduced occupancy configurations $\beta' = DR^n(\beta)$. The initial tree may be the single root node associated with $0 = DR°(P)$. The replacement of the dynamically reduced to $\beta^{V'}$ by ($\beta^{0'}$ and $\beta^{1'}$ may correspond to growing the tree $T^n$ from the leaf node associated with $\beta^{V'}$, for example, by attaching to it two new nodes associated with ($\beta^{0'}$ and $\beta^{1'}$. The tree $T^{n+1}$ may be obtained by this growth. The number (e.g., quantity) of visits NV and the LUT of context indices may be defined on the leaf nodes and evolve with the growth of the tree through equations (I) and (II).

The practical implementation of dynamic OBUF may be made by the storage of the array NV[P'] and the LUT[P'] of context indices, as well as the trees $T^n$ 520. An alternative to the storage of the trees may be to store the array $k_n[\beta]$ 510 of the number (e.g., quantity) of non-masked bits.

A limitation for implementing dynamic OBUF may be its memory footprint. In some applications, a few million occupancy configurations may be practically handled, leading to about 20 bits $\beta_i$ constituting an entry configuration $\beta$ to the reduction function DR. Each bit $\beta_i$ may correspond to the occupancy status of a neighboring cuboid of a current child cuboid or a set of neighboring cuboids of a current child cuboid.

Higher (e.g., more significant) bits $\beta_i$ (e.g., $\beta_0$, $\beta_1$, etc.) may be the first bits to be unmasked. Higher (e.g., more significant) bits $\beta_i$ (e.g., $\beta_0$, $\beta_1$, etc.) may be the first bits to be unmasked, for example, during the evolution of the dynamic reduction function DR. The order of neighbor-based information put in the bits $\beta_i$ may impact the compression performance. Neighboring information may be ordered from higher (e.g., highest) priority to lower priority and put in this order into the bits $\beta_i$, from higher to lower weight. The priority may be, from the most important to the least important, occupancy of sets of adjacent neighboring child cuboids, then occupancy of adjacent neighboring child cuboids, then occupancy of adjacent neighboring parent cuboids, then occupancy of non-adjacent neighboring child nodes, and finally occupancy of non-adjacent neighboring parent nodes. Adjacent nodes sharing a face with the current child node may also have higher priority than adjacent nodes sharing an edge (but not sharing a face) with the current child node. Adjacent nodes sharing an edge with the current child node may have higher priority than adjacent nodes sharing only a vertex with the current child node.

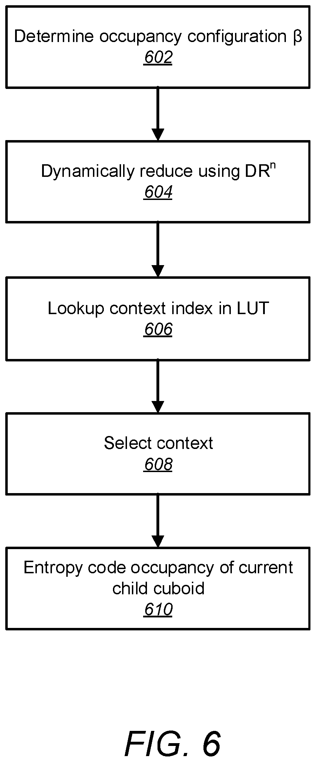

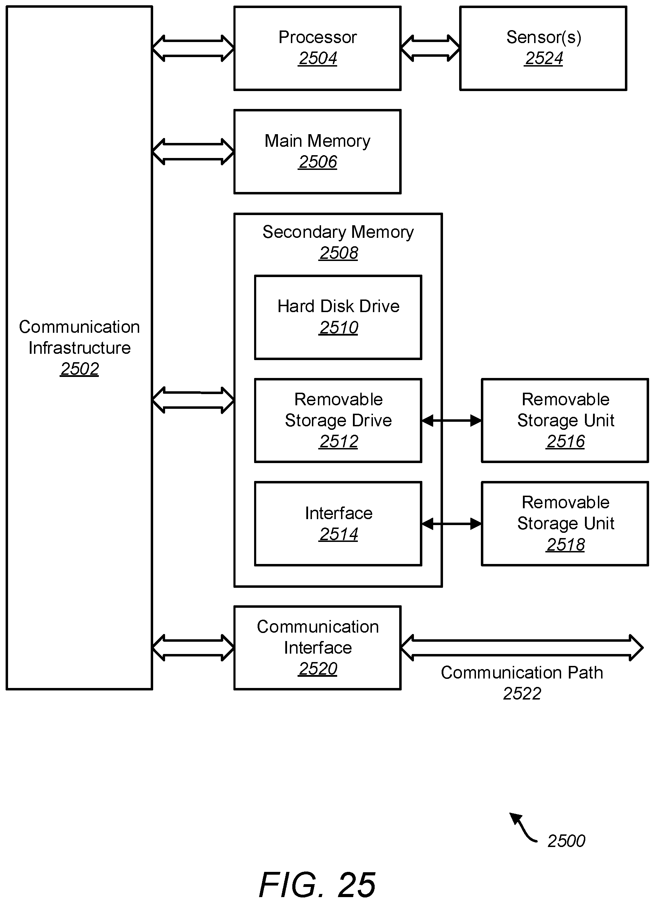

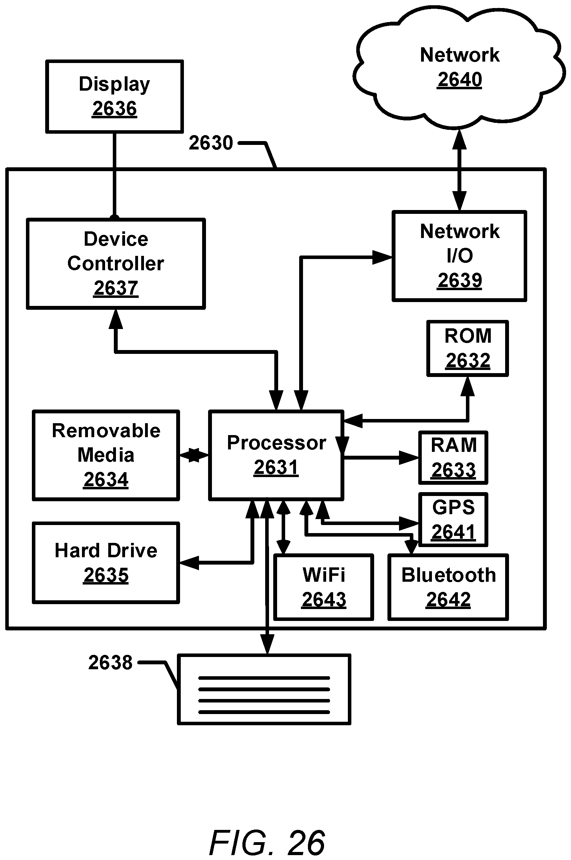

FIG. 6 shows an example method for coding occupancy of a cuboid using dynamic OBUF. More specifically, FIG. 6 shows an example method for coding occupancy bit of a current child cuboid using dynamic OBUF. One or more steps of FIG. 6 may be performed by an encoder and/or a decoder (e.g., the encoder 114 and/or decoder 120 in FIG. 1). All or portions of the flowchart may be implemented by a coder (e.g., the encoder 114 and/or decoder 120 in FIG. 1), an example computer system 2500 in FIG. 25, and/or an example computing device 2630 in FIG. 26.

At step 602, an occupancy configuration (e.g., occupancy configuration $\beta$) of the current child cuboid may be determined. The occupancy configuration (e.g., occupancy configuration (3) of the current child cuboid may be determined, for example, based on occupancy bits of already-coded cuboids in a neighborhood of the current child cuboid. At step 604, the occupancy configuration (e.g., occupancy configuration $\beta$) may be dynamically reduced. The occupancy configuration may be dynamically reduced, for example, using a dynamic reduction function $DR^n$. For example, the occupancy configuration $\beta$ may be dynamically reduced into a reduced occupancy configuration $\beta' = DR^n(\beta)$. At step 606, context index may be looked up, for example, in a look-up table (LUT). For example, the encoder and/or decoder may look up context index LUT[P'] in the LUT of the dynamic OBUF. At step 608, context (e.g., probability model) may be selected. For example, the context (e.g., probability model) pointed to by the context index may be selected. At step 610, occupancy of the current child cuboid may be entropy coded. For example, the occupancy bit of the current child cuboid may be entropy coded (e.g., arithmetic coded), for example, based on the context. The occupancy bit of the current child cuboid may be coded based on the occupancy bits of the already-coded cuboids neighboring the current child cuboid.

Although not shown in FIG. 6, the encoder and/or decoder may update the reduction function and/or update the context index. For example, the encoder and/or decoder may update the reduction function $DR^n$ into $DR^{n+1}$ and/or update the context index $LUT[\beta']$, for example, based on the occupancy bit of the current child cuboid. The method of FIG. 6 may be repeated for additional or all child cuboids of parent cuboids corresponding to nodes of the occupancy tree in a scan order, such as the scan order discussed herein with respect to FIG. 3.

In general, the occupancy tree is a lossless compression technique. The occupancy tree may be adapted to provide lossy compression, for example, by modifying the point cloud on the encoder side (e.g., down-sampling, removing points, moving points, etc.). The performance of the lossy compression may be weak. The lossy compression may be a useful lossless compression technique for dense point clouds.

One approach to lossy compression for point cloud geometry may be to set the maximum depth of the occupancy tree to not reach the smallest volume size of one voxel but instead to stop at a bigger volume size (e.g., NxNxN cuboids (e.g., cubes), where N > 1). The geometry of the points belonging to each occupied leaf node associated with the bigger volumes may then be modeled. This approach may be particularly suited for dense and smooth point clouds that may be locally modeled by smooth functions such as planes or polynomials. The coding cost may become the cost of the occupancy tree plus the cost of the local model in each of the occupied leaf nodes.

A scheme for modeling the geometry of the points belonging to each occupied leaf node associated with a volume size larger than one voxel may use sets of triangles as local models. The scheme may be referred to as the "TriSoup" scheme. TriSoup is short for "Triangle Soup" because the connectivity between triangles may not be part of the models. An occupied leaf node of an occupancy tree that corresponds to a cuboid with a volume greater than one voxel may be referred to as a TriSoup node. An edge belonging to at least one cuboid corresponding to a TriSoup node may be referred to as a TriSoup edge. A TriSoup node may comprise a presence flag ($s_k$) for each TriSoup edge of its corresponding occupied cuboid. A presence flag ($s_k$) of a TriSoup edge may indicate whether a TriSoup vertex ($V_k$) is present or not on the TriSoup edge. At most one TriSoup vertex ($V_k$) may be present on a TriSoup edge. For each vertex ($V_k$) present on a TriSoup edge of an occupied cuboid, the TriSoup node corresponding to the occupied cuboid may comprise a position ($p_k$) of the vertex ($V_k$) along the TriSoup edge.

In addition to the occupancy words of an occupancy tree, an encoder may entropy encode, for each TriSoup node of the occupancy tree, the TriSoup vertex presence flags and positions of each TriSoup edge belonging to TriSoup nodes of the occupancy tree. A decoder may similarly entropy decode the TriSoup vertex presence flags and positions of each TriSoup edge and vertex along a respective TriSoup edge belonging to a TriSoup node of the occupancy tree, in addition to the occupancy words of the occupancy tree.

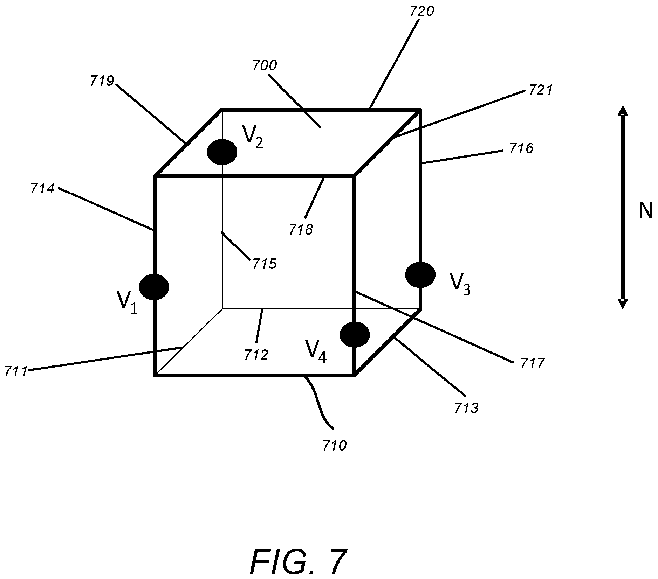

FIG. 7 shows an example of an occupied cuboid (e.g., cube) 700. More specifically, FIG. 7 shows an example of an occupied cuboid (e.g., cube) 700 of size NxNxN (where N > 1) that corresponds to a TriSoup node of an occupancy tree. An occupied cuboid 700 may comprise edges (e.g., TriSoup edges 710 - 721). The TriSoup node, corresponding to the occupied cuboid 700, may comprise a presence flag ($s_k$) for each edge (e.g., each TriSoup edge of the TriSoup edges 710-721). For example, the presence flag of a TriSoup edge 714 may indicate that a TriSoup vertex $V_1$ is present on the TriSoup edge 714. The presence flag of a TriSoup edge 715 may indicate that a TriSoup vertex $V_2$ is present on the TriSoup edge 715. The presence flag of a TriSoup edge 716 may indicate that a TriSoup vertex $V_3$ is present on the TriSoup edge 716. The presence flag of a TriSoup edge 717 may indicate that a TriSoup vertex $V_4$ is present on the TriSoup edge 717. The presence flags of the remaining TriSoup edges each may indicate that a TriSoup vertex is not present on their corresponding TriSoup edge. The TriSoup node, corresponding to the occupied cuboid 700, may comprise a position (e.g., $p_k$) for each TriSoup vertex present along one of its TriSoup edges 710-721. More specifically, the TriSoup node, corresponding to the occupied cuboid 700, may comprise a position $p_1$ for TriSoup vertex $V_1$, a position $p_2$ for TriSoup vertex $V_2$, a position $p_3$ for TriSoup vertex $V_3$, and a position $p_4$ for TriSoup vertex $V_4$. The TriSoup vertices may be shared among TriSoup nodes along common TriSoup edge(s).

A presence flag ($s_k$) and, if the presence flag ($s_k$) may indicate the presence of a vertex, a position ($p_k$) of a current TriSoup edge may be entropy coded. The presence flag ($s_k$) and position ($p_k$) may be individually or collectively referred to as vertex information or TriSoup vertex information. A presence flag ($s_k$) and, if the presence flag ($s_k$) indicates the presence of a vertex, a position ($p_k$) of a current TriSoup edge may be entropy coded, for example, based on already-coded presence flags and positions, of present TriSoup vertices, of TriSoup edges that neighbor the current TriSoup edge. A presence flag ($s_k$) and, if the presence flag ($s_k$) may indicate the presence of a vertex, a position ($p_k$) of a current TriSoup edge (e.g., indicating a position of the vertex the edge is along) may be additionally or alternatively entropy coded. The presence flag ($s_k$) and the position ($p_k$) of a current TriSoup edge may be additionally or alternatively entropy coded, for example, based on occupancies of cuboids that neighbor the current TriSoup edge. Similar to the entropy coding of the occupancy bits of the occupancy tree, a configuration $\beta_{TS}$ for a neighborhood (also referred to as a neighborhood configuration $\beta_{TS}$) of a current TriSoup edge may be obtained and dynamically reduced into a reduced configuration $\beta_{TS}' = DR^n(\beta_{TS})$, for example, by using a dynamic OBUF scheme for TriSoup. A context index $LUT[\beta_{TS}']$ may be obtained from the OBUF LUT. At least a part of the vertex information of the current TriSoup edge may be entropy coded using the context (e.g., probability model) pointed to by the context index.

The TriSoup vertex position ($p_k$) (if present) along its TriSoup edge may be binarized. The TriSoup vertex position

$(p_k)$ (if present) along its TriSoup edge may be binarized, for example, to use a binary entropy coder to entropy code at least part of the vertex information of the current TriSoup edge. A number (e.g., quantity) of bits $N_b$ may be set for the quantization of the TriSoup vertex position $(p_k)$ along the TriSoup edge of length N. The TriSoup edge of length N may be uniformly divided into $2^{Nb}$ quantization intervals. By doing so, the TriSoup vertex position $(p_k)$ may be represented by $N_b$ bits $(p_k^j, j=1, ..., N_b)$ that may be individually coded by the dynamic OBUF scheme as well as the bit corresponding to the presence flag $(s_k)$. The neighborhood configuration $\beta_{TS}$, the OBUF reduction function $DR^n$, and the context index may depend on the nature, characteristic, and/or property of the coded bit (e.g., a presence flag $(s_k)$, a highest position bit $(p_{k1})$, a second highest position bit $(p_{k2})$, etc.) of the coded bit (e.g., presence flag $(s_k)$, highest position bit $(p_k^1)$, second highest position bit $(p_k^2)$, etc.). There may practically be several dynamic OBUF schemes, each dedicated to a specific bit of information (e.g., presence flag $(s_k)$ or position bit $(p_k^j)$) of the vertex information.

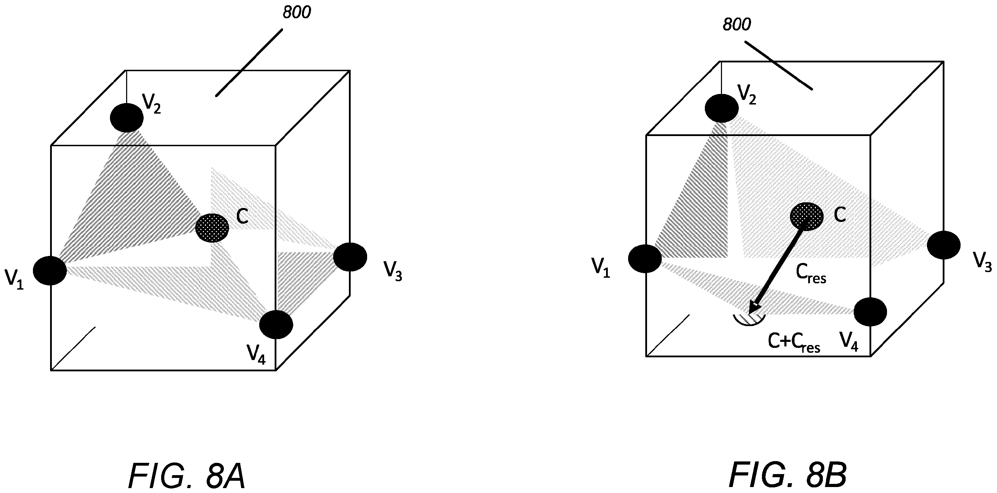

FIG. 8A shows an example cuboid 800 (e.g., a cube) corresponding to a TriSoup node. A cuboid 800 may correspond to a TriSoup node with a number K of TriSoup vertices $V_k$. Within cuboid 800, TriSoup triangles may be constructed from the TriSoup vertices $V_k$. TriSoup triangles may be constructed from the TriSoup vertices $V_k$, for example, if at least three ($K \geq 3$) TriSoup vertices are present on the TriSoup edges of cuboid 800. For example, with respect to FIG. 8A, four TriSoup vertices may be present and TriSoup triangles may be constructed. The TriSoup triangles may be constructed around the centroid vertex C defined as the mean of the TriSoup vertices $V_k$. A dominant direction may be determined, then vertices $V_k$ may be ordered by turning around this direction, and the following K TriSoup triangles (listed as triples of vertices) may be constructed: $V_1V_2C, V_2V_3C, ..., V_KV_1C$. The dominant direction may be chosen among the three directions respectively parallel to the axes of the 3D space to increase or maximize the 2D surface of the triangles, for example, if the triangles are projected along the dominant direction. By doing so, the dominant direction may be somewhat perpendicular to a local surface defined by the points of the point cloud belonging to the TriSoup node.

FIG. 8B shows an example refinement to the TriSoup model. The TriSoup model may be refined by coding a centroid residual value (e.g., vector). A centroid residual vector $C_{res}$ may be coded into the bitstream. A centroid residual vector $C_{res}$ may be coded into the bitstream, for example, to use $C+C_{res}$ instead of C as a pivoting vertex for the triangles. By using $C+C_{res}$ as the pivoting vertex for the triangles, the vertex $C+C_{res}$ may be closer to the points of the point cloud than the centroid C, the reconstruction error may be lowered, leading to lower distortion at the cost of a small increase in bitrate needed for coding $C_{res}$.

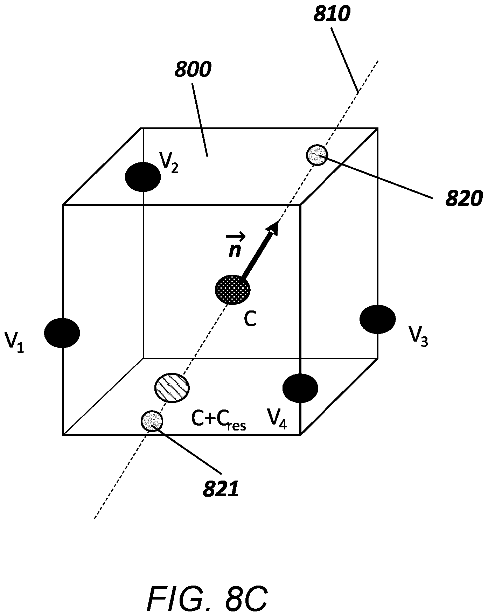

FIG. 8C shows an example of coding a centroid residual vector. More specifically, FIG. 8C shows a more detailed example of coding a centroid residual vector $C_{res}$ in/from the bitstream such that an adjusted centroid $C+C_{res}$ is used instead of centroid C for generating TriSoup triangles of a cuboid 800 (corresponding to a TriSoup node) corresponding to a portion of a point cloud. For example, the triangles may be generated based on adjusted centroid $C+C_{res}$ and adjacent pairs of vertices of an ordering of the vertices $V_1$-$V_4$, determined as described herein with respect to FIG. 8A. As described herein, the TriSoup triangles of the cuboid may be voxelized at the decoder to generate voxels representing (or modeling) the portion, of the point cloud, corresponding to the cuboid. A unit vector $\vec{n}$ (i.e., also referred to as a normalized vector) may be determined as a normalized mean vector of normal vectors to the triangles $(V_1V_2C, V_2V_3C, ..., V_KV_1C)$ constructed by centroid C and pairs of the vertices of the cuboid by pivoting around the centroid C (e.g., as described in FIG. 8A). For example, the unit vector $\vec{n}$ may be determined as the normalized vector based on a mean of cross-products representing areas of the triangles $(\overrightarrow{V_1C} \times \overrightarrow{V_2C} + \overrightarrow{V_2C} \times \overrightarrow{V_3C} + ... + \overrightarrow{V_KC} \times \overrightarrow{V_1C})/K$. For example, the unit vector $\vec{n}$ may be determined by dividing the mean vector (n) by the norm (or length) of the mean vector (i.e., $\vec{n} = n / \|n\|$).

A value resulting from each cross product is equal to an area of a parallelogram formed by the two vectors in the cross product. The value may be representative of an area of a triangle formed by the two vectors because the area of the triangle is equal to half of the value. The vector $\vec{n}$ it may be indicative of the direction normal to a local surface representative of the portion of the point cloud. The vector $\vec{n}$ it may be indicative of the direction normal to a local surface representative of the portion of the point cloud, for example, since the vector $\vec{n}$ indicates a direction of the triangles (e.g., TriSoup triangles) representing (e.g., modeling) the portion of the point cloud. A one-component residual $\alpha_{res}$ along the line $(C, \vec{n})$ 810 may be coded, instead of a 3D residual vector, to maximize the effect of the centroid residual while minimizing its coding cost.

$$C_{res} = \alpha_{res}\vec{n}$$

The residual value $\alpha_{res}$ may be determined by the encoder as the intersection between the current point cloud and the line $(C, \vec{n})$, which is along the same direction of the normalized vector $\vec{n}$. For example, a set of points, of the portion of the point cloud, closest (e.g., within a threshold distance, a threshold number of points) to the line may be determined. The set of points may be projected on the line and the residual value $\alpha_{res}$ may be determined as the mean component along the line of the projected points. The mean may be determined as a weighted mean whose weights depend on the distance of the set of points from the line. For example, a point from the set closer to the line may have a higher weight than another point from the set farther from the line.

The residual value $\alpha_{res}$ may be quantized. For example, it may be quantized by a uniform quantization function having quantization step similar to the quantization precision of the TriSoup vertices $V_k$. The quantization error may be maintained to be uniform over all vertices $V_k$ and $C+C_{res}$ such that the local surface is uniformly approximated.

The residual value $\alpha_{res}$ may be binarized and entropy coded into the bitstream. The residual value $\alpha_{res}$ may be binarized and entropy coded into the bitstream, for example, by using a unary-based coding scheme. The residual value $\alpha_{res}$ may be coded using a set of flags. For example, a flag $f_0$ may be coded to indicate if the residual value $\alpha_{res}$ is equal to zero. No further syntax elements may be needed. No further syntax elements may be needed, for example, if the flag $f_0$ indicates the residual value $\alpha_{res}$ is zero. A sign bit indicating a sign may be coded and the residual magnitude $|\alpha_{res}|-1$ may be coded using an entropy code. A sign bit indicating a sign may be coded and the residual magnitude $|\alpha_{res}|-1$ may be coded using an entropy code, for example, if the flag $f_0$ indicates the residual value $\alpha_{res}$ is not zero. For example, the residual magnitude may be coded using a unary coding scheme that codes successive flags $f_i$ ($i\geq1$) indicating if the residual value magnitude $|\alpha_{res}|$ is equal to 'i'. A binary entropy coder may binarize the residual value $\alpha_{res}$ into the flags $f_i$ ($i\geq0$) and entropy code the binarized residual value as well as the sign bit.

Compression of the residual value $\alpha_{res}$ may be improved by determining bounds as shown in FIG. 8C. The line (C, $\vec{n}$) 810, as shown, may intersect the current cuboid 800 (corresponding to a TriSoup node) at two bounding points 820 and 821, and the encoder may impose that the adjusted centroid vertex $C+C_{res}$ is located between the two bounding points 820 and 821. These bounding points 820 and 821 may also bound the residual value $\alpha_{res}$ (which may be quantized) as belonging to an integral interval [m, M], where $m \leq 0 \leq M$. Some bits of the binarized residual value $\alpha_{res}$ may be inferred. For example, the residual value $\alpha_{res}$ may equal to zero. The residual value $\alpha_{res}$ may (e.g., necessarily) equal to zero, for example, if m=M=0. The sign bit may be positive. The sign bit may be (e.g., necessarily) positive, for example, if m=0<M. Magnitude $|\alpha_{res}|$ may be determined to be bounded by either $|m|$ or M such that the magnitude may be coded by a truncated unary coding scheme that may infer the value of the last of successive flags $f_i$ ($i\geq1$). Magnitude $|\alpha_{res}|$ may be determined to be bounded by either $|m|$ or M such that the magnitude may be coded by a truncated unary coding scheme that may infer the value of the last of successive flags $f_i$ ($i\geq1$), for example, if the residual value $\alpha_{res}$ is not equal to zero and its sign is known.

The binary entropy coder used to code the binarized residual value $\alpha_{res}$ may be a context-adaptive binary arithmetic coder (CABAC) such that the probability model (also referred to as a context or an entropy coder) used to code at least one bit (e.g., $f_i$ or sign bit) of the binarized residual value $\alpha_{res}$ are updated depending on precedingly coded bits. The probability model of the binary entropy coder may be determined based on contextual information such as the values of the bounds m and M, the position of vertices $V_k$, or the size of the cuboid. The selection of the probability model (i.e., also referred equivalently as an entropy coder or context) may be performed by a dynamic OBUF scheme with the contextual information described herein as inputs.

The reconstruction of a decoded point cloud from a set of TriSoup triangles may be referred to as "voxelization" and may be performed, for example, by ray tracing or rasterization, for each triangle individually before duplicate voxels from the voxelized triangles are removed.

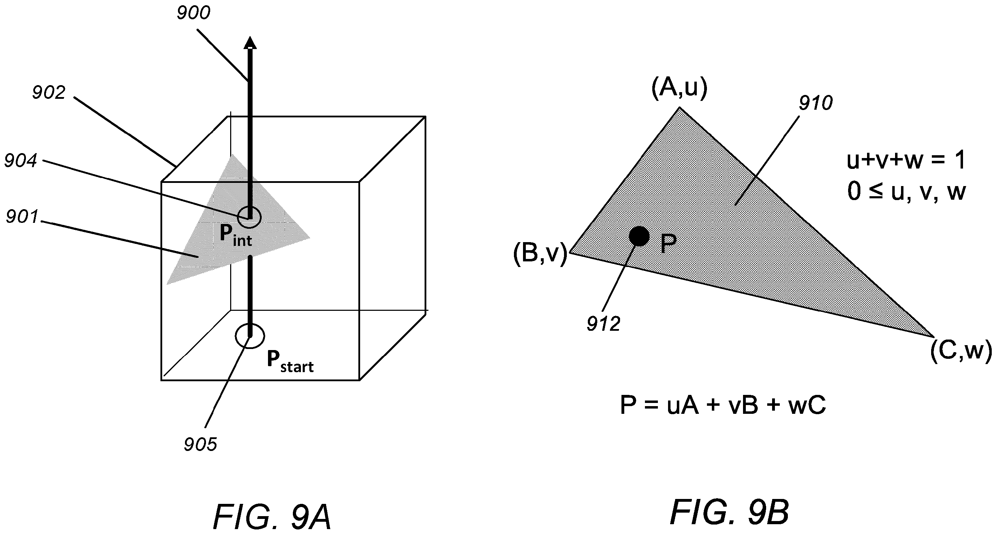

FIG. 9A shows an example of voxelization. More specifically, FIG. 9A shows an example of voxelization using ray tracing. Ray-triangle intersection algorithms (e.g., the Möller-Trumbore algorithm) may rely on launching rays to determine whether rays intersect with TriSoup triangles and if so, at what points of the TriSoup triangles. Rays may be launched from integral coordinates that correspond to the centers of voxels. Rays (e.g., rays 900 in FIG. 9A) may be launched parallel to one of the three axes (or coordinate axes) of the 3D space, starting from integral coordinates (e.g., integer coordinates) such as an origin point 905 (shown as origin or starting point $P_{start}$). An intersection point 904 (e.g., the intersection $P_{int}$) may exist between ray 900 and a TriSoup triangle 901 belonging to a cuboid (e.g., cube) 902. The intersection point 904 may be rounded (e.g., quantized) to obtain a decoded point corresponding to a voxel. The cuboid (e.g., cube) 902 may correspond to a TriSoup node. For example, a ray, launched parallel to a coordinate axis in 3D space, may intersect a TriSoup triangle, if and only if the projection, along the ray direction, of the center of a voxel belongs to the TriSoup triangle. The ray may be determined to intersect the TriSoup triangle, for example, if the point of intersection corresponds to the center of the voxel. This intersection may be found (e.g., determined), for example, by using a ray-triangle intersection algorithm (e.g., tracing or ray casting technique) such as the Möller-Trumbore algorithm to generate voxels representing the triangle. Ray tracing techniques such as the Möller-Trumbore algorithm is based on generating, with respect to a triangle, barycentric coordinates of points of intersection between rays and a plane of the triangle. Points of the triangle may be determined from the barycentric coordinates.

FIG. 9B shows an example of voxelization. More specifically, FIG. 9B shows an example of voxelization using barycentric coordinates (u, v, w) of a point 912 (P) relative to a TriSoup triangle 910 having vertices labeled A, B, and C in the 3D space. Point 912 may be determined as an intersection between a ray and a plane of TriSoup triangle 910 (e.g., containing or passing through the three vertices A, B, and C of TriSoup triangle 910). For example, the ray may be launched parallel to one of the three coordinate axes in 3D space. This intersection point 912 may be uniquely represented as a sum of the three vertices of TriSoup triangle 910:

$$P = uA + vB + wC$$

under the condition u + v + w = 1. Any point P of the plane (containing TriSoup triangle 910) has unique coordinates (u,v,w) in the barycentric coordinate system. A point with barycentric coordinates (u,v,w) includes an ordered triple of numbers u, v, and w. A point with barycentric coordinates (u,v,w) that sum to 1 (i.e., u + v + w = 1) is known as homogeneous barycentric coordinates or normalized barycentric coordinates. The barycentric coordinates of the intersection point with respect to TriSoup triangle 910 may be determined using, for example, the well-known Möller-Trumbore algorithm.

The three vertices A, B, C of TriSoup triangle 910 may have respective barycentric coordinates A(1,0,0), B(0,1,0) and C(0,0,1), for example, by converting points with Cartesian coordinates in 3D space to homogeneous barycentric coordinates. The convex hull (i.e., TriSoup triangle 910) of the three vertices A, B, and C is equal to the set of all points such that the barycentric coordinates u, v, and w is each greater than or equal to zero:

$$0 \leq u, v, w$$

The intersection point may be determined to belong to TriSoup triangle 910. The intersection point may be determined to belong to TriSoup triangle 910, for example, based on the intersection point having barycentric coordinates with an ordered triple of values that is each greater than or equal to zero. The intersection point may be determined to not belong to TriSoup triangle, for example, if at least one of barycentric coordinates (i.e., one of u, v, or w) is negative or less than 0. The intersection point may be determined to not belong to TriSoup triangle, for example, because it will be on the plane, but not on an edge or within the TriSoup triangle. A point determined to belong to TriSoup triangle 910 may be the ray intersecting TriSoup triangle 910 (e.g., within or at an edge of TriSoup triangle 910).

In video compression, performance may be improved by using inter-frame prediction. Bitrates for compressing interframes may be one to two orders of magnitude lower than bitrates of intra frames, which may not use inter-frame prediction. Point cloud data may behave differently from, for example, 2D video data. The 3D geometry, for point cloud data, may be coded (e.g., by 3D point positions). Each point position of the 3D point positions may be associated with attributes (e.g., colors). Geometry and/or attributes may change between frames. Different 3D point positions and/or attributes associated with the corresponding 3D point positions may be coded, for example, for each frame. 2D video data may obtained, for example, by the projection of the 3D geometry and/or attributes onto a 2D plane having a fixed geometry (e.g., a camera sensor). For video coding, the attributes may be coded but the geometry may not be coded (and may not need to be coded). It may be expected that inter-frame prediction between 3D point clouds may provide improved compression capability as compared to intra frame prediction (e.g., intra frame prediction alone) within a point cloud, even if, for example, 2D-projected attributes are expected to temporally have a higher correlation than the underlying 3D geometry. The octree may benefit from inter-frame prediction and/or geometry compression gains. The general framework of inter-frame prediction for 3D point clouds may be similar to the one of video compression.

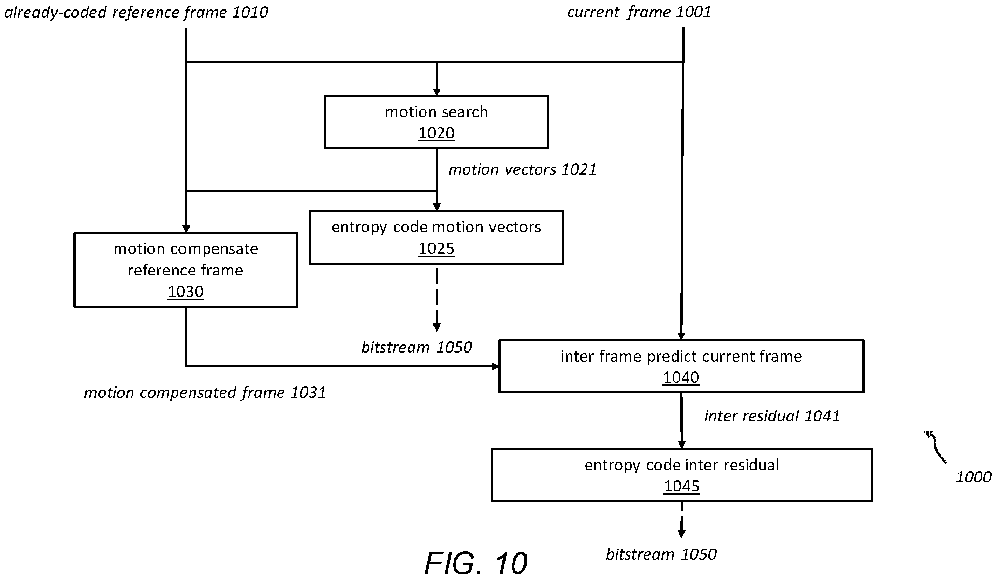

FIG. 10 shows an example encoding method 1000. One or more steps of FIG. 10 may be performed by an encoder (e.g., the encoder 114). Encoding method 1000 may use inter-frame prediction between different point cloud frames. A current frame 1001 (e.g., an image or a point cloud) may be coded relative to an already-coded reference frame 1010 (e.g., an image or a point cloud). At step 1020, a motion search may be performed from the already-coded reference frame 1010 toward the current frame 1001 to determine motion vectors 1021 that represents a motion flow between the two frames 1010 and 1001. In video compression, motion vectors may be 2-component (or 2D) vectors representing the motion from reference blocks of pixels to current blocks of pixels. In point cloud compression, motion vectors may be 3-component (or 3D) vectors representing the motion from reference sets of 3D points (e.g., in a reference point cloud) to current sets of 3D points (e.g., in a current point cloud). At step 1025, motion vectors 1021 may be entropy coded into bitstream 1050. At step 1030, the reference frame 1010 may be motion compensated to determine a motion compensated frame 1031. Motion compensation may involve moving the pixels of the reference image based on the 2D (motion vectors, and/or moving the points of the reference point cloud based on the 3D motion vectors. The determined motion compensated frame may be "closer" to the current frame than the reference frame, for example, the color difference (or point distance) between the motion compensated frame 1031 and the current frame 1001 may be, on average, smaller than the color difference (or point distance) between the reference frame 1010 and the current frame 1001. At step 1040, inter-frame prediction may be performed to determine inter residuals 1041. At step 1045, the inter residuals 1040 may be entropy coded into bitstream 1050. The inter residuals may carry more compressible information than the current frame that may or may not have undergone an intra prediction process. Therefore, the entropy coding performed at step 1045 may be more efficient for determining a bitstream 1050 with reduced size, compared to a bitstream determined by coding the current frame 1001 that has not benefited from inter-frame prediction.

In video coding, inter residuals may be constructed as the difference of colors, pixel per pixel, between a current block of pixels belonging to the current frame (e.g., image) and a co-located compensated block of pixels belonging to the motion compensated frame (e.g., image). Inter residuals may be arrays of color differences that have typically small magnitude and may be efficiently compressed.

In point cloud compression, there may not be a "difference" between two sets of points, because there may not be a one-to-one mapping of the two sets of points. The concept of an inter residual may not be straightforwardly used (e.g.,

generalized) with respect to point clouds. For prediction of an octree representing a point cloud, the concept of inter residual may be replaced by conditional entropy coding, where conditional information for performing conditional entropy coding may be constructed based on a motion compensated point cloud. This may be extended to the framework of dynamic OBUF.

As described herein, the occupancy of a current volume (e.g., the current volume associated with a current node of an octree) may be provided by a quantity of occupancy bits, for example, 8 occupancy bits. A current occupancy bit of the octree may be coded by an entropy coder selected by the output of a dynamic OBUF LUT of coder indices that takes a neighborhood configuration $\beta$ as input. The neighborhood configuration $\beta$ may be constructed based on already-coded occupancy bits. The already-coded occupancy bits may be associated with neighboring volumes (e.g., associated with neighboring nodes of the current node). The construction of the neighborhood configuration $\beta$ may be extended using inter-frame information. An inter predictor occupancy bit may be indicated by (e.g., defined for) a current occupancy bit as a bit representative of the presence of at least one point of a motion compensated point cloud within the current volume. A strong correlation between the current occupancy bit and the inter predictor occupancy bit may exist, for example, if that motion compensation is efficient. This may be because the current and motion compensated point clouds are likely close to each other. Using the inter predictor occupancy bit as a bit of the neighborhood configuration $\beta$ may lead to better compression performance of the octree (e.g., dividing the size of the octree bitstream by a factor two).

The motion field between octrees may comprise 3D motion vectors associated with 3D prediction units (PU). The PUs may have volumes that may include at least a part of one or several volumes (e.g., cuboids) associated with nodes of the octree. The motion compensation may be performed volume per volume (e.g., cuboid per cuboid) based on the 3D motion vectors for determining a motion compensated point cloud in one or more current volumes. The inter predictor occupancy bit may be determined, for example, based on the presence S of at least one point of this motion compensated point cloud.

The TriSoup scheme may benefit from the motion compensated frame determined while the octree coding is performed, for example, before the TriSoup coding. Predictors of the presence and/or position of TriSoup vertices may be determined based on the motion compensated point cloud. The predictors may be determined, for example, based on the intersection of the compensated point cloud with the edges of the TriSoup nodes. Predictors of the centroid residual values may be determined.

The entropy coding of TriSoup vertices and/or centroid residual values may be performed, for example, by using these inter predictors. Inter predictors may constitute a part of a contextual information $\beta_{inter}$ input of a dynamic OBUF instance that codes a TriSoup syntax element. Alternatively or additionally, a context may be selected based on inter predictors. The selected context may be used by an entropy coder (e.g., CABAC) to determine a probability for arithmetically entropy coding of a TriSoup syntax element.

Attributes associated with points of a point cloud may be coded, for example, after the coding of the underlying geometry (e.g., the positions of the points in the 3D space) has been performed. If the geometry coding is a lossless coding (e.g., by using an octree scheme), the encoder may have direct access to the attribute values associated with the coded points. The coded geometry may differ from the original geometry, for example, if the geometry coding is a lossy coding (e.g., by using a TriSoup scheme). The original attributes may be mapped by the encoder from the original geometry to the coded geometry for determining mapped attributes on the coded geometry.

As described herein, attributes may indicate a property of a point's visual appearance (e.g., texture, color, material, transparency, reflectance, time stamp, or velocity). For attributes that are colors, the attribute mapping performed by the encoder may be referred to as a recoloring process. This may be because the colors of the original geometry may be used to color (e.g., recolor) the coded geometry (e.g., a reconstructed geometry).

The coded geometry associated with the mapped attributes for the coded geometry may comprise a point cloud representative of the original point cloud in geometry and attributes. There may be more than one (e.g., two) attribute coding schemes that may be used and/or selected for coding attributes associated with the coded geometry. The attribute coding schemes may comprise, for example, the prediction with lifting transform ("pred-lift") scheme, and/or the region-adaptive hierarchical transform ("RAHT") scheme. The attribute coding schemes may be used, for example, in G-PCC.

The pred-lift scheme first may perform a decomposition of the coded geometry into Levels of Details (also known as LoD). For a set (S) of points (e.g., all points) of the coded geometry, the set may be decomposed into disjoint subsets $S^i$ such that $S = \bigcup_{i=0}^{L-1} S^i$. L levels of details may be defined as a tower of point cloud geometries

$$S^0 \subset S^0 \cup S^1 \subset \cdots \subset S^0 \cup \ldots \cup S^{L-1} = S$$

where the set $S^0$ of points may be the first (e.g., coarsest) level of details, and the set $S^0 \cup \ldots \cup S^{L-1}$ of points may be the $L^{th}$ (e.g., finest) level of details, for example, if the set may be decomposed into disjoint subsets $S^i$ such that $S = \bigcup_{i=0}^{L-1} S^i$.

Attributes $a_j$ may be associated with the points $s_j$ of the set S of all points of the coded geometry. Considering

subsets $a^0$, ..., $a^{L-1}$ of attributes, attributes $a^i_j$ of a subset $a^i$ may be associated with the points $s^i_j$ of the subset $S^i$. The $i^{th}$ level of details ($S^0 \cup ... \cup S^{i-1}$) may have associated attributes comprising the concatenation of attributes of subsets $a^0$, , $a^{i-1}$. The set 'a' of attributes (e.g., all attributes) may be partitioned into subsets $a^0$, ..., $a^{L-1}$.

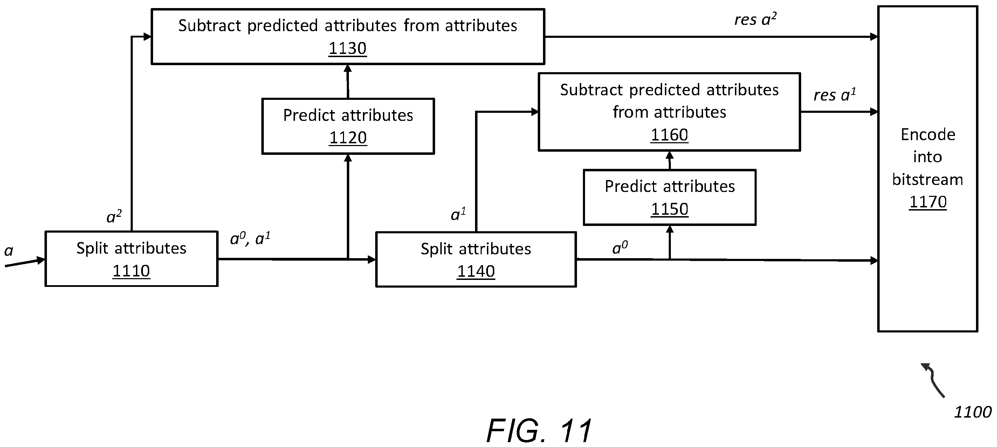

FIGs. 11, 12, 13, and 14 show examples for coding (e.g., encoding or decoding) point cloud attributes. The coding may be based on intra transform schemes such as a prediction transform scheme or a pred-lift scheme. The prediction transform scheme may be a variation of pred-lift scheme without update operations. The intra transform schemes may be examples of wavelet transforms that may convert (e.g., transform) attribute values into wavelet coefficients, which may be more efficiently compressed than the original attribute values. The wavelet coefficients may represent values of residual attributes, which may be smaller and more efficiently compressed than the values of the original attributes. The residual attributes may be referred to as and/or comprise wavelet coefficients (or transform/transformed coefficients). The wavelet coefficients may result from application of the prediction transform scheme and/or pred-lift scheme.

As described herein, the prediction transform scheme and/or pred-lift scheme may operate using prediction for and/or between levels of details of attributes. At the encoder, attributes at a higher (e.g., finer) level of detail may be predicted based on attributes at a lower (e.g., coarser) level of detail. Each level of detail starting from the highest level may be successively predicted, for example, based on lower level(s) of detail. The decoder may perform inverse operations such that attributes at a lower level of detail may be predicted and/or reconstructed, for example, based on residual attributes of higher level(s) of detail. Each level of detail starting from the lowest level may be successively predicted and reconstructed, for example, based on higher level(s) of detail. Although the examples shown in FIGS. 11-14 show three levels of details (LoDs), it is appreciated that a different number of LoDs may be used, for example, by extending (e.g., iteratively) the decomposition scheme.

FIG. 11 shows an example method for encoding point cloud attributes. The encoding may be based on a prediction transform scheme. One or more steps of FIG. 11 may be performed by an encoder (e.g., the encoder 114 in FIG. 1).

A set 'a' of attributes may be coded, for example, using prediction for and between one or more (e.g., three) levels of details, from a highest (e.g., first predicted) level of details (e.g., associated with highest frequencies such as res $a^2$) to a lowest (e.g., third) level of details (e.g., associated with lowest frequencies such as $a^0$). At step 1110, an encoder may split a set 'a' of attributes into a first set of attributes comprising the attributes of the subset $a^2$ and a second set of attributes comprising the attributes of the two subsets $a^0$ and $a^1$. At step 1120, the encoder may determine predictive values of the attributes of the first set of attributes ($a^2$) from the attributes of the second set of attributes ($a^0$ and $a^1$). At step 1130, the encoder may determine first residual values 'res $a^2$'. The encoder may determine first residual values 'res $a^2$', for example, by subtracting the predictive values from the attributes of the first set of attributes ($a^2$). At step 1170, the encoder may encode the first residual values 'res $a^2$' into the bitstream. The operations at steps 1120-1130 may be iteratively used for (e.g., applied to) each successively lower (e.g., coarser) LoD.

At step 1140, the encoder may split the second set of attributes ($a^0$ and $a^1$) into a third set of attributes and a fourth set of attributes. The third set of attributes may comprise the attributes of the subsets $a^1$. The fourth set of attributes may comprise the attributes of the subset $a^0$. At step 1150, the encoder may determine predictive values of the attributes of the third set of attributes ($a^1$) from the attributes of the fourth set of attributes ($a^0$). At step 1160, the encoder may determine second residual values 'res $a^1$'. The encoder may determine second residual values 'res $a^1$', for example, by subtracting predictive values from the attributes of the third set ($a^1$). At step 1170, the encoder may encode the second residual values 'res $a^1$' into the bitstream. The encoder may encode the attributes of the fourth set of attributes ($a^0$) into the bitstream.

The bitstream may comprise data representative of first residual values 'res $a^2$', second residual values 'res $a^1$', and/or the attributes of the subset $a^0$ (e.g., the fourth set of attributes). At step 1170, the residual values may be entropy coded. The encoder may encode the attributes of the subset $a^0$ into the bitstream. Additionally or alternatively, the encoder may perform intra prediction of a current attribute $a^0_j$ of the subset $a^0$ to be coded. The encoder may perform intra prediction of a current attribute $a^0_j$ of the subset $a^0$ to be coded, for example, based on already-coded attributes of the subset $a^0$. This may improve the compression efficiency of the attributes of the subset $a^0$.

The encoder may quantize the attributes of the subset $a^0$, the first residual value 'res $a^2$', and/or the second residual value 'res $a^1$', for example, if lossy attribute coding is allowed. The encoder may encode (e.g., entropy encode), into the bitstream, the attributes of the subset $a^0$ (or the quantized attributes of the subset $a^0$), the first residual value 'res $a^2$' (or the quantized first residual values 'res $a^2$'), and/or the second residual value 'res $a^1$' (or the quantized second residual value 'res $a^1$').

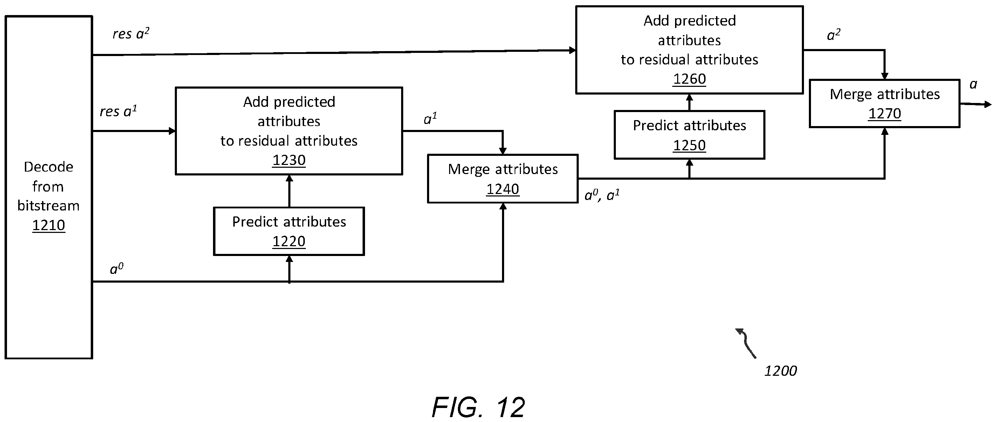

FIG. 12 shows an example method for decoding point cloud attributes. The decoding may be based on a prediction transform scheme. One or more steps of FIG. 12 may be performed by a decoder (e.g., the decoder 120 in FIG. 1). A set 'a' of attributes may be decoded. The set of 'a' attributes may be encoded, for example, as described herein with respect to FIG. 11. The decoding may use prediction between one or more (e.g., three) levels of details, from a lowest (e.g., third) level of details to a highest (e.g., first) level of details (e.g., in reverse order of the encoder described herein with respect to FIG. 11).

At step 1210, the decoder may decode the first residual values 'res $a^2$', the second residual values 'res $a^1$', and/or

attributes of a fourth set of attributes ($a^0$) from the bitstream. The decoder may use (e.g., apply) dequantization (e.g., for lossy compression). At step 1220, the decoder may determine predictive values of the attributes of a third set of attributes ($a^1$) from the decoded attributes of the fourth set of attributes ($a^0$). The decoder may determine the predictive values, for example, in a way similar to that described with respect to step 1150 of FIG. 11. At step 1230, the decoder may determine decoded attributes of the third set of attributes ($a^1$), for example, by adding the predictive values to the decoded first residual values 'res $a^1$'. The operations at steps 1120-1230 may be iteratively used for (e.g., applied to) each successively higher (e.g., finer) LoD.

At step 1240, the decoder may determine a second set of attributes ($a^0$ and $a^1$). The decoder may determine a second set of attributes ($a^0$ and $a^1$), for example, by merging the third set of attributes ($a^1$) and the fourth set of attributes ($a^0$). Step 1240 may be an inverse of step 1140. At step 1250, the decoder may determine predictive values of the attributes of a first set of attributes ($a^2$) from the attributes of the second set of attributes ($a^0$ and $a^1$). The decoder may determine predictive values in a way similar to that described with respect to step 1120. At step 1260, the decoder may determine decoded attributes of the first set of attributes ($a^2$), for example, by adding the predictive values to the decoded second residual values 'res $a^2$'. At step 1270, the decoder may determine the set 'a' of decoded attributes for the coded geometry S (e.g., the whole coded geometry S), for example, by merging the first set of attributes ($a^2$) and the second set of attributes ($a^0$ and $a^1$). Step 1270 may be an inverse of step 1110.

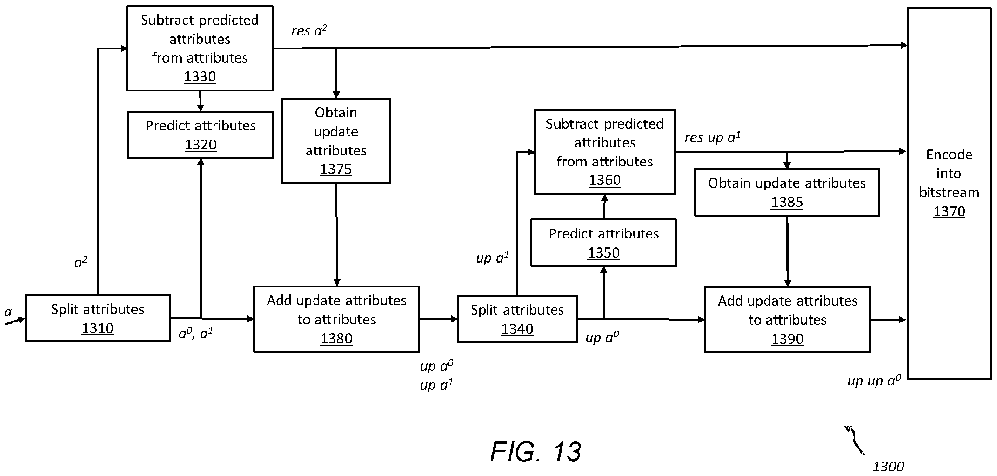

FIG. 13 shows an example method for encoding point cloud attributes. The encoding may be based on a pred-lift transform scheme with prediction and update. One or more steps of FIG. 13 may be performed by an encoder (e.g., the encoder 114 in FIG. 1). A set 'a' of attributes may be encoded using prediction between one or more (e.g., three) levels of details, from a highest (e.g., first) level of details (e.g., associated with highest frequencies such as res $a^2$) to a lowest (e.g., third) level of details (e.g., associated with lowest frequencies such as up up $a^0$).

At step 1310, an encoder may split a set 'a' of attributes into a first set of attributes comprising the attributes of the subset $a^2$ and a second set of attributes comprising the attributes of the two subsets $a^0$ and $a^1$. Step 1310 may be performed similar to that described herein with respect to step 1110 of FIG. 11. At step 1320, the encoder may determine predictive values of the attributes of the first set of attributes ($a^2$) from the attributes of the second set of attributes ($a^0$ and $a^1$). Step 1320 may be performed similar to that described herein with respect to step 1120. At step 1330, the encoder may determine first residual values 'res $a^2$', for example, by subtracting predictive values from the attributes of the first set of attributes ($a^2$). Step 1320 may be performed similar to that described herein with respect to step 1130. At step 1370, the encoder may encode the first residual values 'res $a^2$' into the bitstream. Step 1370 may be performed similar to that described herein with respect to step 1170.

At step 1375, the encoder may determine update attribute values from the first residual values 'res $a^2$'. The encoder may determine an update attribute value, for example, based on a first residual value. The update attribute value may be determined as the first residual value multiplied by a scaling factor (e.g., $\frac{1}{2}$, $\frac{1}{4}$, 1/8) that may be predetermined or signaled in the bitstream. At step 1380, the encoder may update attribute values 'up $a^0$' and 'up $a^1$' of the second set of attributes ($a^0$ and $a^1$) by adding the update attribute values to the attribute values of the second set of attributes ($a^0$ and $a^1$). The operations at steps 1320, 1330, 1375, and 1380 may be iteratively used for (e.g., applied to) each successively lower (e.g., coarser) LoD.

At step 1340, the encoder may split the second set of attributes ($a^0$ and $a^1$) into a third set of attributes and a fourth set of attributes. The third set of attributes may comprise the updated attribute values 'up $a^1$' of the subset $a^1$. The fourth set of attributes may comprise the updated attribute values 'up $a^0$' of the subset $a^0$. At step 1350, the encoder may determine predictive values of the updated attribute values 'up $a^1$' of the third set of attributes ($a^1$) from the updated attribute values 'up $a^0$' of the fourth set of attributes ($a^0$). At step 1360, the encoder may determine third residual values 'res up $a^1$', for example, by subtracting predictive values from the updated attribute values 'up $a^1$' of the third set of attributes ($a^1$). At step 1370, the encoder may encode the third residual values 'res up $a^1$' into the bitstream. At step 1385, the encoder may determine update attribute values from the third residual values 'res up $a^1$'. At step 1390, the encoder may determine further updated attribute values 'up up $a^0$' of the fourth set of attributes ($a^0$), for example, by adding the update attribute values to the updated attribute values 'up $a^0$' of the fourth set of attributes ($a^0$). At step 1370, the encoder may encode the further updated attribute values 'up up $a^0$' of the fourth set of attributes ($a^0$) into the bitstream.

The bitstream may comprise data representative of transformed attributes (e.g., data representative of the first residual values 'res $a^2$', third residual values 'res up $a^1$' and/or further updated attribute values 'up up $a^0$' of the fourth set of attributes). The encoder may encode the further updated attribute values 'up up $a^0$' of the fourth set of attributes into the bitstream. The encoder may perform intra prediction of a current further updated attribute values 'up up $a^0_j$' to be coded, for example, based on already-coded attributes of the fourth set of attributes. This may improve the compression efficiency of the further updated attribute values 'up up $a^0$' of the fourth set of attributes.

The encoder may quantize the further updated attribute values 'up up $a^0$' of the fourth set of attributes, the first residual value 'res $a^2$' and/or the third residual value 'res up $a^1$', for example, if lossy attribute coding is allowed. The encoder may entropy encode into the bitstream the further updated attribute values 'up up $a^0$' of the fourth set of attributes, the first residual value 'res $a^2$' (or the quantized first residual values 'res $a^2$'), and/or the third residual value 'res up $a^1$' (or the

quantized third residual value 'res up a$^{1}$').

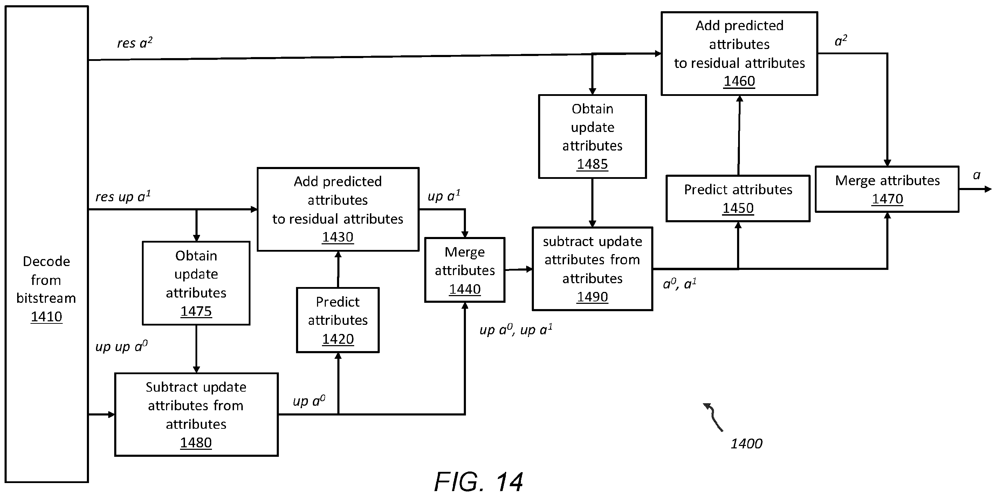

FIG. 14 shows an example method for decoding point cloud attributes. The decoding may be based on a pred-lift transform scheme with prediction and update. One or more steps of FIG. 14 may be performed by a decoder (e.g., the decoder 120 in FIG. 1). A set of 'a' attributes may be encoded as described herein with respect to Fig. 13. The set 'a' of attributes (e.g., encoded set 'a' of attributes) may be decoded. The decoding may use prediction between one or more (e.g., three) levels of details, from a lowest (e.g., third) level of details to a highest (e.g., first) level of details (in reverse order of the encoder described herein with respect to FIG. 13).

At step 1410, the decoder may decode the first residual values 'res a$^{2}$', the third residual values 'res up a$^{1}$', and/or further updated attribute values 'up up a$^{0}$' of a fourth set of attributes (a$^{0}$) from the bitstream. The decoder may use (e.g., apply) an optional dequantization for lossy compression. At step 1475, the decoder may determine update attribute values from the decoded third residual values 'res up a$^{1}$'. Step 1475 may be performed in a manner similar to that described herein with respect to step 1385. The decoder may determine an update attribute value based on the third residual values. The update attribute value may be determined as the third residual values multiplied by a scaling factor (e.g., ½, ¼, 1/8) that may be predetermined or signaled in the bitstream.

At step 1480, the decoder may determine updated attribute values 'up a$^{0}$' of the fourth set of attributes (a$^{0}$), for example, by subtracting the update attribute values from the decoded further updated attribute values 'up up a$^{0}$' of the fourth set of attributes (a$^{0}$). At step 1420, the decoder may determine predictive values of the updated attribute values 'up a$^{1}$' of a third set of attributes (a$^{1}$) from the updated attribute values 'up a$^{0}$' of the fourth set of attributes (a$^{0}$). Step 1420 may be performed in a similar manner as described herein with respect to step 1350. At step 1430, the decoder may determine updated attribute values 'up a$^{1}$' of the third set of attributes (a$^{1}$), for example, by adding the predictive values to the decoded third residual values 'res up a$^{1}$'. At step 1440, the decoder may determine a second set of attributes (a$^{0}$ and a$^{1}$), for example, by merging the third set of attributes (a$^{1}$) and the fourth set of attributes (a$^{0}$). Step 1440 may be an inverse of step 1340. The second set of attributes (a$^{0}$ and a$^{1}$) may comprise updated attribute values 'up a$^{0}$' and updated attribute values 'up a$^{1}$'. At step 1485, the decoder may determine update attribute values from the decoded first residual values 'res a$^{2}$'. Step 1485 may be performed in a manner similar to that as described herein with respect to step 1375. The operations at steps 1420, 1430, 1440, 1475, and 1480 may be iteratively used for (e.g., applied to) each successively higher (e.g., finer) LoD.

At step 1490, the decoder may determine attribute values 'a$^{0}$' and attribute values 'a$^{1}$' of the second set of attributes (a$^{0}$ and a$^{1}$), for example, by subtracting the update attribute values from the updated attribute values 'up a$^{0}$' and from updated attribute values 'up a1' of the second set of attributes (a$^{0}$ and a$^{1}$). At step 1450, the decoder may determine predictive values of the attributes of a first set of attributes (a$^{2}$) from the attributes of the second set of attributes (a$^{0}$ and a$^{1}$). Step 1450 may be performed in a manner similar to that described herein with respect to step 1320. At step 1460, the decoder may determine decoded attributes of the first set of attributes (a$^{2}$), for example, by adding the predictive values to the decoded second residual values 'res a$^{2}$'. At step 1470, the decoder may determine the set 'a' of decoded attributes for the coded geometry S (e.g., the whole coded geometry), for example, by merging the first set of attributes (a$^{2}$) and the second set of attributes (a$^{0}$ and a$^{1}$). Step 1470 may be an inverse of step 1310.

Pred-lift schemes may be similar to the lifting scheme used for (e.g., applied to) wavelets in image coding. A pre-lift scheme may comprise update steps that are not in prediction transform scheme (e.g., in addition to the prediction steps in the prediction transform scheme). The update steps may provide better compression performance (e.g., in combination with the prediction steps). This may compact the energy in the lowest level of details, which may reduce distortion with lossy coding.

Attributes may be coded using the RAHT scheme. The RAHT scheme may be based on the iterative use of a two-point transform. In point cloud attribute coding, the two-point RAHT transform may be used for (e.g., applied to) two sets (A$_1$ and A$_2$) of attributes. Each of A$_1$ and A$_2$ may have respectively w$_1$ and w$_2$ number of attributes. Each of A$_1$ and A$_2$ may have respective associated coefficients c$_{A1}$ and c$_{A2}$. Each of c$_{A1}$ and c$_{A2}$ is representative of the sum of attribute values over the corresponding set divided by the square root of the number of attributes.

$$c_{Ai} = \frac{1}{\sqrt{w_i}} \sum_{a \in A_i} a. \qquad (w_i = \#A_i) \qquad\qquad (*)$$

The two-point RAHT transform may depend on the weights w$_1$ and w$_2$. The two-point RAHT transform may be defined by a 2x2 matrix as follows

$$\mathrm{RAHT}(w_1, w_2) = \frac{1}{\sqrt{w_1 + w_2}} \begin{bmatrix} \sqrt{w_1} & \sqrt{w_2} \\ -\sqrt{w_2} & \sqrt{w_1} \end{bmatrix}$$

Two new coefficients DC and AC may be determined, for example, if used for (e.g., applied to) the two coefficients c$_{A1}$ and c$_{A2}$.

$$\begin{bmatrix} DC \\ AC \end{bmatrix} = \mathrm{RAHT}(w_1, w_2) \begin{bmatrix} c_{A1} \\ c_{A2} \end{bmatrix}$$

As described herein, the above property (*) on coefficients may hold for the DC coefficient.

$$DC = \frac{1}{\sqrt{w_1 + w_2}} \left( \sqrt{w_1} c_{A1} + \sqrt{w_2} c_{A2} \right) = \frac{1}{\sqrt{w_1 + w_2}} \left( \sum_{a \in A_1} a + \sum_{a \in A_2} a \right) = \frac{1}{\sqrt{w_1 + w_2}} \sum_{a \in A_1 \cup A_2} a = c_{A1 \cup A2}$$

The two point RAHT transform may be iteratively used for (e.g., applied to) DC coefficients. This may be referred to as the RAHT iterative method. AC coefficients may not undergo further transformation, for example, after being determined. At the start of the RAHT iterative method, there may be as many initial sets $A_i$ of attributes as there are points in the coded geometry S. Each initial set $A_i$ of attributes may contain one attribute ($w_i=1$). The coefficient $c_{Ai}$ may be equal to the value of the one attribute, and/or may fulfill the property (*). By induction, the property (*) may hold for subsequent DC coefficients (e.g., all subsequent DC coefficients) determined, for example, after iterative application of the two point RAHT transform.

At a particular stage of the RAHT iterative method, determined coefficients may be the union of a set of DC coefficients fulfilling the property (*) and a set of AC coefficients. The RAHT iterative method may continue until DC coefficients are depleted and only one DC coefficient may be left. The one DC coefficient may be equal to $C_A$ where A may be the set of attributes (e.g., all attributes) associated with the coded geometry S (e.g., the complete coded geometry S). The RAHT iterative method may follow an order among pairs of DC coefficients.

The two-point inverse RAHT transform may be defined by a 2x2 matrix as follows

$$\mathrm{iRAHT}(w_1, w_2) = \frac{1}{\sqrt{w_1 + w_2}} \begin{bmatrix} \sqrt{w_1} & -\sqrt{w_2} \\ \sqrt{w_2} & \sqrt{w_1} \end{bmatrix}$$

The two-point inverse RAHT transform may be used with respect to (e.g., applied to) DC and AC coefficients for obtaining back the two coefficients $c_{A1}$ and $c_{A2}$.

$$\begin{bmatrix} c_{A1} \\ c_{A2} \end{bmatrix} = \mathrm{iRAHT}(w_1, w_2) \begin{bmatrix} DC \\ AC \end{bmatrix}$$

The inverse iterative RAHT method may use (e.g., apply) the inverse two-point RAHT to DC and AC coefficient in reverse order relative to their obtention by the iterative RAHT method. At the end of the inverse iterative RAHT method, coefficients $_{CAi}$ associated with the initial sets $A_i$ of attributes may be obtained. These coefficients $c_{Ai}$ may be equal to the values of the one attribute associated with the initial sets $A_i$.

For lossy RAHT compression of attributes, coefficients may be further compressed based on using (e.g., applying) a quantization to the DC and AC coefficients, for example, before encoding in the bitstream. The decoder may use (e.g., apply) a dequantization, for example, after decoding of the quantized DC and AC coefficients from the bitstream.

The RAHT iterative method may follow an octree as a specific iterative order, for example, in G-PCC. One or more (e.g., up to eight) DC coefficients, associated with one or more (e.g., up to eight) occupied child nodes of a parent node in the octree, may undergo a cascade of two-point RAHT transformations until one DC coefficient remains, together with the remaining (e.g., up to seven) AC coefficients. This one DC coefficient may be pushed at parent node level. The method may be repeated at upper octree depth, for example, until the root node is reached.

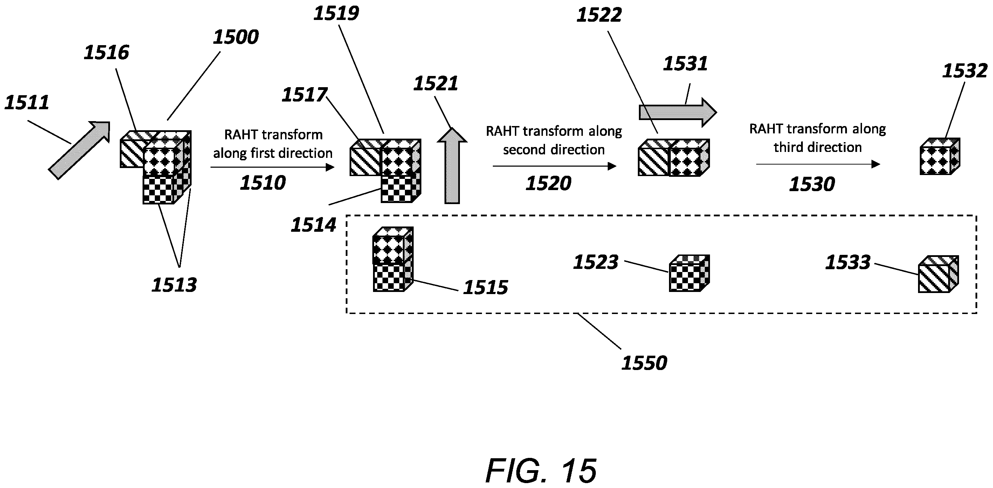

FIG. 15 shows an example RAHT transformation. The RAHT transformation may be applied on child nodes of an octree parent node along three successive directions. The parent node 1500 may have multiple (e.g., five) occupied child nodes each having a respective associated coefficient $c_i$ and weight $w_i$. A first RAHT transformation 1510 may be performed along a first direction 1511. If there are two adjacent occupied child nodes 1513 along the first direction, the two adjacent occupied child nodes 1513 may undergo a two-point RAHT transform. A new DC coefficient 1514 and an AC coefficient 1515 may be determined and pushed to a set 1550 of AC coefficients. The node may be left as is and its DC coefficient may be kept 1517, for example, if there is only one occupied child node 1516 along the first direction. In this example, the child nodes may be collapsed along the first direction to determine a new set 1519 of nodes (e.g., a set of three nodes), with associated new DC coefficients, may be determined.

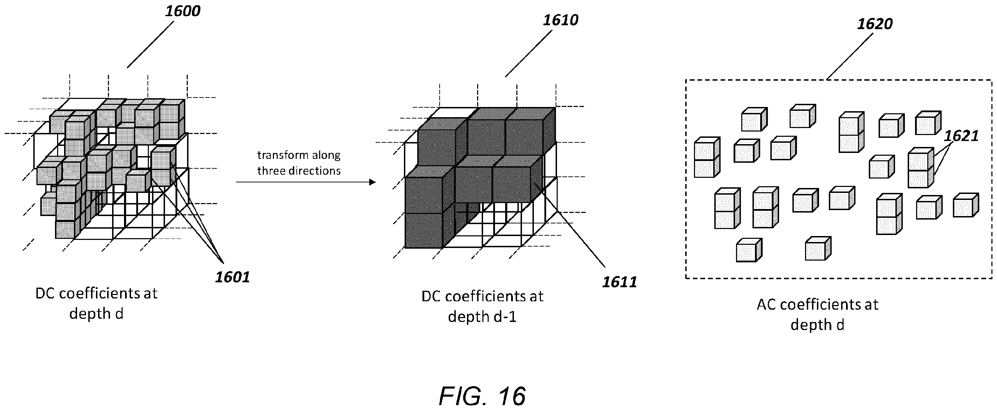

A second RAHT transformation 1520 may be performed, for example, after the first RAHT transformation. The second RAHT transformation may be along a second direction 1521. The second RAHT transformation may be performed similarly to the first RAHT transformation. The child nodes 1522 may be determined. The child nodes 1522 may have been collapsed along the first two directions 1511 and 1521. The AC coefficients 1523 may be pushed to the set 1550 of AC coefficients. A third RAHT transformation 1530 may be performed, for example, after the second RAHT transformation. The third RAHT transformation may be along a third direction 1531. The third RAHT transformation may be performed similarly to the first and/or second RAHT transformation. A (e.g., unique) child node 1532 may be determined. The child node 1532 may result from the collapse along all three directions. The AC coefficients 1533 may be pushed to the set 1550 of AC coefficients. The child node 1532 may have an associated DC coefficient that is pushed to the parent node (e.g., as shown for example in FIG. 16).

FIG. 16 shows an example RAHT transformation. The RAHT transformation may be used for (e.g., applied to) octree nodes (e.g., all octree nodes) at depth 'd' to determine DC coefficients at depth d-1 and AC coefficients. Occupied nodes 1600 of an octree may be at depth d. Occupied nodes 1600 may undergo a RAHT transformation along the three directions. DC coefficients for each node may be pushed up to the corresponding occupied parent nodes 1610 that belong to the octree at depth d-1. The three DC coefficients of the child nodes 1601 may, for example, undergo a RAHT transformation along the three directions. A unique DC coefficient associated with the parent node 1611 may be determined and two AC coefficients 1621 may be pushed to a set 1620 of AC coefficients. By performing this method for (e.g., all) occupied nodes 1600 of the octree at depth d, the DC coefficients associated with occupied nodes of the octree at depth d may be transformed into DC coefficients associated with occupied nodes 1610 of the octree at depth d-1 and a set 1620 of AC coefficients.

This bottom-up method may be repeated depth per depth, for example, until reaching the minimum depth (the root node). The result of the RAHT transformation over the octree (e.g., complete octree) may be a set of coefficients comprising a unique DC coefficient and a set of (many) AC coefficients. The RAHT transformation method may start from the highest depth where occupied child nodes correspond to a unique point (voxel) of the coded point cloud S. The unique point may be associated with a unique attribute among the set 'a' of attributes. The DC coefficient at highest depth may be set as the value of the unique attribute associated with each occupied node. The weights 'w' may be set to 1.

The inverse RAHT method on an octree may be a top-down method, from the root node down to the last depth made of leaf nodes that each contain one point of the point cloud, and one associated attribute. The DC coefficients of occupied nodes 1610 of the octree at depth d-1 may be inverse transformed into DC coefficients of occupied nodes 1600 of the octree at depth d, for example, by using (e.g., applying) the inverse two-point RAHT transform to the DC coefficient of each of the occupied node of the octree at depth d-1 and to the related AC coefficients from set 1620 of AC coefficients. The inverse two-point RAHT transform may be applied along the three directions, in reverse order to invert the node transformation as described herein with respect to FIG. 15. DC coefficients of the leaf nodes may be obtained, and the values of the DC coefficients may correspond to the attributes associated with the unique point of each of the leaf nodes. Like geometry coding of a point cloud, coding of attributes associated with the points of a current point cloud may benefit from inter-frame prediction using a motion compensated point cloud. The motion compensated point cloud may inherit attributes from a reference point cloud that has been motion compensated. If, for example, motion occurs, points may keep their associated attributes. The motion compensated attributes (e.g., the attributes associated with the points of the motion compensated point cloud) may be used. This may improve compression of the attributes of the coded geometry of the current point cloud.

Inter pred-lift scheme may use motion compensated attributes or residual attributes based on differences between attributes and motion-compensated attributes. Using residual attributes may increase compression. Inter pred-lift scheme may be used in the pred-lift scheme, for example, by plugging the inter pred-lift scheme to the prediction steps 1120, 1150, 1220, 1250, 1320, 1350, 1420 and/or 1450. Attributes (or residual attributes) $a^i$ of the set $S^i$ of points may be predicted, for example, by attributes (or residual attributes) of the subsets $a^0, ... , a^{i-1}$ of the lower level of details $S^0 \cup ... \cup S^{i-1}$. Additionally or alternatively, attributes (or residual attributes) $a^1$ of the set $S^i$ of points may be predicted by motion compensated attributes (or residual attributes) of a set $a^{inter}$ associated with points of a motion compensated point cloud $S^{inter}$ The prediction step may be performed, for example, based on attributes (or residual attributes) of subsets $a^0, ..., a^{i-1}$ and of a set $a^{inter}$ of an augmented lower level of details $S^0 \cup ... \cup S^{i-1} \cup S^{inter}$.

The encoder and/or decoder may determine predictive values of the attributes (or residual attributes) of the fourth set of attributes (or residual attributes) (subset $a^0$ of the coarsest level of details $S^0$) from the motion compensated attributes (or residual attributes) of the set $a^{inter}$ associated with the points of a motion compensated point cloud $S^{inter}$ The encoder and/or decoder may subtract the predictive values from the attributes (or residual attributes) of the fourth set of attributes (or residual attributes) to determine residual values 'res $a^0$'. The encoder may encode the residual values 'res $a^0$' (or residual of residual attributes) into the bitstream instead of the attributes (or residual attributes) of the fourth set of attributes.

Inter RAHT scheme may use inter prediction for predicting the values of the DC and the AC coefficients determined by the RAHT iterative method. It may be beneficial to maintain a common attribute octree structure for both a current point cloud $S^{coded}$ to be coded and a motion compensated point cloud $S^{inter}$, for example, because the generation of DC and AC coefficients follows an octree. A common bounding box encompassing both point clouds may be determined. An octree partitioning may be performed, from a root node associated with the common bounding box, for both point clouds. This may lead to two octree partitioning that may be differently, for example, if the point clouds are not equal. The two octrees may have a common subtree starting from the root node. On the common subtree, occupied node topology may be the same, and/or a common set of DC and AC coefficients may be determined for both point clouds. The subset of DC and AC coefficients, associated with nodes of the common subtree and determined from the attributes of the current point cloud $S^{coded}$, may be predicted from DC and AC coefficients determined from the attributes of the motion compensated point cloud $S^{inter}$ The encoder and/or decoder may determine coefficient residual values, for example, by subtracting the DC and AC coefficients, determined from the attributes of the motion compensated point cloud $S^{inter}$, from the DC and AC coefficients associated with nodes of the common subtree and determined from the attributes of the current point cloud $S^{coded}$. The encoder may encode, into the bitstream, the coefficient residual values and/or may not encode, into the bitstream, the DC and AC coefficients associated with nodes of the common subtree and determined from the attributes of the current point cloud $S^{coded}$.

The DC and AC coefficients that are not associated with nodes of the common subtree may not be predicted, and/or may be coded directly in a similar way as performed without inter prediction. Additionally or alternatively, predicted DC coefficients of the current point cloud $S^{coded}$ may be determined at some depth (e.g., without predicting AC coefficients at the same depth). This may be based on the assumption that both the octree of the current point cloud $S^{coded}$ and the octree of the motion compensated point cloud $S^{inter}$ have a same occupancy of a node at this depth. The predicted DC coefficients may be determined from the corresponding co-located DC coefficients of the motion compensated point cloud $S^{inter}$ DC residual values may be determined, for example, by subtracting the predicted DC coefficients from the DC coefficients of the current point cloud $S^{coded}$. The RAHT transformation may go up in the octree starting from DC residual values replacing the DC coefficients of the coded current point cloud, for example, after the predicted DC coefficients be determined.

A RAHT scheme that does not use information from a reference frame different from the current frame may be called an intra RAHT scheme. Intra prediction may be performed between DC and AC coefficients of an intra RAHT scheme. Inter-depth prediction within a current frame may have been integrated into, for example, the RAHT scheme of GPCC. The inter-depth prediction mechanism may predict the DC coefficients associated with nodes of the octree at depth d, for example, by using interpolation of DC coefficients associated with nodes of the octree at lower depth d-1.

For compressing colored dynamic dense point cloud (e.g., in the context of AR/VR), attribute related data may constitute a large portion of the bitstream. Compressing the attribute related data efficiently may improve storage and/or transmission of such point clouds. Geometry may be lossy compressed (e.g., using a TriSoup scheme), and/or colors may be lossy compressed (e.g., using the RAHT transform or the pred-lift scheme). For point cloud compression, the RAHT transform may be selected, for example, based on the RAHT transform having better performance than the pred-lift scheme.

In at least some systems, inter RAHT may have achieved compression gains, for example, compared with intra RAHT. Inter RAHT may be based on prediction of coefficients from a motion compensated colored point cloud. The gains from inter RAHT may drop (e.g., significantly) in regions where the motion is complex. The drop may occur, for example, if the (motion) compensation is unable (e.g., unlikely) to provide a large enough common part to two octrees that are partitioned for the current point cloud $S^{coded}$ and the motion compensated point cloud $S^{inter}$ The number of DC and AC coefficients that may be inter predicted may be limited and the use of inter RAHT may not be efficient. In at least some systems, inter RAHT may be sensitive to geometry differences between the current point cloud $S^{coded}$ and the motion compensated point cloud $S^{inter}$, and attribute correlation between these two point clouds may be difficult to utilize.

Compression of attributes of point clouds may be improved, for example, using a projection-based scheme. Projected attributes may be determined, for example, using the projection-based scheme. Projected attributes may be determined, for example, based on projecting attributes of a reference point cloud frame for attributes onto a reconstructed geometry of a point cloud frame and coding (e.g., encoding and/or decoding) attributes associated with the decoded geometry of the point cloud frame using the attribute predictors determined from the projected attributes. Attributes of one or more points from the reference point cloud frame may be used to determine an attribute predictor (e.g., also referred to as a projected attribute) of an attribute of a point in the reconstructed geometry of the point cloud frame. For example, the one or more points from the reference point cloud frame may be selected to predict attribute information of the point from the reconstructed point cloud frame, for example, based on geometry information of the one or more points and geometry information of the point of the reconstructed point cloud frame.

Projected attributes and coded attributes may belong to the same geometry of the point cloud frame. The prediction of the coded attributes based on the projected attributes may be more efficient than predicting (e.g., directly) from a motion compensated point cloud frame, for example, because the geometry discrepancy, between the reconstructed geometry and a motion compensated point cloud geometry, may have been reduced or removed.

An encoder and a decoder may determine the same attribute predictors. The encoder and the decoder may perform inverse operations, for example, during coding of the attributes of the point clouds. An encoder may determine attributes of a reconstructed geometry of a point cloud frame. This determination may be based on attributes of a geometry of the point cloud frame. The encoder may map attributes of the geometry of the point cloud frame to the reconstructed geometry, for example, in lossy compression. The attributes of the reconstructed geometry may be determined based on the mapping. The attributes of the geometry may be the same as the attributes of the reconstructed geometry, for example, in lossless compression. The encoder may determine attribute predictors of the attributes of the reconstructed geometry. The attribute predictors may be determined, for example, based on projecting attributes of a reference point cloud frame for attributes onto the reconstructed geometry. The attributes of the reconstructed geometry may be encoded based on the attribute predictors. The attributes may be encoded as attribute residuals. Attribute residuals indicating differences between the attributes of the reconstructed geometry and the attribute predictors may be encoded into a bitstream associated with the point cloud frame. The attribute residuals may be used, for example, by a decoder, to determine the attributes of the reconstructed geometry of the point cloud frame.

A decoder may perform inverse operations to reconstruct (e.g., decode) the attributes of the point cloud frame. The decoder may determine a reconstructed geometry of the point cloud frame, for example, by decoding geometry information of a point cloud frame. The reconstructed geometry, determined by the decoder, may be the same as the reconstructed geometry determined by the encoder. Attribute predictors of attributes of the reconstructed geometry may be determined, for example, by the decoder. The decoder may determine the attribute predictors similarly as performed by the encoder. The decoder may determine the attribute predictors, for example, based on projecting attributes of a reference point cloud frame, for attributes, onto the reconstructed geometry. The attribute predictors may be reciprocally (e.g., independently and/or identically) determined by the encoder and the decoder. The attribute predictors may not be indicated in (e.g., encoded into or signaled in) the bitstream. The decoder may decode the attributes of the reconstructed geometry, for example, based on the attribute predictors. The decoder may receive/determine (e.g., decoded) attribute residuals from a bitstream. The attributes may be determined, for example, based on adding the attribute predictors to the attribute residuals.

The reference point cloud frame for attributes may be an already-coded reference frame. The already-coded reference frame may be a reference frame used to encode geometry information of the point cloud frame. Additionally or alternatively, the already-coded reference frame may be a different reference frame than the one used to encode the geometry of the point cloud frame. The reference point cloud frame for attributes may be a motion-compensated point cloud frame. The motion-compensated point cloud frame may be determined (e.g., generated), for example, based on the already-coded reference frame (e.g., as described herein with respect to FIG. 10). The attribute residuals may be further compressed (e.g., encoded and/or decoded) using an intra transform scheme (e.g., a pred-lift transform or a (intra) RAHT scheme).

As described herein, the decoded geometry of a point cloud frame may correspond to a reconstructed geometry of the point cloud frame. An encoder may determine the reconstructed geometry, for example, based on encoding a geometry of the point cloud frame and decoding the encoded geometry. The reconstructed geometry at the encoder may be the same as the geometry decoded at the decoder. The decoder may reconstruct the same reconstructed geometry as that at the encoder.

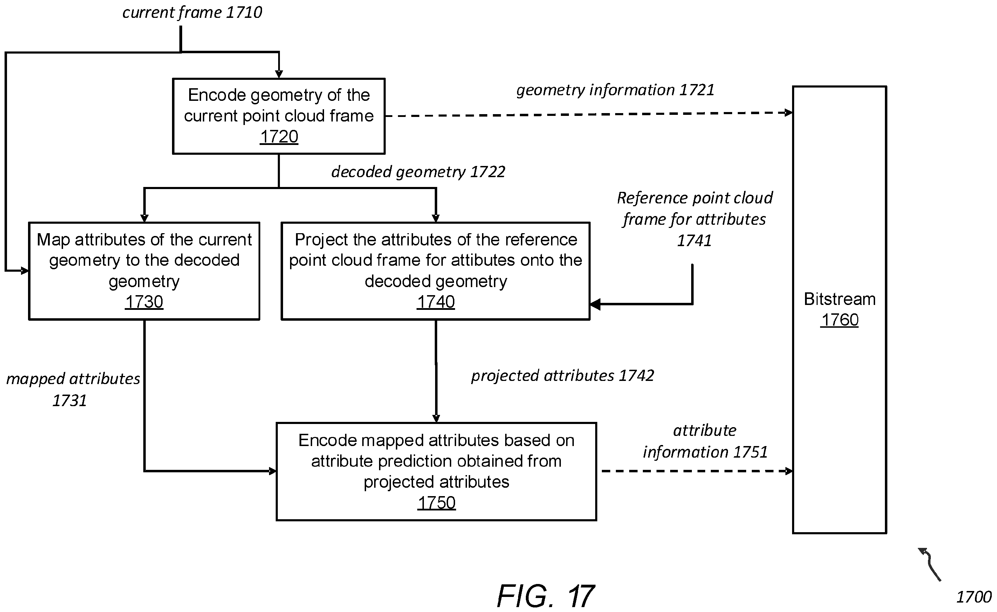

FIG. 17 shows an example method for encoding point cloud frames. Geometry and/or attributes of a current point cloud frame (e.g., current point cloud frame 1710) may be encoded. The current point cloud frame 1710 may be a frame of a sequence of point cloud frames (e.g., a dynamic point cloud). One or more steps of the example method of FIG. 17 (e.g., method 1700) may be performed and/or implemented by an encoder (e.g., encoder 114 of FIG. 1), an example computer system 2900 in FIG. 29, and/or an example computing device 3030 in FIG. 30. In some examples, steps 1720, 1730, 1740, and 1750 may represent components within the encoder. Steps (e.g., blocks) of the example method of FIG. 17 may be omitted, performed in other orders, and/or otherwise modified and/or one or more additional steps may be added.

At step 1720, an encoder (e.g., a geometry encoder) may encode geometry information 1721 of the current point cloud frame 1710. The encoded geometry information 1721 may be sent into a bitstream 1760. The encoder may determine a decoded geometry 1722 (e.g., reconstructed geometry) of the current point cloud frame. The encoder may determine the decoded geometry 1722, for example, based on decoding the encoded geometry information 1721. The decoded geometry 1722 and the geometry (e.g., original geometry) of the current point cloud frame 1710 may differ. The decoded geometry 1722 and the geometry (e.g., original geometry) may differ significantly, for example, if the geometry compression is lossy.

At step 1730, the encoder (e.g., an attributes determiner) may determine mapped attributes 1731 associated with the decoded geometry 1722 of the current point cloud frame. The encoder may determine the mapped attributes 1731, for example, by mapping the attributes associated with the geometry (e.g., original) of the current point cloud frame 1710 to the decoded geometry 1722 of the current point cloud frame.

Attributes may comprise colors. The mapped attributes may be determined, for example, based on recoloring the attributes. Mapped attributes may be determined, for example, based on a k nearest neighbor (KNN) search algorithm to determine nearest points from the geometry of the current point cloud frame 1710 to the decoded geometry 1722. The k nearest neighbor (KNN) search algorithm may include, for example, using a space partitioning algorithm such as a KD Tree search, a Ball/metric Tree search, a Brute force search, etc.). A mapped attribute of a point of the decoded geometry 1722 may be, for example, the average attribute values associated with the nearest points of the current point cloud frame 1710 relative to the point of the decoded geometry. The decoded geometry 1722 (e.g., reconstructed geometry) of the geometry of the current point cloud frame may be the same as the geometry (e.g., original geometry) of the current point cloud frame 1710, for example, if the geometry compression is lossless. The attribute mapping may associate attributes of each point of the geometry of the current point cloud frame to the same point of the decoded geometry 1722.

At step 1740, the encoder (e.g., an attributes projector) may determine projected attributes 1742, for example, by projecting the attributes of a reference point cloud frame for attributes 1741 onto the decoded geometry 1722. At step 1750, the encoder (e.g., an attributes encoder) may encode (e.g., generate) attribute information 1751 and send/signal the attribute information 1751 to/into the bitstream 1760. The attribute information 1751 may represent the mapped attributes 1731 associated with the decoded geometry 1722. The attribute information 1751 may be based on attribute prediction determined from the projected attributes 1742. Attribute prediction may comprise attribute predictors determined from the projected attributes 1742 as described herein.

The reference point cloud frame for attributes may be an already-coded reference point cloud frame. The already-coded reference point cloud frame may have been previously selected to encode geometry of the current point cloud frame (e.g., at step 1720). The already-coded reference point cloud frame for determining the project attributes 1742 may be different from the already-coded reference point cloud frame used at step 1720. The already-coded reference point cloud frame may be motion compensated, for example, by using a motion vector (MV) field. The already-coded reference point cloud frame and/or the MV field may be encoded in bitstream 1760.

The reference point cloud frame for attributes 1741 may be determined from the already-coded reference point cloud frame. The already-coded reference point cloud frame may be motion compensated by a MV field that may be encoded in bitstream 1760. The attributes of the already-coded reference point cloud frame may be moved together with the points such that the reference point cloud frame for attributes 1741 possesses attributes, for example, if motion compensation occurs.

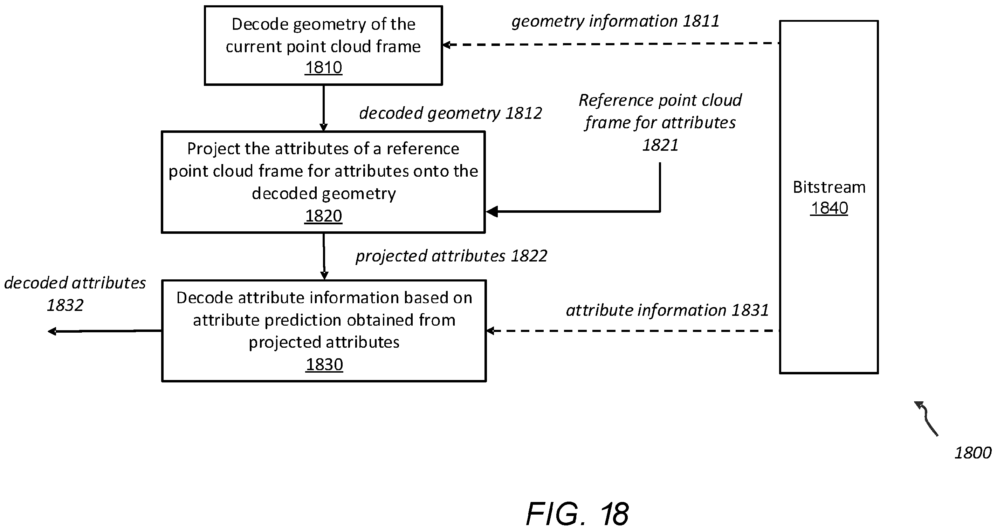

FIG. 18 shows an example method for decoding point cloud frames. Geometry and/or attributes of a current point cloud frame may be decoded. The current point cloud frame may be a frame of a sequence of point cloud frames (e.g., a dynamic point cloud). The current point cloud frame may be encoded as described herein with respect to FIG. 17. One or more steps of the example method of FIG. 18 (e.g., method 1800) may be performed and/or implemented by a decoder (e.g., decoder 120 of FIG. 1), an example computer system 2900 in FIG. 29, and/or an example computing device 3030 in FIG. 30. In some examples, steps 1810, 1820, and 1830 may represent components within the decoder. Steps (e.g., blocks) of the example method of FIG. 18 may be omitted, performed in other orders, and/or otherwise modified and/or one or more additional steps may be added.

At step 1810, the decoder (e.g., a geometry decoder) may provide (e.g., determine) decoded geometry 1812 (e.g., the reconstructed geometry at the encoder) of the current point cloud frame. The decoded geometry 1812 may be provided/determined by decoding geometry information 1811 from a bitstream 1840. The decoded geometry 1812 may be the decoded geometry 1722 as described herein with respect to FIG. 17.

At step 1820, the decoder (e.g., an attributes projector) may determine projected attributes 1822. The projected attributes may be determined, for example, by projecting the attributes of a reference point cloud frame for attributes 1821 onto the decoded geometry 1812. Projected attributes 1822 may be the same as the projected attributes 1742 as described herein with respect to FIG. 17. Similarly, the reference point cloud frame for attributes 1821 may be the same as the reference point cloud frame for attributes 1741 as described herein with respect to FIG. 17.

At step 1830, the decoder (e.g., an attributes decoder) may determine decoded attributes 1832 associated with the decoded geometry 1812. The decoded attributes 1832 may be determined, for example, by decoding attribute information 1831 from bitstream 1840 based on attribute prediction. The attribute prediction and/or the decoded attributes 1832 may be determined from the projected attributes 1822.

The reference point cloud frame for attributes 1821 may be an already-coded reference point cloud frame. The already-coded reference point cloud frame may have been previously determined to decode geometry of the current point cloud frame at step 1810. A motion vector, indicating the already-coded reference point cloud frame, may be decoded from geometry information 1811. The already-coded reference point cloud frame for determining the project attributes 1822 may be either the same or different from the already-coded reference point cloud frame used at step 1810. The already-coded reference point cloud frame may be motion compensated, for example, by using a MV field. The already-coded reference point cloud frame and/or the MV field may be decoded from bitstream 1840.

The reference point cloud frame for attributes 1821 may be a motion compensated point cloud frame determined from the already-coded reference point cloud frame. The motion compensated point cloud frame may be motion compensated by a MV field. The MV field may be decoded from the bitstream 1840. The attributes of the already-coded reference point cloud frame may be moved together with the points such that the reference point cloud frame for attributes 1821 may possess attributes, for example, if motion compensation occurs. The reference point cloud frame for attributes 1821 may be the same as (or different from) the reference point cloud frame for attributes 1741 as described herein with respect to FIG. 17.

Projected attributes 1742, projected attributes 1822, mapped attributes 1731, and/or decoded attributes 1832, may belong to the same decoded geometry 1722 (and/or decoded geometry 1812). Attribute predictors for mapped attributes 1731 (e.g., corresponding to the current frame 1710) may be determined from the projected attributes 1742 and/or projected attributes 1822. Attribute predictors for mapped attributes 1731 (e.g., corresponding to the current frame 1710) may be determined from the projected attributes 1742 and/or projected attributes 1822 in a similar manner as described herein with respect to steps 1750 and 1830. Determining attribute prediction (e.g., attribute predictors) from projected attributes may be performed reciprocally (e.g., independently and/or identically) at the encoder and decoder. This may result in reducing the size of the compressed attribute information 1751 in bitstream 1760, (and/or reducing the size of the compressed attribute information 1831 in bitstream 1840).

Attribute predictors (e.g., residual attribute predictors if an intra transform is used for (e.g., applied to) residual attributes) may be determined based on a pred-lift scheme (e.g., as described herein with respect to FIG. 11 and/or FIG. 13). The attribute predictors may be determined, for example, based on predicting attributes $a^i$ of the set $S^i$ of points from attributes $a^0, ..., a^{i-1}$ of the lower level of details $S^0 \cup ... \cup S^{i-1}$ and/or from the projected attributes 1742. It is appreciated that the inputs $a^i$ may represent residual attributes. The inputs $a^i$ may or may not represent attribute values.

Attribute predictors may be determined based on the pred-lift schemes (e.g., as described herein with respect to FIG. 12 and/or FIG. 14). Attributes $a^i$ of the set $S^i$ of points may be predicted, for example, from attributes $a^0, ..., a^{i-1}$ of the lower level of details $S^0 \cup ... \cup S^{i-1}$ and/or from the projected attributes 1822. Attribute prediction may be determined, for example, from projected attributes 1742 (and/or projected attributes 1822). The attribute prediction may be based on (e.g., use) an inter RAHT scheme. The RATH scheme may use the same octree partitioning for mapped attributes 1731, decoded attributes 1832, projected attributes 1742, and/or projected attributes 1822. A same octree partitioning may be use, for example, if the mapped attributes and projected attributes are both associated with a same decoded geometry 1722 (and/or decoded geometry 1812).

Each DC and/or AC coefficient determined as output of the inter RAHT scheme applied on mapped attributes 1731 may be predicted by the co-located DC and/or AC coefficients obtained as output of the inter RAHT scheme applied on the projected attributes 1742. Each DC and/or AC coefficient determined as output of the inter RAHT scheme applied on decoded attributes 1832 may be predicted by the co-located DC and/or AC coefficients obtained as output of the inter RAHT scheme applied on the projected attributes 1822. The problem of the sensitivity of the inter RAHT schema to geometry differences between the current point cloud and the motion compensated point cloud may be solved, for example, if the mapped, projected, and/or decoded attributes are associated with a same decoded geometry 1722 (and/or a same decoded geometry 1812).

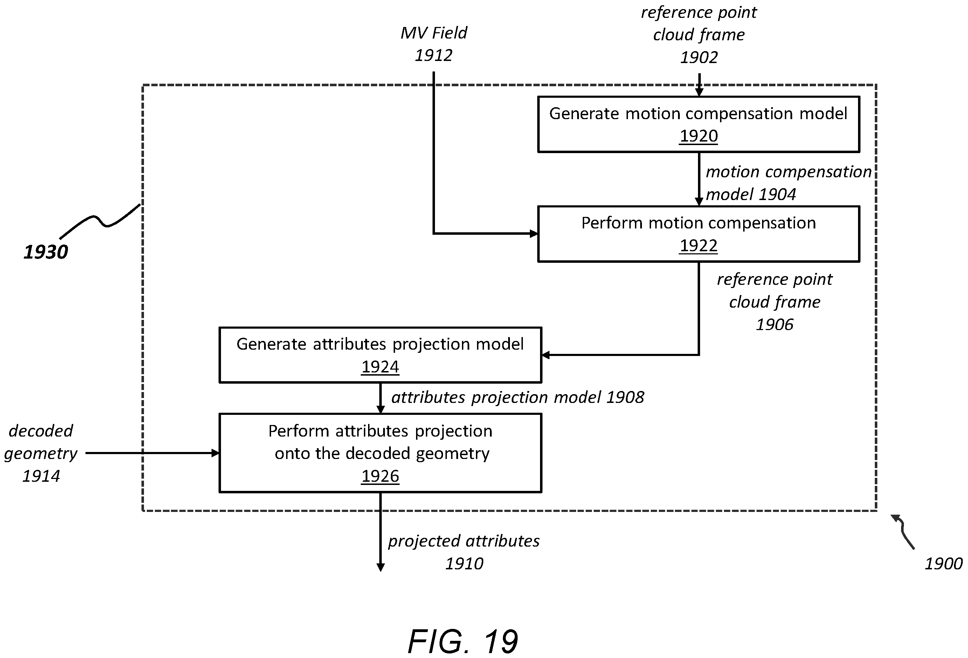

FIG. 19 shows an example method for obtaining projected attributes. More specifically, FIG. 19 shows an example process 1900 of a method for projecting attributes from a reference point cloud frame 1902 to obtain projected attributes (e.g., attribute predictors) 1910 associated with attributes of decoded geometry 1914. Projected attributes 1910 may be used as attribute predictors for attributes of points in decoded geometry 1914. The points may correspond to a current point cloud frame to be coded (e.g., encoded and/or decoded). One or more steps of the example method may be performed and/or implemented by an encoder (e.g., encoder 114 of FIG. 1) and/or a decoder (e.g., decoder 120 of FIG. 1). The example method may be performed identically at both the encoder and the decoder to generate the same projected attributes 1910. The operations (e.g., steps) of FIG. 19 may be performed separately by the encoder and the decoder. The example method may correspond to step 1740 of FIG. 17 and/or to step 1820 of FIG. 18. The example method may provide additional details for how attribute projection (or attributes projection) is performed. The decoded geometry 1914 may correspond to the decoded geometry 1722 of FIG. 17 and/or the decoded geometry 1812 of FIG. 18. The reference point cloud frame 1902 may correspond to the reference point cloud frame for attributes 1741 of FIG. 17 and/or the reference point cloud frame for attributes 1821 of FIG. 18. The projected attributes 1910 may correspond to the projected attributes 1742 of FIG. 17 and/or the projected attributes 1822 of FIG. 18. Steps (e.g., blocks) of the example method of FIG. 19 may be omitted, performed in other orders, and/or otherwise modified and/or one or more additional steps may be added.

The example method for obtaining projected attributes may include performing motion compensation. For example, the method for obtaining projected attributes of reference point cloud frame 1902 onto decoded geometry 1914 of a current point cloud frame may include, for example, performing motion compensation on the reference point cloud frame 1902 to generate a reference point cloud frame 1906. The reference point cloud frame 1906 may be referred to as a motion-compensated reference point cloud frame. The reference point cloud frame 1906 may correspond to the reference point cloud frame for attributes 1741 of FIG. 17 and/or the reference point cloud frame for attributes 1821 of FIG. 18.

Block 1930 shows operations (e.g., steps) of the example method for obtaining projected attributes (or of projecting attributes). For example, block 1930 may include steps 1920 and 1922 related to determining a reference point cloud frame 1906. The reference point cloud frame 1906 may correspond to motion compensating the reference point cloud frame 1902 using MV field 1912. Block 1930 may further include steps 1924 and 1926 related to projecting attributes of points of the reference point cloud frame 1906 onto points of the decoded geometry 1914. Block 1930 may correspond to step 1740 of FIG. 17 and/or step 1820 of FIG. 18.

Block 1930 may include steps 1924 and 1926. Reference point cloud frame 1906 may represent and correspond to reference point cloud frame for attributes 1741 of FIG. 17 and/or reference point cloud frame for attributes 1821 of FIG.

18.

At step 1920, a motion compensation model 1904 may be generated. A motion compensation model 1904 may be generated, for example, based on a reference point cloud frame 1902. The reference point cloud frame 1902 may be a decoded point cloud frame. For example, the reference point cloud frame 1902 may be a previously/already decoded point cloud frame in the decoding order of a sequence of point cloud frames. The motion compensation model 1904 may enable processing of computing motion compensation, for example, at a faster speed. For example, the motion compensation model 1904 may include a data structure used to enable faster processing of computing motion compensation. For example, the data structure may be used to quickly determine (e.g., find or obtain position information of) the points of the reference point cloud frame 1902 to be motion compensated.

At step 1922, motion compensation may be performed. Motion compensation may be performed, for example, by applying/using MV field 1912 on points of the reference point cloud frame 1902. The MV field 1912 may be applied/used on points of the reference point cloud frame 1902, for example, as determined or selected by motion compensation model 1904. In some examples, MV field 1912 may be part of geometry information associated with a current frame (e.g., current frame 1710). The geometry information may be, for example, geometry information 1721 and geometry information 1811. For example, at the decoder, MV field 1912 may be received in geometry information 1811 decoded from bitstream 1840. For example, at the encoder, MV field 1912 may be determined. MV field 1912 may be determined, for example, based on a motion search performed between the decoded geometry 1914 of the current frame and geometry of reference point cloud frame 1902, as described herein with respect to FIG. 10.

The MV field 1912, determined or received for coding attributes information of decoded geometry 1914, may be the same as the MV field used to code decoded geometry 1914. For example, step 1920 and step 1922 may be part of step 1030 of FIG. 10. At step 1030 of FIG. 10, the motion compensate reference frame may be determined in the encoder. For example, step 1920 and step 1922 may be part of an equivalent step in the decoder. The reference point cloud frame 1906 may correspond to (e.g., be equivalent to) the motion compensated frame 1031 and may include the attributes associated with the motion compensated points of motion compensated frame 1031.

An MV field used to code attributes information may be different from an MV field used to code decoded geometry. For example, MV field 1912 used to code the attributes information may be different from that used to code decoded geometry 1914. An already-coded point cloud frame for predicting attributes information of decoded geometry 1914 may be selected, for example, by determining (e.g., independently) an MV field 1912 for attributes. The already-coded point cloud frame may be suitable for predicting (e.g., may best predict) attributes information of decoded geometry 1914, for example, by reducing attributes residuals. The MV field 1912 used in step 1922 may be different from the MV field (motion vectors) used in step 1030. The reference cloud frame 1906 and motion compensated frame 1031 may be different. The reference cloud frame 1906 may include the attributes associated with the motion compensated points. The motion compensated frame 1031 may not include the attributes associated with the motion compensated points.

The motion compensation at step 1922 may be performed for sub-volumes (e.g., cuboids) of a volume containing reference point cloud frame 1902. The points contained in a cuboid of the reference point cloud frame 1902 may be moved (e.g., translated), for example, based on a motion vector of MV field 1912. The points contained in a cuboid of the reference point cloud frame 1902 may be all moved (e.g., translated), for example, based on (e.g., according to) a motion vector of MV field 1912. The points contained in a cuboid of the reference point cloud frame 1902 may be moved (e.g., translated), for example, to obtain points within a corresponding cuboid in reference point cloud frame 1906. MV field 1912 may represent and/or include a set of motion vectors. The set of motion vectors may be for a set of cuboids within reference point cloud frame 1902. The set of motion vectors may correspond to a set of cuboids in the motion compensated reference point cloud frame 1906. The set of cuboids may correspond to occupied cuboids (e.g., containing at least one point) at a certain depth within the occupancy tree of reference point cloud frame 1902. In some examples, the set of cuboids may correspond to occupied cuboids (e.g., containing at least one point) at a certain depth within the occupancy tree of decoded geometry 1914.

Motion compensation model 1904 may enable motion compensation computation for cuboid volumes of reference point cloud frame 1902. Motion compensation model 1904 may include, for example, a tree data structure (e.g., an octree) to enable motion compensation computation for cuboid volumes of reference point cloud frame 1902. Efficient motion compensation computation for cuboid volumes of reference point cloud frame 1902 may be realized, for example, by using the tree data structure. Each node in the tree data structure may correspond to an occupied cuboid within reference point cloud frame 1902 and/or may be associated with all the points of the reference point frame 1902 belonging to that occupied cuboid. The motion compensation model 1904 may correspond to an occupancy tree (e.g., the occupancy tree as described with respect to FIG. 3). The occupancy tree may be built, for example, if encoding/decoding of a preceding frame occurs. The preceding frame may be used as the reference point cloud frame 1902 for encoding/decoding the current point cloud frame.

The tree data structure may be used to determine (e.g., find, select) and extract points belonging to the reference point cloud frame 1902 that are contained within a cuboid region. The tree data structure may be used to (e.g., quickly) determine (e.g., find, select) and extract all the points belonging to the reference point cloud frame 1902 that are contained within a cuboid region. Positions of these points may be moved (e.g., translated), for example, to determine corresponding positions of points in a cuboid belonging to the motion compensated reference point cloud frame 1906. Positions of these points may be moved (e.g., translated), for example, by applying/using corresponding motion vectors in MV field 1912.

Motion compensation at step 1922 may be performed for each cuboid region (e.g., per occupied cuboid, or for each set of cuboids, etc.) of the reference point cloud frame 1906. Motion compensation at step 1922 may be iteratively performed (or repeated) for each cuboid region of the reference point cloud frame 1906. Motion compensation at step 1922 may be performed (e.g., iteratively performed) for each cuboid region, for example, by obtaining a motion vector (e.g., from the MV field 1912) correspond to each cuboid region.

Steps 1920 and 1922 may be part of the method to encode geometry of the current point cloud frame at step 1720, with the reference point cloud frame 1902 being used for the encoding of the decoded geometry 1914. Steps 1920 and 1922 may be part of the method to decode geometry of the current point cloud frame at step 1810, with the reference point cloud frame 1902 being used for the decoding of the decoded geometry 1914.

At step 1924, an attribute projection model (or attributes projection model) may be generated. For example, an attribute projection model 1908 may be generated (e.g., built or configured) from the reference point cloud frame 1906. At step 1926, attribute projection may be performed onto a decoded geometry. For example, attribute projection of the reference point cloud frame 1906 may be performed onto the decoded geometry 1914. The attribute projection of the reference point cloud frame 1906 onto the decoded geometry 1914 may be performed, for example, by using the attribute projection model 1908. As points of reference point cloud frame 1906 may represent motion compensated points of reference point cloud frame 1902, points of reference point cloud frame 1906 may correspond to points of reference point cloud frame 1902. The result of the attribute projection at step 1926 may be a form of projection of attributes of reference point cloud frame 1902 onto the decoded geometry 1914, for example, after applying/using MV field 1912.

The attribute projection model 1908 may be a data structure used to perform (e.g., efficiently perform) attribute projection onto a specific position of a point. For example, the data structure may be a spatial-partitioning data structure such as a tree data structure (e.g., a k-d tree or an octree). The data structure may be used to search for one or more points belonging to the reference point cloud frame. The one or more points may be a set of points. The one or more points may comprise specific positions. For example, the one or more points may comprise positions in the neighborhood of a particular point from a decoded geometry. For example, the data structure may be used to search for a set of one or more points $N_{pts}$, belonging to the reference point cloud frame 1906 (corresponding to motion compensated points of reference point cloud frame 1902), with positions in the neighborhood of a particular point p from the decoded geometry. One or more points (e. g., a set of points) may be determined to be within a neighborhood of a point, for example, based on distances of the points from the point. One or more points may be determined to be within a neighborhood of a point, for example, based on distances of the points from the point being within (or less than, no more than, below, etc.) a threshold value. For example, the set of points $N_{pts}$ may be determined to be within the neighborhood for point p based on distances of the set of points $N_{pts}$ from the point p being within or less than a threshold value. The threshold value may be a predetermined value or may be computed by the encoder and signaled to the decoder in the bitstream. In some other examples, the set of points $N_{pts}$ may be determined as a number (or quantity) of points with positions that are closest to the point p. The number may be a predetermined quantity or may be computed by the encoder and signaled to the decoder in the bitstream. Various types of distances may be used. For example, the distance may be a Manhattan distance (i.e., L1 norm), an Euclidean distance (i.e., L2 norm), a Chebyshev distance (i.e., L-infinity or $L\infty$ norm), or a Minkowski difference.

At step 1926, values of projected attributes for a point may be determined. Values of projected attributes for a point may be determined, for example, based on values of attributes associated with each point of a set of points as described herein. The attribute values associated with each point within the set of points $N_{pts}$ may be used at step 1926 for determining projected attribute values for the point p. The projected attribute values may be attribute predictors of attributes for the point p. A value of each attribute of a point may be predicted or projected, for example, based on values of corresponding attributes (with the same type as the each attribute) of a set of one or more points. For example, a value of each attribute of point p may be predicted or projected based on values of corresponding attributes (with the same type as the each attribute) of the set of one or more points $N_{pts}$.

A projected attribute (e.g., attribute predictor) for a point may be determined as an average of attribute values of a set of one or more points. A projected attribute (e.g., attribute predictor) for a point may be determined as an average of attribute values of a set of one or more points, for example, weighted by respective distance between the set of one or more points and the point. For example, a projected attribute (e.g., attribute predictor) for the point p may be determined as an average of the attribute values, of the set of one or more points $N_{pts}$, weighted by respective distance between the points $N_{pts}$ and the point p. The distance may be a Manhattan distance (i.e., L 1 norm), an Euclidean distance (i.e., L2 norm), a Chebyshev distance (i.e., L-infinity or $L\infty$ norm), or a Minkowski difference.

Projected attributes representing attribute predictors for a point (e.g., a first point) may be determined to be corresponding values of attributes of another point from a reference point cloud frame (e.g., a second point) closest to the point (e.g., the first point). For example, the projected attributes representing the attribute predictors for the point p may be determined to be the corresponding values of the attributes of the point from the reference point cloud frame 1906 closest to the point p. Improvements such as faster projection may be generated, for example, because only one point is searched and selected from the reference point cloud frame to determine attribute predictors for a point (e.g., point p) from a decoded geometry.

In some examples, the MV field 1912 may not be used to transform reference point cloud frame 1902. For example, all motion vectors in the MV field 1912 may be set to zero. In these examples, the motion compensation model 1904 may be omitted and reference point cloud frame 1906 may be set to be the same as reference point cloud frame 1902.

In at least some technologies, as described herein with respect to FIGS. 18-20, attributes of a reference point cloud frame may be used (e.g., directly) in the projection of reference attributes onto the geometry of a decoded geometry (e.g., reconstructed geometry) of a current point cloud frame, for example, to determine projected attributes representing attribute predictors of the attributes of the decoded geometry. The attributes of a reference point cloud frame may comprise attributes of points of geometry of the reference point cloud frame. This direct projection may be simple and may have lower computational complexity than motion compensating the reference point cloud frame. Motion may be applied to (e.g., used for) motion compensating the reference point cloud frame, for example, as part of the projection to determine attribute predictors, as described herein with respect to FIG. 19. The motion compensation performed on the reference point cloud frame may introduce discontinuities in the motion-compensated reference point cloud. Attributes of selected points from the motion-compensated reference point cloud may be used to determine attribute predictors of points in the decoded geometry. These discontinuities may be introduced on the boundaries of prediction units within the motion compensated point cloud frame. The prediction units may be, for example, prediction volumes within which the same motion parameters of the MV field are applied/used. The discontinuities of geometry of the motion compensated point cloud frame may lead to discontinuities of values of the attributes from which attribute predictors are determined. Projection of attributes of the reference point cloud frame based on motion compensating the reference point cloud frame may lead to inconsistent and/or poor attribute projection (e.g., attribute prediction), and may also result in less efficient compression of attribute values of the decoded/reconstructed geometry of the current point cloud frame.

As described herein with respect to FIG. 19, projecting attributes from the motion compensated point cloud frame may require generation of an attribute projection model 1908 (e.g., using an octree or a k-d tree) to accelerate the search of a neighborhood of points in the motion-compensated point cloud frame. The attribute projection/prediction may be performed, for example, based on the neighborhood of points. Though the use of this data structure may reduce the overall complexity of performing the projection of the attributes, the generation of attribute projection model 1908 may require additional memory to store the data structure.

Examples described herein may provide solutions for improving compression of attributes of point clouds by improving the quality of attribute projection. Motion compensation may be part of projecting attributes of a reference point cloud frame onto a decoded geometry (e.g., reconstructed geometry) of a current point cloud frame. Motion compensation may be performed on the points of the decoded geometry to determine second reference points. Attributes of the reference point cloud frame may be configured to be projected on the second reference points. The second reference points may represent motion-compensated points of the decoded geometry of the current point cloud frame. The second reference points may have a one-to-one correspondence with the points of the decoded geometry. The projected attributes may be associated with the original positions of the points of the decoded geometry. The original positions may be, for example, positions before motion compensation. The projected attributes may be associated with the original positions of the points of the decoded geometry. The projected attributes may be associated with the original positions of the points of the decoded geometry, for example, by transforming (e.g., translating) points of the decoded geometry into the same time frame of points of the geometry of the reference point cloud frame.

The points of the reference point cloud frames may not have discontinuity of geometry and attribute values. The points of the reference point cloud frames may not have discontinuity of geometry and attribute values, for example, due to motion compensation being applied to (e.g., used for) the decoded geometry. A set of one or more points may be configured to be selected from the points of the reference point cloud frames. A set of one or more points may be configured to be selected from the points of the reference point cloud frames, for example, to determine attribute predictors for each point of the decoded geometry. A neighborhood of points may be selected for the motion-compensated points of the decoded geometry. The neighborhood of points selected from the reference point cloud frame may be more accurate than a neighborhood of points obtained (e.g., by searching) from a motion-compensated reference point cloud frame. A neighborhood of points having an increased accuracy may increase the accuracy of attribute prediction, for example, based on the projected attributes. A neighborhood of points having an increased accuracy may increase compression of attribute values, for example, by reducing attribute residuals.

An entire reference point cloud frame may need to be motion compensated. An entire reference point cloud frame may need to be motion compensated, for example, before performing attribute projection. An entire reference point cloud frame may need to be motion compensated, for example, if a neighborhood of points for a point of a decoded geometry is to be selected from the motion-compensated reference point cloud frame. Examples described herein may select the neighborhood of points from the reference point cloud frame. Points of the reference point cloud frame that are in a neighborhood for each point of the decode geometry may be selected. Points of the reference point cloud frame that are in

EP 4 586 196 A1

a neighborhood for each point of the decode geometry may be selected, for example, after each point is adjusted by a motion vector as part of motion compensation. Attribute projection in the examples may be performed point-by-point for each point of the decoded geometry. There may be no need to first generate a motion-compensated point cloud frame for the decoded geometry of the current point cloud frame. Improvements such as reduced memory, lower power consumption and runtime for maintaining and using memory, etc. may be achieved.

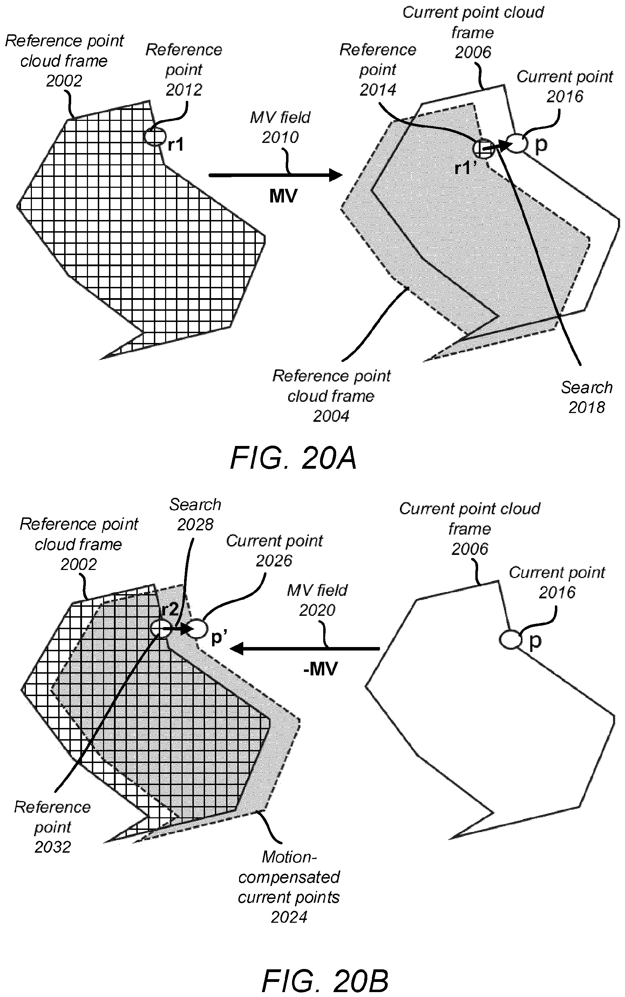

FIG. 20A and FIG. 20B show examples of different approaches of projecting attributes. More specifically, FIG. 20A and FIG. 20B show examples of different approaches of projecting attributes of a reference point cloud frame 2002 onto a current point cloud frame 2006 to determine attribute predictors for points such as a current point 2016 of a geometry of the current point cloud frame 2006. The attribute projection may be performed (e.g., identically) at the encoder and/or the decoder to generate attribute predictors for attributes of the decoded geometry of the current point cloud frame 2006.

FIG. 20A shows an example of projecting attributes of a reference point cloud frame based on motion compensating a reference point cloud frame. More specifically, FIG. 20A shows an example of projecting attributes of a reference point cloud frame 2002 based on motion compensating the reference point cloud frame 2002 by MV field 2010 to generate a reference point cloud frame 2004. MV field 2010 may include a set of motion vectors including a motion vector (MV) used to move (e.g., translate) a reference point 2012 (r1) to a reference point 2014 (r1') in the reference point cloud frame 2004, as described herein with respect to FIG. 19. A set of one or more points, which may include the reference point 2014, in a neighborhood of a current point 2016, may be selected in a search 2018. Attribute values (or values of attributes) of the selected set of one or more points may be used to generate attribute predictors for coding the current point 2016. As described herein, discontinuities of the geometry of the reference point cloud frame 2004 may be introduced, for example, due to MV field 2010. MV field 2010 may not provide a granular translation of points. For example, MV field 2010 may include one MV applied to (e.g., used for, associated with) the reference point cloud frame 2002 or an MV determined for a set of cuboids or per cuboid of the reference point cloud frame 2002, but not per point of the reference point cloud frame 2002, for example, due to high complexity. The entirety of the reference point cloud frame 2004 may need to be generated and maintained, for example, before search 2018 for each point of the current point cloud frame 2006 may be performed. The entirety of the reference point cloud frame 2004 may need to be generated and maintained before search 2018 for each point of the current point cloud frame 2006 may be performed, for example, because search 2018 is performed on points of the reference point cloud frame 2004.

FIG. 20B shows an example of projecting attributes of a reference point cloud frame based on motion compensating points of a current point cloud frame. More specifically, FIG. 20B shows an example of projecting attributes of a reference point cloud frame 2002 based on motion compensating points of a current point cloud frame 2006 by MV field 2020 (-MV) to result in motion-compensated current points 2024. MV field 2020 may be an inverse of MV field 2010. MV field 2020 may include a motion vector (-MV) that is the inverse (e.g., having an opposite sign) as that in MV field 2010.

A current point may be moved (e.g., translated) by a motion vector (-MV) of an MV field to determine a motion-compensated position for the current point. For example, a current point 2016 may be moved (e.g., translated) by a motion vector (-MV) of an MV field 2020 to determine a motion-compensated position for the current point 2016 and shown as a current point 2026 (p') in FIG. 20B. A search may be performed to select a set of one or more points in a neighborhood of the current point, for example, to determine attribute predictors for attribute values of the current point. Attribute predictors for attribute values of the current point may be determined, for example, if attribute projection of a reference point cloud frame is performed. A search 2028 may be performed to select a set of points, including a reference point 2032 (r2), in a neighborhood of the current point 2026 to determine attribute predictors for attribute values of the current point 2026, for example, if attribute projection of a reference point cloud frame 2002 is performed. The current point 2026 may correspond to the current point 2016. The one or more selected points may be more accurate for predicting attributes of the current point 2016, for example, because positions of reference points of the reference point cloud frame 2002 may be maintained. For example, the reference point 2032 (r2) may not be (e.g., is likely not) the same as the reference point 2012 (r1).

The motion-compensated current point 2024 may be shown to graphically represent the adjustments to the positions of points in the geometry of the current point cloud frame 2006 as part of the attribute projection. An entirety of motion-compensated current points may not need to be generated and maintained in a memory as a motion-compensated current frame corresponding to the current point cloud frame, for example, because attribute predictors are determined per point in the current point cloud frame 2006. The attribute projection (e.g., as shown in FIG. 20B) may achieve advantages such as increased accuracy and less memory usage.

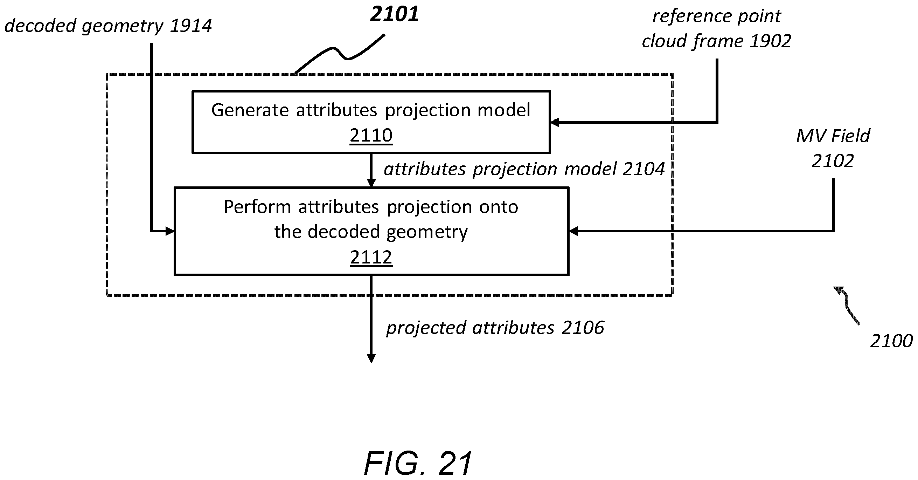

FIG. 21 shows an example method for obtaining projected attributes. More specifically, FIG. 21 shows an example process 2100 of a method for projecting the attributes of the reference point cloud frame 1902 onto decoded geometry 1914, for example, by applying/using motion compensation onto the points of the decoded geometry 1914 to obtain the projected attributes 2106. Block 2101 shows example operations (e.g., steps) of the example method of projecting attributes. Block 2101 may include steps 2110 and 2112. One or more steps of the example method may be performed and/or implemented by an encoder (e.g., encoder 114 of FIG. 1) and/or a decoder (e.g., decoder 120 of FIG. 1). For example, block 2101 may be performed identically at the encoder and the decoder to determine the same projected attributes as attributes predictors for attribute values of points in the decoded geometry 1914. Block 2101 may correspond to step 1740 of FIG. 17 and step 1820 of FIG. 18. Steps (e.g., blocks) of the example method of FIG. 21 may be omitted, performed in other orders, and/or otherwise modified and/or one or more additional steps may be added.

At step 2110, an attribute projection model may be generated. An attribute projection model 2104 may be generated (e.g., built or configured), for example, based on the reference point cloud frame 1902. Attribute projection model 2104 may be generated in a similar way as generating the attribute projection model 1908 as described herein, with a following difference: The attribute projection model 2104 is generated for searching points within the reference point cloud frame 1902 (e.g., directly), rather than searching points within the reference point cloud frame 1906 representing a motion compensated reference point cloud frame 1902.

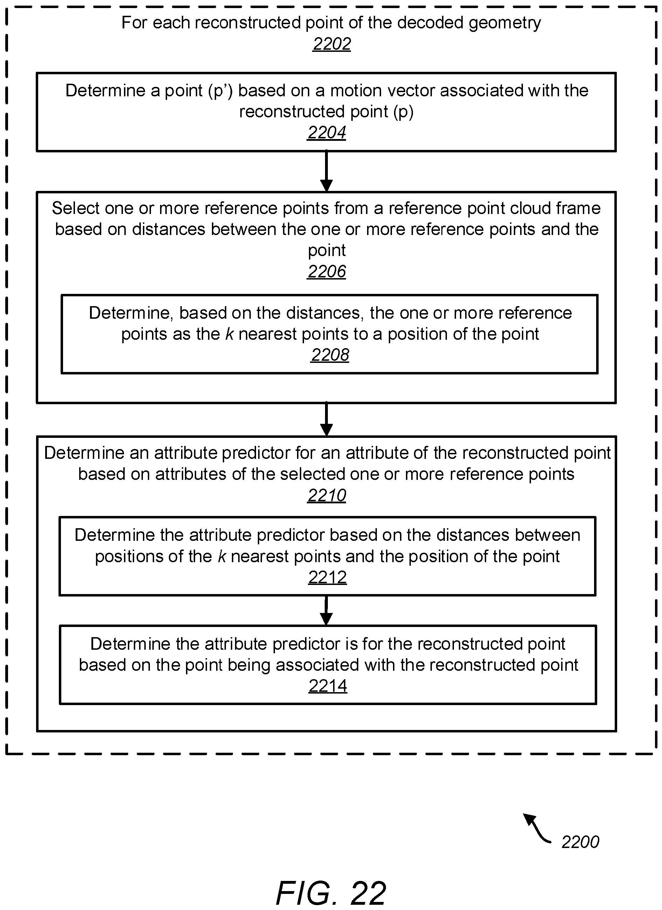

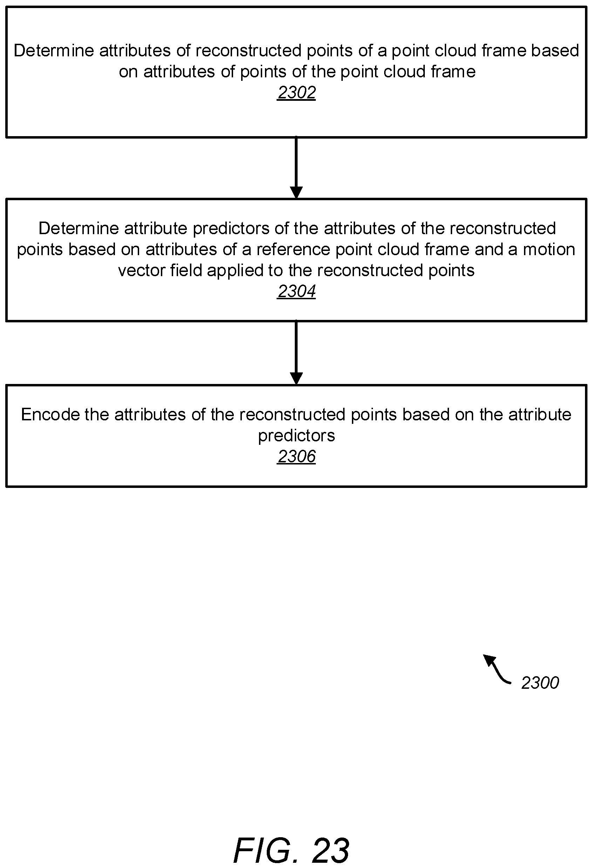

At step 2112, attribute projection (or attributes projection) may be performed onto decoded geometry. Attribute projection may be performed from reference point cloud frame 1902 onto decoded geometry 1914, for example, based on applying/using motion vector (MV) field 2102, as described herein with respect to FIG. 20B and further described herein with respect to FIG. 22 and FIG. 23.

MV field 2102 may include one or more motion vectors (MVs) applied to (or used for/on) points of decoded geometry 1914. MV field 2102 may include one motion vector applied to (e.g., used for) all points of decoded geometry 1914. MV field 2102 may include a set of (or a plurality of) motion vectors applied to (e.g., used for) respective sets of (or a plurality of) cuboids spatially partitioning a volume containing decode geometry 1914. For example, the cuboids may be indicated by an occupancy tree and may represent sub-volumes of the volume containing one or more points of decode geometry 1914. The same motion vector may be applied to (e.g., used for) points within a set of cuboids. Alternatively, the MV field 2102 may include a set of motion vectors applied to (e.g., used for) a plurality of respective cuboids spatially partitioning the volume. A motion vector may be (e.g., independently) applied to (e.g., used for) each cuboid.

The attribute projection model 2104 may be the same as the motion compensation model. No additional computation may be required to generate the attribute projection model. For example, the same data structure, such as an octree, may be used for performing both motion compensation and attribute projection onto the decoded geometry 1914. The motion compensation may be, for example, as described herein with respect to step 1030 of FIG. 10 which may be included in step 1720 of FIG. 17 and in step 1810 of FIG. 18. Additionally, compared to using the attribute projection model 1908 generated from the reference point cloud frame 1906 in FIG. 19, memory requirements may be reduced, for example, because a single model may be used for both motion compensation and attribute projection. Memory requirements may be further reduced, for example, because attributes may not need to be stored within the motion compensated frame 1031 for attribute projection.

FIG. 22 shows an example method for obtaining projected attributes. More specifically, FIG. 22 shows a flowchart 2200 of an example method for performing attribute projection from a reference point cloud frame (e.g., reference point cloud frame 1902 of FIG. 21) to a decoded geometry of a current point cloud frame (e.g., decoded geometry 1914 of FIG. 21), for example, based on applying/using an MV field (e.g., MV field 2102 of FIG. 21) to/for/on reconstructed/decoded points of the decoded geometry. FIG. 22 may provide an example implementation of block 2101 of FIG. 21. One or more steps of the example method may be performed and/or implemented by an encoder (e.g., encoder 114 of FIG. 1) and/or a decoder (e.g., decoder 120 of FIG. 1). Operations (e.g., steps) of the example method may be performed similarly at the encoder and the decoder. Steps (e.g., blocks) of the example method may be omitted, performed in other orders, and/or otherwise modified and/or one or more additional steps may be added.

At block 2202, operations (e.g., steps) of the example method may be performed (e.g., applied) iteratively for each reconstructed point (e.g., point p) of the decoded geometry of the current point cloud frame. For example, block 2202 may include steps 2204-2214. At step 2204, a point (e.g., point p') may be determined. The point (e.g., point p') may be determined, for example, based on a motion vector associated with the reconstructed point (e.g., point p). The motion vector may be obtained from the MV field (e.g., MV field 2102) and may be associated with the reconstructed point. The motion vector may be associated with all the reconstructed points. The motion vector may be associated with a set of cuboids spatially partitioning a volume. The volume may contain the decoded geometry and the reconstructed point. The motion vector may be associated with a specific cuboid, of the set of cuboids, that contains the reconstructed point.

The reconstructed point (e.g., point p) may be moved (e.g., translated), for example, based on the motion vector, to determine the point (e.g., point p'). A position of the reconstructed point (e.g., point p) may be converted to be in the same time frame as points in the reference point cloud frame. A position of the reconstructed point (e.g., point p) may be converted to be in the same time frame as points in the reference point cloud frame, for example, by using/applying the motion vector. The conversion may result in a motion compensated point (e.g., point p'). The point (e.g., point p') may correspond to the position of the reconstructed point (e.g., point p) within the time frame of the reference point cloud frame. The MV field may contain motion vectors representing (e.g., corresponding to) a displacement (or movement, translation) from reference points of the reference point cloud frame towards/to the reconstructed points of the decoded geometry (e.g., decoded geometry 1914). An inverse motion (or inverse of a motion vector) may be applied to (e.g., used for) a reconstructed point to obtain its motion compensated point (or position). For example, the point p may obtain its motion compensated point (or position) p', for example, based on applying/using an inverse of the motion vector mv obtained for the reconstructed point p. For example, the point p' may be obtained based on the following equation: $p' = p + (-mv)$. In some other examples, the MV field may contain motion vectors representing (e.g., corresponding to) the displacement (or movement, translation) from the reconstructed points of decoded geometry (e.g., decoded geometry) 1914 towards/to the reference points of the reference point cloud frame (e.g., reference point cloud frame 1902). In these examples, the motion vector may be (e.g., directly) applied/used to/for a reconstructed point, for example, to obtain its motion compensated point (or position). The motion compensated point or position p' may be obtained, for example, based on the reconstructed point p and the motion vector mv. For example, the point p' may be obtained based on the following equation: p' = p + mv.

At step 2206, one or more reference points (e.g., reference points $N_{pts}$) from a reference point cloud frame may be determined (e.g., selected). The one or more reference points (e.g., reference points $N_{pts}$) from a reference point cloud frame may be determined (e.g., selected), for example, based on distances between the one or more reference points and the point (e.g., point p'). The distance may be, for example, a Manhattan distance, a Euclidean distance, or a Minkowski distance. Step 2206 may include a substep 2208.

At substep 2208, the one or more reference points (e.g., reference points $N_{pts}$) may be determined, for example, based on shortest distances between the one or more reference points and the point (e.g., point p'). The one or more reference points (e.g., reference points $N_{pts}$) may be determined, for example, as the nearest points (e.g., $k$ nearest points) to a position of the point (e.g., point p'). An attribute projection model (e.g., attribute projection model 2104) may be used for determining the one or more reference points (e.g., reference points $N_{pts}$). An attribute projection model (e.g., attribute projection model 2104) may be used for determining (e.g., searching for) the neighboring points (e.g., k neighboring points) of the point (e.g., point p'). The point (e.g., point p') is in the same time frame as the reference point cloud frame.

The nearest (or neighboring) points (e.g., k nearest points) of a point (e.g., point p') may be determined, for example, using a spatial (or space) partitioning data structure. For example, a search (e.g., a k-nearest neighbor search) may be performed to determine the nearest points (e.g., k nearest points) of the point (e.g., point p'). The search may be performed, for example, using the attribute projection model. The number/quantity of (e.g., $k$) neighboring points may be predetermined. The number/quantity of (e.g., $k$) neighboring points may be signaled by the encoder to the decoder in the bitstream. The number/quantity of (e.g., k) neighboring points may be reduced, for example, to reduce searching complexity. For example, the number/quantity (e.g., k) may be set to one. A (one) reference point, from (or out of) the reference points, that is closest to (or with the shortest distance from) the point (e.g., point p'), may be selected, for example, if the number/quantity (e.g., $k$) is set to one. Attributes of the reference point (e.g., closest to the point p') may be selected and/or used to determine attribute predictors for the reconstructed point (e.g., point p) corresponding to the point (e.g., point p').

Determining (e.g., searching) for the nearest points (e.g., k nearest points) may reduce (or control) computational complexity (e.g., of the search), for example, if the determining (e.g., searching) uses spatial partitioning data structure such as the K-D tree or an octree. A maximum number/quantity of points may be controlled, for example, by using encoding profiles and levels to ensure limited complexity.

Generating the attribute projection model (e.g. attributes prediction model 2104) may include generating a spatial (or space) partitioning tree (e.g., an octree structure). The spatial partitioning tree may correspond to an input point cloud frame. The input point cloud frame may be the reference point cloud frame (e.g., reference point cloud frame 1902). Neighbor(s) (or neighboring point(s), e.g., the nearest neighbor(s)) of reconstructed points may be determined (e.g., searched), for example, based on (e.g., from) the input point cloud frame. An example method will be described herein for determining (e.g., searching for) neighboring points (e.g., nearest neighbors or neighboring points), for example, based on the octree structure. The method for determining neighboring points may be based on other types of spatial partitioning data structures.

The root node of the octree may be associated with a cuboid. The root node of the octree may be associated with a cuboid including points of the reference point cloud frame. The root node of the octree may be associated with a cuboid including (e.g., encompassing, covering) all the points of the reference point cloud frame. Each of the dimensions (e.g., (x, y, z) dimensions) of the cuboid for the root node may be higher than the dimensions of the reference point cloud frame along each of the three axes. Each of the dimensions (e.g., (x, y, z) dimensions) of the cuboid for the root node may be equal to the same power of 2 (two). Nodes of the octree may be recursively generated according to the following construction rules, until a given depth of the octree or a given node size is reached. First, the cuboid for a given node of the octree may be partitioned into a 2x2x2 partition of 8 (eight) non overlapping sub-cuboids. Each sub-cuboid may be half the size of the cuboid along each one of the 3 (three) dimensions, which results in a sub-volume that is one-eighth of the volume of the cuboid. For each one of the 8 sub-cuboids, the sub-cuboid may be determined to be occupied. A child node may be added to the node with the child node being associated with the sub-cuboid, for example, if the sub-cuboid contains at least one point. The process of generating the octree structure may be similar to that used to generate the octree for representing points of a current point cloud frame, as described herein with respect to FIGS. 3-4.

The reference points of the reference point cloud frame and associated attributes of the reference points may be reordered. The reference points of the reference point cloud frame and associated attributes of the reference points may be reordered, for example, based on (e.g., according to) the octree nodes. The reference points of the reference point cloud frame and associated attributes of the reference points may be reordered based on (e.g., according to) the octree nodes, for example, if the octree structure is built. The reordering may generate advantages such as reducing complexity of the nearest neighbor(s) search. The reordering may be performed such that each cuboid may be associated with a range of point indexes represented by a starting point index and an ending point index. In some examples, each range of point indexes for the cuboid may include indexes of all the reference points, and only the reference points, belonging to that cuboid. The node may be associated with the corresponding reference points. The reordering may be performed, for example, using a counting sort algorithm that is recursively applied/used on the nodes. The counting sort algorithm may be applied/used, for example, if the cuboid of a node into sub-cuboids is partitioned to move all the points (with their associated attributes) contained within each one of the sub-cuboids (e.g., eight sub-cuboids) from their actual point index to a point index within one of a quantity of (e.g., 8) ranges of consecutive point indexes with one range for each of the sub-cuboids. Some ranges may be empty if the sub-cuboid is not occupied.

The selection of the one or more reference points for the point (e.g., point p') may be performed, for example, by using a spatial partitioning tree (e.g., the octree structure) to determine (e.g., search for) the closest neighbors (or neighboring points) to the position of the point (e.g., point p'). An example method of selecting the closest or nearest reference point is described herein. This example method may be extended to determining (e.g., searching for) the $k$ nearest (or closest) points with $k$ being greater than one. The determining (e.g., searching for) the nearest reference point (or nearest neighbor, nearest point, etc.) may include identifying the nodes (e.g., leaf nodes) in the octree that may contain the nearest reference point, and searching the reference points within these nodes to find the nearest reference point with a smallest distance to the point (e.g., point p'). Identifying the nodes (e.g., leaf nodes) may be performed recursively from the root node to the leaf nodes. Identifying the nodes (e.g., leaf nodes) may be performed recursively from the root node to the leaf nodes, for example, by searching for child nodes in the octree that may contain the nearest reference point. Cuboids corresponding to traversed child nodes may be tracked (e.g., sorted), for example, in a queue, based on (e.g., according to) their distance from the position of the point (e.g., point p'). For example, any child node whose corresponding cuboid is determined to be nearer (or closer) to the position of the point (e.g., point p') than cuboids of previously traversed child nodes may be added to the front of a queue of processed nodes, for example, during traversal of child nodes of the octree structure. A maximum possible distance (or maximum distance) $d_{max}$ between the nearest reference point and the position of the point (e.g., point p') may be updated, for example, as child nodes are traversed. The maximum distance $d_{max}$ may be updated, for example, based on a maximum distance between a current cuboid being processed and the position (e.g., position $p_1$) of the point (e.g., point p') being less than the maximum distance $d_{max}$.

A spatial partitioning tree (e.g., the octree) may be searched using traversal of the nodes of the tree. For example, the octree may be searched using a breadth first traversal of the nodes of the octree. An example pseudo code for the breadth first traversal is provided below:

Set maximum distance $d_{max}$ equal to infinity (or maximum representable distance value);
Add the root node in a queue 'q';
Perform the following, for example, repeat the following until the queue 'q' is empty or the node in front of the queue is a leaf node: if the queue 'q' is not empty and the node at the front of the queue is not a leaf node:

select and remove (e.g., pop out) the node 'n' at the front of the queue;
for each child node 'c' of the node 'n', perform the following:

compute the minimum distance $c_{min}$ between the position $p_1$ and the boundaries of the cuboid associated with the child node 'c';
if the minimum distance $c_{min}$ is less than or equal to the maximum distance $d_{max}$, perform the following:

add a new element at the end of the queue that is set to be/represent the child node 'c' (or push the child node at the back of the queue);
compute the maximum distance $c_{max}$ between the position $p_1$ and the cuboid associated with the child node 'c';
if the maximum distance $c_{max}$ is lower than the maximum distance $d_{max}$, set $d_{max}$ equal to $c_{max}$.

Set distance 'd' equal to infinity (or maximum representable distance value);
set the index of the closest neighbor equal to -1;
Perform the following, for example, repeat the following until the queue 'q' is empty: if the queue 'q' is not empty:

select and remove (e.g., pop out) the node 'n' at the front of the queue;
compute the minimum distance $c_{min}$ between the position $p_1$ and (e.g., the boundaries of) the cuboid associated with the node 'n';

if the minimum distance $c_{min}$ is lower or equal to the maximum distance $d_{max}$, perform the following:
for each point $p_c$ within the cuboid associated with the node 'n', perform the following:

compute the distance $d_c$ between $p_c$ and $p_1$;
if the distance $d_c$ is lower than the distance d, set d equal to $d_c$ and set the index of the closest neighbor equal to the index of the point $p_c$;
if the distance $d_c$ is lower than the maximum distance $d_{max}$, set $d_{max}$ equal to de.

The octree may be searched, for example, using a depth first traversal of the nodes of the octree. For example, instead of a breath first traversal, a depth first traversal may be performed on nodes of the octree to identify the leaf nodes and to determine (e.g., compute, update) the maximum distance $d_{max}$.

The maximum distance between a position (e.g., position $p_1$) of a point (e.g., point p') and a cuboid may be determined (e.g., computed), for example, based on the maximum distance between the point position (e.g., position $p_1$) and any one of the vertices of the cuboid. This maximum distance may correspond to the highest (or biggest) possible (e.g., worst case) distance between the point (e.g., point p') and any point within the cuboid.

The minimum distance between a position (e.g., position $p_1$) of a point (e.g., point p') and a cuboid may be 0 (zero). The minimum distance between a point position (e.g., position $p_1$) and a cuboid may be 0 (zero), for example, if the point position (e.g., position $p_1$) is located within the cuboid. In other examples, the minimum distance between a point position (e.g., position $p_1$) and a cuboid may be the minimum distance between the point position (e.g., position $p_1$) and the boundaries (e.g., one of vertices, edges and faces) of the cuboid. The minimum distance may correspond to the smallest possible (e.g., best case) distance between the point position (e.g., position $p_1$) and any point within the cuboid.

The determined (e.g., computed) distances may be any number of suitable distances. For example, the determined (e.g., computed) distances may be the Euclidean distances (i.e., L2 norm), the Manhattan distance (i.e., L 1 norm or Taxicab norm), or the Chebyshev distance (i.e., L-infinity or L∞ norm), etc..

The search may be accelerated, for example, based on initializing the maximum distance $d_{max}$. The search may be accelerated, for example, by initializing the maximum distance $d_{max}$ with an already known maximum distance $d_{max}$ between the point position (e.g., position $p_1$) and its nearest neighbor (or neighboring point). For example, the maximum distance $d_{max}$ is not initialized with infinity value or a very large value. The maximum distance $d_{max}$ may be initialized, for example, using the distance $d_{prev}$ between a preceding point position $p_{-1}$ and its nearest neighbor $nn_{-1}$ (previously determined), and also using the distance between the preceding point position $p_{-1}$ and the point position $p_1$. For example, the maximum distance $d_{max}$ may be determined (e.g., computed, calculated) based on the following equations: $d_{prev} = d(nn_{-1}, p_{-1})$ and $d_{max} = d_{prev} + d(p_1, p_{-1})$, where $d(a, b)$ is the distance between a point $a$ and a point $b$. With this determination (e.g., estimation), a single distance value $d_{prev}$ may need to be kept in memory (e.g., stored) for the processing of successive points. Alternatively, a determination (e.g., estimation) of the maximum distance $d_{max}$ may use the following equation: $d_{max} = d(p_1, nn_{-1})$. Such determination may be more accurate, but may require keeping in memory (e.g., storage of) the 3 dimensional coordinates of the nearest neighbor $nn_{-1}$ obtained for the point position $p_{-1}$ of the precedingly (e.g., previously) processed point (or keeping in memory the index in the point cloud of the nearest neighbor $nn_{-1}$ and accessing/reading its 3 dimensional coordinates (point position), from the memory containing the reference point cloud frame data, when the coordinates are needed by the computation). In another example, a maximum distance $d_{max}$ may be determined (e.g., estimated by using a (fast) depth first descent in the octree to find the (deepest) (occupied) node $c_1$ with the smallest associated cuboid encompassing point position $p_1$. The maximum distance $d_{max}$ may be determined (e.g., estimated) as the maximum distance between the point position $p_1$ and the boundaries of the cuboid associated with the node $c_1$. In yet another example, the maximum distance $d_{max}$ may be determined (e.g., estimated) by taking the minimum value of $d_{max}$ within the previous examples. The closer the estimation of the maximum distance $d_{max}$ will be to the actual distance to the nearest neighbor, the faster will be the search for the nearest neighbor (or nearest reference point).

A table (e.g., table t) containing indexes to the reference points of the reference point cloud frame may be reordered. The table (e.g., table t) containing indexes to the reference points of the reference point cloud frame may be reordered, for example, based on (e.g., according to) the octree structure instead of reordering the points themselves. Reordering based on the octree structure may avoid modifying the initial point order in the reference point cloud. Each cuboid may be associated with a range of indexes of elements within the table (e.g., table *t*). The range may be represented by and/or may include a start index and an end index. Both the start index and the end index may be indexes of elements within the table (e.g., table *t*). The elements of the table (e.g., table *t*) may contain all the indexes to the points belonging to the cuboid, for example, for that range of elements. The table may be associated with the cuboid. The node may be associated with the corresponding points.

At step 2210, an attribute predictor for an attribute of the reconstructed point may be determined. The attribute predictor for an attribute of the reconstructed point may be determined, for example, based on attributes of the selected one or more reference points. An attribute predictor for an attribute of the reconstructed point may be determined, for example, based on averaging the values of attributes of the selected one or more reference points. An attribute predictor for an attribute of a first type of the reconstructed point (e.g., point p) may be determined, for example, based on averaging the values of attributes of the first type of the selected one or more reference points. The values of the attributes of the selected one or more reference points may be averaged, for example, based on (e.g., according to) respective weights determined for the selected one or more reference points. For example, at substep 2212, the attribute predictor may be determined, for example, based on the distances between positions of the nearest points (e.g., k nearest points) and the position of the point. A weight for each of the nearest points (e.g., k nearest points) may be determined, for example, in the weighted average. A weight for each of the nearest points (e.g., k nearest points) may be determined, for example, based on (e.g., according to) a respective distance between each of the nearest points (e.g., k nearest points) and the position of the point (e.g., point p'). The nearest points (e.g., k nearest points) may correspond to the selected one or more reference points. For example, a weight for a selected reference point may be inversely proportional to a distance between the selected reference point and the point (e.g., point p'). At substep 2214, the attribute predictor may be determined for the reconstructed point (e.g., point p), for example, based on the point (e.g., point p') being associated with the reconstructed point (e.g., point p).

Substep 2214 may be performed for each type of attribute to be coded (e.g., encoded or decoded) for the reconstructed point. For example, values of the same type of attributes of the selected one or more reference points may be used to generate the attribute predictor for the same type of attribute of the reconstructed point.

The points of the decoded geometry may be determined to be contained within cuboids. The points of the decoded geometry may be determined to be contained within cuboids (e.g., indicated by occupancy trees), for example, if an encoding and decoding process is performed. The same motion vector may be applied/used to/for more than one point (e.g., all points) in a cuboid, for example, if the attribute projection process is performed. The same motion vector may be applied/used to/for more than one point (e.g., all points) in a cuboid, for example, to reduce the computation required for retrieval of the motion vector for each reconstructed point. All the points in a cuboid may be applied to (e.g., used for) the same motion vector during the attribute projection process such that the computation required for retrieval of the motion vector for each reconstructed point may be kept low. The MV field may include a motion vector for each cuboid. The MV field may include a motion vector for each set of sets of cuboids.

Reconstructed points of the decoded geometry may be motion compensated in batches. Reconstructed points of the decoded geometry may be motion compensated in batches, for example, in sets of points. The attribute projection process may be performed for each set of reconstructed points, for example, to determine attribute predictors for the set of reconstructed points. A set of reconstructed points may contain the points belonging to a cuboid of the decoded geometry. For example, a set of reconstructed points may contain all the points belonging to a cuboid of the decoded geometry. Advantages such as reducing the complexity of looking (or searching) for the neighboring points of each point (e.g., individually) may be achieved.

FIG. 23 shows an example method for encoding attributes of a point cloud frame. More specifically, FIG. 23 shows a flowchart 2300 of an example method for encoding attributes of a point cloud frame (e.g., a current point cloud frame), for example, based on attribute predictors. One or more steps of the example method may be performed and/or implemented by an encoder (e.g., encoder 114 in FIG. 1). The example method may correspond to the example method 1700 in FIG. 17. Steps (e.g., blocks) of the example method may be omitted, performed in other orders, and/or otherwise modified and/or one or more additional steps may be added.

At step 2302, an encoder (e.g., a geometry encoder) may determine attributes of reconstructed points of a point cloud frame. The encoder (e.g., a geometry encoder) may determine attributes of reconstructed points of a point cloud frame, for example, based on attributes of points of the point cloud frame. The reconstructed points may be of a reconstructed geometry of the point cloud frame. The points of the point cloud may be of a geometry of the point cloud. The determining the attributes of the reconstructed points may include mapping attributes of the geometry of the point cloud frame to the reconstructed geometry. The attribute predictors may be determined, for example, based on the mapped attributes. For example, the attributes may be colors. The mapped attributes may be determined, for example, based on recoloring. The mapped attributes for each point of the reconstructed geometry may be determined, for example, based on a nearest neighbor search of nearest points, from the geometry of the point cloud frame, to the point of the reconstructed geometry.

At step 2304, the encoder may determine attribute predictors of the attributes of the reconstructed points. The encoder may determine attribute predictors of the attributes of the reconstructed points, for example, based on attributes of a reference point cloud frame and a motion vector field applied to (e.g., used for) the reconstructed points. For example, the reference point cloud frame may be an already-coded reference point cloud frame. The attribute predictors may be determined, for example, according to the example methods described herein with respect to FIG. 21 and FIG. 22.

At step 2306, the encoder may encode the attributes of the reconstructed points. The encoder may encode the attributes of the reconstructed points, for example, based on the attribute predictors. The encoder may determine residual attributes, for example, based on differences between the attributes of the reconstructed points and the attribute predictors. The encoder may encode the residual attributes in a bitstream.

Encoding the residual attributes may include determining transformed coefficients. Encoding the residual attributes may include determining transformed coefficients, for example, based on applying/using an intra transform to/for the residual attributes, and encoding the transformed coefficients corresponding to (e.g., representing or indicating) the residual attributes in the bitstream. In some examples, encoding the residual attributes may include quantizing the transformed coefficients such that the quantized transformed coefficients are entropy encoded.

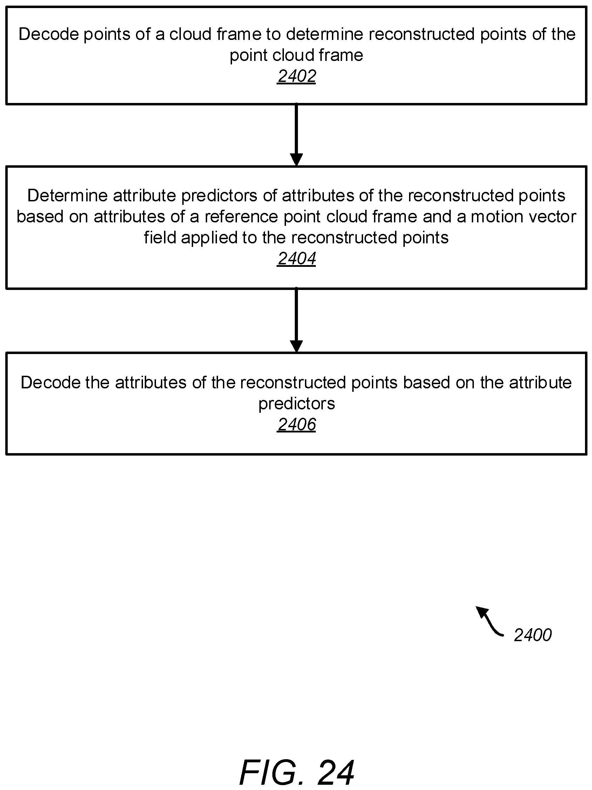

FIG. 24 shows an example method for decoding attributes of a point cloud frame. More specifically, FIG. 24 shows a flowchart 2400 of an example method for decoding attributes of a point cloud frame (e.g., a current point cloud frame), for example, based on attribute predictors. One or more steps of the example method may be performed and/or implemented by a decoder (e.g., decoder 120 in FIG. 1). The example method may correspond to the example method 1800 of FIG. 18. The decoder may comprise a geometry decoder, an attributes decoder, and an attribute projector/determiner, which may be represented in the example method 1800. Steps (e.g., blocks) of the example method discussed herein with respect to FIG. 24 may be omitted, performed in other orders, and/or otherwise modified and/or one or more additional steps may be added.

At step 2402, a decoder (e.g., a geometry decoder) may decode points of a cloud frame to determine reconstructed points of the point cloud frame. The points may be from a geometry of the point cloud frame. The decoder may decode geometry information of the point cloud from a bitstream. The decoded geometry may correspond to the geometry of the point cloud frame reconstructed (e.g., encoded and decoded) at an encoder. To decode the attributes associated with the reconstructed geometry, the decoder may decode, from a bitstream, residual attributes indicating differences between the attributes of the reconstructed geometry and the attribute predictors. The decoded attributes may be determined, for example, based on adding the attribute predictors and the decoded residual attributes.

Decoding the residual attributes may comprise entropy decoding transformed coefficients. Decoding the residual attributes may comprise entropy decoding, from the bitstream, transformed coefficients corresponding to (e.g., representing or indicating) the residual attributes. The residual attributes may be determined, for example, based on applying/using an inverse intra transform to/for the decoded transformed coefficients. In some examples, decoding the residual attributes may comprise dequantizing the transformed coefficients. The residual attributes may be determined, for example, by applying/using the inverse intra transform to/for the dequantized transformed coefficients.

At step 2404, the decoder may determine attribute predictors of attributes of the reconstructed points. The decoder may determine attribute predictors of attributes of the reconstructed points, for example, based on attributes of a reference point cloud frame and a motion vector field applied/used to/for the reconstructed points. The reference point cloud frame for attributes may be an already-coded reference point cloud frame. Step 2404 may include the same operations as those described herein with respect to step 2304 of FIG. 23.

At step 2406, the decoder may decode the attributes of the reconstructed points. The decoder may decode the attributes of the reconstructed points, for example, based on the attribute predictors.

As described herein with respect to FIGS. 17, 18, 22, and 23, attributes predictors may be determined reciprocally (e.g., independently and identically) at the encoder and decoder. The attribute predictors may be determined, for example, based on projecting attributes of a reference point cloud frame to reconstructed points of the point cloud frame, for example, using a motion vector (MV) field.

The attribute predictors may comprise a respective attribute predictor, for example, for each respective point of reconstructed points of the reconstructed/decoded geometry. The attribute predictor may be based on a projected attribute, of the projected attributes, corresponding to the point.

An indication (e.g., an index or ID) of the already-coded reference point cloud frame may be signaled in the bitstream (e.g., encoded by the encoder and decoded by the decoder). The decoder may decode this indication to select an already-coded point cloud frame as the reference point cloud frame. Attribute predictors may be determined, for example, based on the reference point cloud frame, to decode attributes of the current point cloud frame.

As described herein, the attributes predictors may be used to determine residual attributes, for example, residual attributes at the encoder. The attributes predictors may be combined with decoded residual attributes, for example, decoded residual attributes at the decoder, to decode (e.g., reconstruct) attributes at the decoder. The residual attributes may be encoded and/or decoded, for example, based on an intra transform scheme. The intra transform scheme may include, for example, a prediction with lifting (pred-lift) transform scheme, an Adaptive-DCT and corresponding inverse A-DCT, a RAHT transform and a corresponding inverse RAHT transform of a RAHT scheme, a Haar transform and a corresponding inverse Haar transform, etc.

FIG. 25 shows an example computer system in which examples of the present disclosure may be implemented. For example, the example computer system 2500 shown in FIG. 25 may implement one or more of the methods described herein. For example, various devices and/or systems described herein (e.g., in FIGS. 1, 2, and 3) may be implemented in the form of one or more computer systems 2500. Furthermore, each of the steps of the flowcharts depicted in this disclosure may be implemented on one or more computer systems 2500.

The computer system 2500 may comprise one or more processors, such as a processor 2504. The processor 2504 may be a special purpose processor, a general purpose processor, a microprocessor, and/or a digital signal processor. The processor 2504 may be connected to a communication infrastructure 2502 (for example, a bus or network).

The computer system 2500 may also comprise a main memory 2506 (e.g., a random access memory (RAM)), and/or a secondary memory 2508.

The secondary memory 2508 may comprise a hard disk drive 2510 and/or a removable storage drive 2512 (e.g., a magnetic tape drive, an optical disk drive, and/or the like). The removable storage drive 2512 may read from and/or write to a removable storage unit 2516. The removable storage unit 2516 may comprise a magnetic tape, optical disk, and/or the like. The removable storage unit 2516 may be read by and/or may be written to the removable storage drive 2512. The removable storage unit 2516 may comprise a computer usable storage medium having stored therein computer software and/or data.

The secondary memory 2508 may comprise other similar means for allowing computer programs or other instructions to be loaded into the computer system 2500. Such means may include a removable storage unit 2518 and/or an interface 2514. Examples of such means may comprise a program cartridge and/or cartridge interface (such as in video game devices), a removable memory chip (such as an erasable programmable read-only memory (EPROM) or a programmable read-only memory (PROM)) and associated socket, a thumb drive and USB port, and/or other removable storage units 2518 and interfaces 2514 which may allow software and/or data to be transferred from the removable storage unit 2518 to the computer system 2500.

The computer system 2500 may also comprise a communications interface 2520. The communications interface 2520 may allow software and data to be transferred between the computer system 2500 and external devices. Examples of the communications interface 2520 may include a modem, a network interface (e.g., an Ethernet card), a communications port, etc. Software and/or data transferred via the communications interface 2520 may be in the form of signals which may be electronic, electromagnetic, optical, and/or other signals capable of being received by the communications interface 2520. The signals may be provided to the communications interface 2520 via a communications path 2522. The communications path 2522 may carry signals and may be implemented using wire or cable, fiber optics, a phone line, a cellular phone link, an RF link, and/or any other communications channel(s).

The computer system 2500 may also comprise one or more sensor(s) 2524. The sensor(s) 2524 may measure or detect one or more physical quantities and convert the measured or detected physical quantities into an electrical signal in digital and/or analog form. For example, the sensor(s) 2524 may include an eye tracking sensor to track the eye movement of a user. A display of a point cloud may be updated, for example, based on the eye movement of a user. The sensor(s) 2524 may include a head tracking sensor to track the head movement of a user. A display of a point cloud may be updated, for example, based on the head movement of a user. The sensor(s) 2524 may include a camera sensor for taking photographs and/or a 3D scanning device (e.g., a laser scanning device, a structured light scanning device, and/or a modulated light scanning device). The 3D scanning devices may determine geometry information by moving one or more laser heads, structured light, and/or modulated light cameras relative to the object or scene being scanned. The geometry information may be used to construct a point cloud.

A computer program medium and/or a computer readable medium may be used to refer to tangible storage media, such as removable storage units 2516 and 2518 or a hard disk installed in the hard disk drive 2510. The computer program products may be means for providing software to the computer system 2500. The computer programs (which may also be called computer control logic) may be stored in the main memory 2506 and/or the secondary memory 2508. The computer programs may be received via the communications interface 2520. Such computer programs, when executed, may enable the computer system 2500 to implement the present disclosure as discussed herein. In particular, the computer programs, when executed, may enable the processor 2504 to implement the processes of the present disclosure, such as any of the methods described herein. Accordingly, such computer programs may represent controllers of the computer system 2500.

Features of the disclosure may be implemented in hardware using, for example, hardware components such as application-specific integrated circuits (ASICs) and gate arrays. Implementation of a hardware state machine to perform the functions described herein will also be apparent to persons skilled in the relevant art(s).

FIG. 26 shows example elements of a computing device that may be used to implement any of the various devices described herein, including, for example, a source device (e.g., 102), an encoder (e.g., 114), a destination device (e.g., 106), a decoder (e.g., 120), and/or any computing device described herein. The computing device 2630 may include one or more processors 2631, which may execute instructions stored in the random-access memory (RAM) 2633, the removable media 2634 (such as a Universal Serial Bus (USB) drive, compact disk (CD) or digital versatile disk (DVD), or floppy disk drive), or any other desired storage medium. Instructions may also be stored in an attached (or internal) hard drive 2635. The computing device 2630 may also include a security processor (not shown), which may execute instructions of one or more computer programs to monitor the processes executing on the processor 2631 and any process that requests access to any hardware and/or software components of the computing device 2630 (e.g., ROM 2632, RAM 2633, the removable media 2634, the hard drive 2635, the device controller 2637, a network interface 2639, a GPS 2641, a Bluetooth interface 2642, a WiFi interface 2643, etc.). The computing device 2630 may include one or more output devices, such as the display 2636 (e.g., a screen, a display device, a monitor, a television, etc.), and may include one or more output device controllers 2637, such as a video processor. There may also be one or more user input devices 2638, such as a remote control, keyboard, mouse, touch screen, microphone, etc. The computing device 2630 may also include one or more network interfaces, such as a network interface 2639, which may be a wired interface, a wireless interface, or a combination of the two. The network interface 2639 may provide an interface for the computing device 2630 to communicate with a network 2640 (e.g., a RAN, or any other network). The network interface 2639 may include a modem (e.g., a cable modem), and the external network 2640 may include communication links, an external network, an in-home network, a provider's wireless, coaxial, fiber, or hybrid fiber/coaxial distribution system (e.g., a DOCSIS network), or any other desired network. Additionally, the computing device 2630 may include a location-detecting device, such as a global positioning system (GPS) microprocessor 2641, which may be configured to receive and process global positioning signals and determine, with possible assistance from an external server and antenna, a geographic position of the computing device 2630.

The example in FIG. 26 may be a hardware configuration, although the components shown may be implemented as software as well. Modifications may be made to add, remove, combine, divide, etc. components of the computing device 2630 as desired. Additionally, the components may be implemented using basic computing devices and components, and the same components (e.g., processor 2631, ROM storage 2632, display 2636, etc.) may be used to implement any of the other computing devices and components described herein. For example, the various components described herein may be implemented using computing devices having components such as a processor executing computer-executable instructions stored on a computer-readable medium, as shown in FIG. 26. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: decoding points of a point cloud frame to determine reconstructed points of the point cloud frame.

Clause 2. The method of clause 1, further comprising: determining attribute predictors of attributes of the reconstructed points based on attributes of a reference point cloud frame and a motion vector field applied to the reconstructed points.

Clause 3. The method of clause 1 or clause 2, further comprising: decoding the attributes of the reconstructed points based on the attribute predictors determined for the reconstructed points.

Clause 4. The method of any one of clauses 1 to 3, wherein the determining the attribute predictors comprises: for each reconstructed point of the reconstructed points: determining a point based on a motion vector, of the motion vector field, associated with the reconstructed point; selecting one or more reference points from the reference point cloud frame; and determining an attribute predictor for an attribute of the reconstructed point based on attributes of the selected one or more reference points.

Clause 5. The method of any one of clauses 1 to 4, wherein the one or more reference points are selected based on distances between the one or more reference points and the point.

Clause 6. The method of any one of clauses 1 to 5, wherein the distances comprise a Manhattan distance, a Euclidean distance, Chebyshev distance, or a Minkowski distance.

Clause 7. The method of any one of clauses 1 to 6, wherein the one or more reference points are determined as the k nearest points to a position of the point.

Clause 8. The method of any one of clauses 1 to 7, wherein the one or more reference points is exactly one reference point.

Clause 9. The method of any one of clauses 1 to 8, wherein the point is determined based on translating the reconstructed point by the motion vector.

Clause 10. The method of any one of clauses 1 to 9, wherein the motion vector is associated with all points of the reconstructed points.

Clause 11. The method of any one of clauses 1 to 10, wherein the motion vector is associated with a set of cuboids spatially partitioning a volume containing a decoded geometry of the point cloud frame.

Clause 12. The method of any one of clauses 1 to 11, wherein an attribute predictor of each attribute of the reconstructed points is determined based on selecting one or more attributes of one or more points in the reference point cloud frame.

Clause 13. The method of any one of clauses 1 to 12, wherein the determining attribute predictors comprises: generating an attributes projection model comprising generating a space partitioning tree corresponding to the reference point cloud frame.

Clause 14. The method of any one of clauses 1 to 13, wherein the space partitioning tree comprises an octree structure.

Clause 15. The method of any one of clauses 1 to 14, wherein reference points of the reference point cloud frame are reordered according to octree nodes, in the octree structure, to which the reference points belong.

Clause 16. The method of any one of clauses 1 to 15, wherein the octree structure comprises a plurality of cuboids with each cuboid including a range of indices corresponding to reference points contained within the cuboid.

Clause 17. The method of any one of clauses 1 to 16, wherein the decoding the attributes associated with the reconstructed geometry comprises: decoding, from a bitstream, residual attributes indicating differences between the attributes of the reconstructed geometry and the attribute predictors; and determining the decoded attributes based on adding the attribute predictors and the decoded residual attributes.

Clause 18. The method of any one of clauses 1 to 17, wherein the decoding of the residual attributes comprises: entropy decoding, from the bitstream, transformed coefficients corresponding to the residual attributes; determining the residual attributes based on applying an inverse intra transform to the decoded transformed coefficients.

Clause 19. The method of any one of clauses 1 to 18, further comprising dequantizing the transformed coefficients, the residual attributes being determined by applying the inverse intra transform to the dequantized transformed coefficients.

Clause 20. The method of any one of clauses 1 to 19, wherein the residual attributes are encoded and decoded based on a prediction with lifting (pred-lift) transform scheme.

Clause 21. The method of any one of clauses 1 to 20, wherein the intra transform comprises an Adaptive-DCT and the inverse intra transform comprises an inverse Adaptive-DCT (A-DCT).

Clause 22. The method of any one of clauses 1 to 21, wherein the intra transform comprises a RAHT transform and the inverse intra transform comprises an inverse RAHT transform of a RAHT scheme.

Clause 23. The method of any one of clauses 1 to 22, wherein the intra transform comprises a Haar transform and the inverse intra transform comprises an inverse Haar transform.

Clause 24. The method of any one of clauses 1 to 23, wherein the reference point cloud frame for attributes is determined from an already-coded reference point cloud frame.

Clause 25. The method of any one of clauses 1 to 24, wherein the already-coded reference point cloud frame is used to encode or decode the geometry of the point cloud frame.

Clause 26. The method of any one of clauses 1 to 25, further comprising decoding the motion vector field and/or an indication of the already-coded reference point cloud frame.

Clause 27. The method of any one of clauses 1 to 26, further comprising receiving, from a bitstream, an inter residual activation flag indicating whether the attributes are coded based on the attribute predictors, wherein the determining the attribute predictors is based on the inter residual activation flag.

Clause 28. The method of any one of clauses 1 to 27, wherein the attributes of the reconstructed geometry are decoded using the attribute predictors based on a quality of prediction of the attributes associated with the reconstructed geometry.

Clause 29. The method of any one of clauses 1 to 28, wherein the quality of prediction is determined based a distance of projection of the attributes associated with the decoded geometry.

Clause 30. The method of any one of clauses 1 to 29, wherein the inter residual activation flag is associated with a spatial region of the point cloud frame.

Clause 31. The method of any one of clauses 1 to 30, wherein the decoding the attributes of the reconstructed points comprises: applying an intra transform to the attribute predictors; decoding, from a bitstream, transformed residual attributes indicating differences between transformed attributes of the reconstructed geometry and the transformed attribute predictors; determining the transformed attributes based on adding the transformed attribute predictors and the decoded transformed residual attributes; and determining the decoded attributes based on applying an inverse intra transform to the determined transformed attributes.

Clause 32. The method of any one of clauses 1 to 31, wherein the decoding of the transformed residual attributes comprises: entropy decoding, from the bitstream, transformed coefficients corresponding to the transformed residual attributes; and dequantizing the transformed coefficients to determine the transformed residual attributes.

Clause 33. A computing device comprising: one or more processors; and memory storing instructions that, when executed by the one or more processors, cause the computing device to perform: the method of any one of clauses 1 to 32.

Clause 34. A system comprising: a first computing device configured to perform the method of any one of clauses 1 to 32; and a second computing device configured to encode the points of the point cloud frame.

Clause 35. A computer-readable medium storing instructions that, when executed, cause performance of: the method of any one of clauses 1 to 32.

Clause 36. A method comprising: determining attributes of reconstructed points of a point cloud frame based on attributes of points of the point cloud frame.

Clause 37. The method of clause 36, further comprising: determining attribute predictors of the attributes of the reconstructed points based on attributes of a reference point cloud frame and a motion vector field applied to the reconstructed points.

Clause 38. The method of clause 36 or clause 37, further comprising: encoding the attributes of the reconstructed points based on the attribute predictors determined for the reconstructed points.

Clause 39. The method of any one of clauses 36 to 38, wherein the reconstructed points are of a reconstructed geometry of the point cloud frame.

Clause 40. The method of any one of clauses 36 to 39, wherein the determining the attributes of the reconstructed points comprises: mapping attributes of a geometry of the point cloud frame to the reconstructed geometry, and wherein the attribute predictors are determined further based on the mapped attributes.

Clause 41. The method of any one of clauses 36 to 40, wherein the attributes are colors and the mapped attributes are determined based on recoloring.

Clause 42. The method of any one of clauses 36 to 41, wherein the mapped attributes for each reconstructed point of the reconstructed geometry is determined based on a nearest neighbor search of nearest points, from the reference point cloud frame, to a point corresponding to a motion vector, of the motion vector field, being applied to the reconstructed point.

Clause 43. The method of any one of clauses 36 to 42, wherein the encoding the attributes comprises: determining residual attributes based on differences between the attributes of the reconstructed geometry and the attribute predictors; and encoding, in a bitstream, the residual attributes.

Clause 44. The method of any one of clauses 36 to 43, wherein the encoding the residual attributes comprises: determining transformed coefficients based on applying an intra transform to the residual attributes; and entropy encoding, in the bitstream, the transformed coefficients corresponding to the residual attributes.

Clause 45. The method of any one of clauses 36 to 44, further comprising quantizing the transformed coefficients, the quantized transformed coefficients being entropy encoded.

Clause 46. The method of any one of clauses 36 to 45, further comprising encoding (or signaling), in a bitstream, an inter residual activation flag indicating whether the attributes are encoded based on the attribute predictors.

Clause 47. The method of any one of clauses 36 to 46, wherein the inter residual activation flag is encoded based on a quality of projection of the attributes associated with the reconstructed geometry.

Clause 48. The method of any one of clauses 36 to 47, wherein the attributes of the reconstructed geometry are encoded using the attribute predictors based on a quality of prediction of the attributes associated with the reconstructed geometry.

Clause 49. The method of any one of clauses 36 to 48, further comprising: encoding the geometry of the point cloud frame; and determining the reconstructed geometry based on decoding the encoded geometry.

Clause 50. A computing device comprising: one or more processors; and memory storing instructions that, when executed by the one or more processors, cause the computing device to perform: the method of any one of clauses 36 to 49.

Clause 51. A system comprising: a first computing device configured to perform the method of any one of clauses 36 to 49; and a second computing device configured to decode the points of the point cloud frame.

Clause 52. A computer-readable medium storing instructions that, when executed, cause performance of: the method of any one of clauses 36 to 49.

Clause 53. A method comprising: determining, based on decoding points of a point cloud frame associated with content, reconstructed points of the point cloud frame.

Clause 54. The method of clause 53, further comprising: determining, based on attributes of a reference point cloud frame and a motion vector field associated with the reconstructed points, attribute predictors for attributes of the reconstructed points.

Clause 55. The method of clause 53 or clause 54, further comprising: decoding, based on the determined attribute predictors, the attributes of the reconstructed points.

Clause 56. The method of any one of clauses 53 to 55, wherein the determining the attribute predictors comprises: for each reconstructed point of the reconstructed points: determining a point based on a motion vector, of the motion vector field, associated with the reconstructed point; selecting, based on the point, one or more reference points from the reference point cloud frame; and determining, based on attributes of the selected one or more reference points, an attribute predictor for an attribute of the reconstructed point.

Clause 57. The method of any one of clauses 53 to 56, wherein the determining the attribute predictors comprises: for each reconstructed point of the reconstructed points: determining a point based on a motion vector, of the motion vector field, associated with the reconstructed point; selecting one or more reference points from the reference point cloud frame based on distances between the one or more reference points and the point; and determining, based on attributes of the selected one or more reference points, an attribute predictor for an attribute of the reconstructed point.

Clause 58. The method of any one of clauses 53 to 57, wherein the determining the attribute predictors comprises: for a reconstructed point of the reconstructed points: determining, based on translating the reconstructed point by a motion vector of the motion vector field, a point associated with the reconstructed point.

Clause 59. The method of any one of clauses 53 to 58, wherein the determining the attribute predictors comprises: for all the reconstructed points: determining, based on translating the reconstructed points by a same motion vector of the motion vector field, points associated with the reconstructed points.

Clause 60. The method of any one of clauses 53 to 59, wherein a motion vector of the motion vector field is associated with a plurality of cuboids spatially partitioning a volume containing a decoded geometry of the point cloud frame.

Clause 61. The method of any one of clauses 53 to 60, wherein the determining the attribute predictors comprises: generating, based on a space partitioning tree corresponding to the reference point cloud frame, an attribute projection model.

Clause 62. The method of any one of clauses 53 to 61, wherein the decoding the attributes of the reconstructed points comprises: decoding, from a bitstream, residual attributes indicating differences between the attributes of the reconstructed points and the attribute predictors; and determining, based on adding the attribute predictors and the decoded residual attributes, decoded attributes of the reconstructed points.

Clause 63. The method of any one of clauses 53 to 62, further comprising: determining, based on an already-coded reference point cloud frame, the reference point cloud frame, wherein the already-coded reference point cloud frame is used to decode a geometry of the point cloud frame.

Clause 64. The method of any one of clauses 53 to 63, wherein the reconstructed points are of a reconstructed geometry of the point cloud frame.

Clause 65. The method of any one of clauses 53 to 64, wherein the decoding the attributes of the reconstructed points is based on a quality of prediction of the attributes of the reconstructed points.

Clause 66. A method comprising: determining, based on a reference point cloud frame and a first motion vector field, a decoded geometry, of a point cloud frame associated with content, comprising reconstructed points of the point cloud frame.

Clause 67. The method of clause 66, further comprising: decoding, based on attributes of the reference point cloud frame and a second motion vector field, attributes of the reconstructed points.

Clause 68. The method of clause 66 or clause 67, wherein the first motion vector field is associated with the reference point cloud frame, and the second motion vector field is associated with the reconstructed points.

Clause 69. The method of any one of clauses 66 to 68, wherein the decoding the attributes of the reconstructed points comprises: determining, based on attributes of the reference point cloud frame and the second motion vector field, attribute predictors for attributes of the reconstructed points; and decoding, based on the attribute predictors determined for the reconstructed points, the attributes of the reconstructed points.

Clause 70. The method of any one of clauses 66 to 69, wherein the decoding the attributes of the reconstructed points comprises using attribute predictors based on a quality of prediction of the attributes of the reconstructed points.

Clause 71. The method of any one of clauses 66 to 70, wherein the decoding the attributes of the reconstructed points comprises: for each reconstructed point of the reconstructed points: determining a point based on a motion vector, of the second motion vector field, associated with the reconstructed point; selecting one or more reference points from the reference point cloud frame, based on distances between the one or more reference points and the point; determining, based on attributes of the selected one or more reference points, an attribute predictor for an attribute of the reconstructed point; and decoding, based on the attribute predictor determined for the reconstructed point, an attribute of the reconstructed point.

Clause 72. The method of any one of clauses 66 to 71, wherein a motion vector of the second motion vector field is associated with a set of cuboids spatially partitioning a volume containing the decoded geometry of the point cloud frame.

Clause 73. A computing device comprising: one or more processors; and memory storing instructions that, when executed by the one or more processors, cause the computing device to perform: the method of any one of clauses 53 to 65; or the method of any one of clauses 66 to 72.

Clause 74. A system comprising: a first computing device configured to perform: the method of any one of clauses 53 to 65; or the method of any one of clauses 66 to 72; and a second computing device configured to encode the points of the point cloud frame.

Clause 75. A computer-readable medium storing instructions that, when executed, cause performance of: the method of any one of clauses 53 to 65; or the method of any one of clauses 66 to 72.

Clause 76. A method comprising: determining, based on attributes of points of a point cloud frame associated with content, attributes of reconstructed points of the point cloud frame.

Clause 77. The method of clause 76, further comprising: determining, based on attributes of a reference point cloud frame and a motion vector field associated with the reconstructed points, attribute predictors for the attributes of the reconstructed points.

Clause 78. The method of clause 76 or clause 77, further comprising: encoding, based on the determined attribute predictors, the attributes of the reconstructed points.

Clause 79. The method of any one of clauses 76 to 78, wherein the reconstructed points are associated with a reconstructed geometry of the point cloud frame, wherein the determining the attributes of the reconstructed points comprises: mapping attributes of a geometry of the point cloud frame to the reconstructed geometry, and wherein the determining the attribute predictors is further based on the mapped attributes.

Clause 80. The method of any one of clauses 76 to 79, wherein the determining the attribute predictors comprises: for each reconstructed point of the reconstructed points: determining a point based on a motion vector, of the motion vector field, associated with the reconstructed point; selecting one or more reference points from the reference point cloud frame, based on distances between the one or more reference points and the point; and determining, based on attributes of the selected one or more reference points, an attribute predictor for an attribute of the reconstructed point.

Clause 81. The method of any one of clauses 76 to 80, wherein the reconstructed points are associated with a reconstructed geometry of the point cloud frame, and wherein the encoding the attributes comprises: determining residual attributes based on differences between the attributes of the reconstructed geometry and the attribute predictors; and encoding, in a bitstream, the residual attributes.

Clause 82. The method of any one of clauses 76 to 81, wherein the reconstructed points are associated with a reconstructed geometry of the point cloud frame, and wherein the attributes of the reconstructed geometry are encoded using the attribute predictors based on a quality of prediction of the attributes associated with the reconstructed geometry.

Clause 83. A computing device comprising: one or more processors; and memory storing instructions that, when executed by the one or more processors, cause the computing device to perform: the method of any one of clauses 76 to 82.

Clause 84. A system comprising: a first computing device configured to perform the method of any one of clauses 76 to 82; and a second computing device configured to decode the points of the point cloud frame.

Clause 85. A computer-readable medium storing instructions that, when executed, cause performance of: the method of any one of clauses 76 to 82.

A computing device may perform a method comprising multiple operations. The computing device may be a decoder. The computing device may determine reconstructed points of the point cloud frame, for example, based on decoding points of a point cloud frame associated with content. The computing device may determine attribute predictors for attributes of the reconstructed points, for example, based on attributes of a reference point cloud frame and a motion vector field associated with the reconstructed points. The computing device may decode the attributes of the reconstructed points, for example, based on the determined attribute predictors. For each reconstructed point of the reconstructed points: The computing device may determine a point, for example, based on a motion vector, of the motion vector field, associated with the reconstructed point; the computing device may select one or more reference points from the reference point cloud frame, for example, based on the point; the computing device may determine an attribute predictor for an attribute of the reconstructed point, for example, based on attributes of the selected one or more reference points. For each reconstructed point of the reconstructed points: The computing device may determine a point, for example, based on a motion vector, of the motion vector field, associated with the reconstructed point; the computing device may select one or more reference points from the reference point cloud frame, for example, based on distances between the one or more reference points and the point; the computing device may determine an attribute predictor for an attribute of the reconstructed point, for example, based on attributes of the selected one or more reference points. For a reconstructed point of the reconstructed points: The computing device may determine a point associated with the reconstructed point, for example, based on translating the reconstructed point by a motion vector of the motion vector field. For all the reconstructed points: The computing device may determine points associated with the reconstructed points, for example, based on translating the reconstructed points by a same motion vector of the motion vector field. A motion vector of the motion vector field may be associated with a plurality of cuboids spatially partitioning a volume containing a decoded geometry of the point cloud frame. The computing device may generate an attribute projection model, for example, based on a space partitioning tree corresponding to the reference point cloud frame. The computing device may decode, from a bitstream, residual attributes indicating differences between the attributes of the reconstructed points and the attribute predictors. The computing device may determine decoded attributes of the reconstructed points, for example, based on adding the attribute predictors and the decoded residual attributes. The computing device may determine the reference point cloud frame, for example, based on an already-coded reference point cloud frame. the already-coded reference point cloud frame may be used to decode a geometry of the point cloud frame. The reconstructed points may be of a reconstructed geometry of the point cloud frame. The decoding the attributes of the reconstructed points may be, for example, based on a quality of prediction of the attributes of the reconstructed points. The computing device may comprise one or more processors and memory, storing instructions that, when executed by the one or more processors, perform the method described herein. A system may comprise the computing device configured to perform the described method, additional operations, and/or include additional elements; and a second computing device configured to encode the point cloud frame. A computer-readable medium may store instructions that, when executed, cause performance of the described method, additional operations, and/or include additional elements.

A computing device may perform a method comprising multiple operations. The computing device may be a decoder. The computing device may determine a decoded geometry of a point cloud frame associated with content, for example, based on a reference point cloud frame and a first motion vector field. The decoded geometry may comprise

EP 4 586 196 A1

reconstructed points of the point cloud frame. The computing device may decode attributes of the reconstructed points, for example, based on attributes of the reference point cloud frame and a second motion vector field. The first motion vector field may be associated with the reference point cloud frame, and the second motion vector field may be associated with the reconstructed points. The computing device may determine attribute predictors for attributes of the reconstructed points, for example, based on attributes of the reference point cloud frame and the second motion vector field. The computing device may decode the attributes of the reconstructed points, for example, based on the attribute predictors determined for the reconstructed points. The decoding the attributes of the reconstructed points may comprise using attribute predictors, for example, based on a quality of prediction of the attributes of the reconstructed points. For each reconstructed point of the reconstructed points: The computing device may determine a point, for example, based on a motion vector, of the second motion vector field, associated with the reconstructed point; the computing device may select one or more reference points from the reference point cloud frame, for example, based on distances between the one or more reference points and the point; the computing device may determine an attribute predictor for an attribute of the reconstructed point, for example, based on attributes of the selected one or more reference points; the computing device may decode an attribute of the reconstructed point, for example, based on the attribute predictor determined for the reconstructed point. A motion vector of the second motion vector field may be associated with a set of cuboids spatially partitioning a volume containing the decoded geometry of the point cloud frame. The computing device may comprise one or more processors and memory, storing instructions that, when executed by the one or more processors, perform the method described herein. A system may comprise the computing device configured to perform the described method, additional operations, and/or include additional elements; and a second computing device configured to encode the point cloud frame. A computer-readable medium may store instructions that, when executed, cause performance of the described method, additional operations, and/or include additional elements.

A computing device may perform a method comprising multiple operations. The computing device may be an encoder. The computing device may determine attributes of reconstructed points of the point cloud frame, for example, based on attributes of points of a point cloud frame associated with content. The computing device may determine attribute predictors for the attributes of the reconstructed points, for example, based on attributes of a reference point cloud frame and a motion vector field associated with the reconstructed points. The computing device may encode the attributes of the reconstructed points, for example, based on the determined attribute predictors. The reconstructed points may be associated with a reconstructed geometry of the point cloud frame. The computing device may map attributes of a geometry of the point cloud frame to the reconstructed geometry. The determining the attribute predictors may be further based on the mapped attributes. For each reconstructed point of the reconstructed points: The computing device may determine a point, for example, based on a motion vector, of the motion vector field, associated with the reconstructed point; the computing device may select one or more reference points from the reference point cloud frame, for example, based on distances between the one or more reference points and the point; the computing device may determine an attribute predictor for an attribute of the reconstructed point, for example, based on attributes of the selected one or more reference points. The reconstructed points may be associated with a reconstructed geometry of the point cloud frame. The computing device may determine residual attributes, for example, based on differences between the attributes of the reconstructed geometry and the attribute predictors. The computing device may encode, in a bitstream, the residual attributes. The reconstructed points may be associated with a reconstructed geometry of the point cloud frame. The attributes of the reconstructed geometry may be encoded using the attribute predictors, for example, based on a quality of prediction of the attributes associated with the reconstructed geometry. The computing device may comprise one or more processors and memory, storing instructions that, when executed by the one or more processors, perform the method described herein. A system may comprise the computing device configured to perform the described method, additional operations, and/or include additional elements; and a second computing device configured to decode the point cloud frame. A computer-readable medium may store instructions that, when executed, cause performance of the described method, additional operations, and/or include additional elements.

A computing device may perform a method comprising multiple operations. The computing device may be a decoder. The computing device may decode points of a point cloud frame to determine reconstructed points of the point cloud frame. The computing device may determine attribute predictors of attributes of the reconstructed points, for example, based on attributes of a reference point cloud frame and a motion vector field applied to the reconstructed points. The computing device may decode the attributes of the reconstructed points, for example, based on the attribute predictors determined for the reconstructed points. For each reconstructed point of the reconstructed points: The computing device may determine a point, for example, based on a motion vector, of the motion vector field, associated with the reconstructed point; the computing device may select one or more reference points from the reference point cloud frame; the computing device may determine an attribute predictor for an attribute of the reconstructed point, for example, based on attributes of the selected one or more reference points. The one or more reference points may be selected, for example, based on distances between the one or more reference points and the point. The distances may comprise a Manhattan distance, a Euclidean distance, Chebyshev distance, or a Minkowski distance. The one or more reference points may be determined as the k nearest points to a position of the point. The one or more reference points may be exactly one reference point. The point may be determined, for example, based on translating the reconstructed point by the motion vector. The motion vector may be associated with all points of the reconstructed points. The motion vector may be associated with a set of cuboids spatially partitioning a volume containing a decoded geometry of the point cloud frame. An attribute predictor of each attribute of the reconstructed points may be determined, for example, based on selecting one or more attributes of one or more points in the reference point cloud frame. The computing device may generate an attributes projection model. The computing device may generate a space partitioning tree corresponding to the reference point cloud frame. The space partitioning tree may comprise an octree structure. Reference points of the reference point cloud frame may be reordered according to octree nodes, in the octree structure, to which the reference points belong. The octree structure may comprise a plurality of cuboids with each cuboid including a range of indices corresponding to reference points contained within the cuboid. The computing device may decode, from a bitstream, residual attributes indicating differences between the attributes of the reconstructed geometry and the attribute predictors. The computing device may determine the decoded attributes, for example, based on adding the attribute predictors and the decoded residual attributes. The computing device may entropy decode, from the bitstream, transformed coefficients corresponding to the residual attributes. The computing device may determine the residual attributes, for example, based on applying an inverse intra transform to the decoded transformed coefficients. The computing device may dequantize the transformed coefficients. The residual attributes may be determined by applying/using the inverse intra transform to the dequantized transformed coefficients. The residual attributes may be encoded and decoded, for example, based on a prediction with lifting (pred-lift) transform scheme. The intra transform may comprise an Adaptive-DCT and the inverse intra transform may comprise an inverse Adaptive-DCT (A-DCT). The intra transform may comprise a RAHT transform and the inverse intra transform may comprise an inverse RAHT transform of a RAHT scheme. The intra transform may comprise a Haar transform and the inverse intra transform may comprise an inverse Haar transform. The reference point cloud frame for attributes may be determined from an already-coded reference point cloud frame. The already-coded reference point cloud frame may be used to encode or decode the geometry of the point cloud frame. The computing device may decode the motion vector field and/or an indication of the already-coded reference point cloud frame. The computing device may receive, from a bitstream, an inter residual activation flag indicating whether the attributes may be coded, for example, based on the attribute predictors. The determining the attribute predictors may be, for example, based on the inter residual activation flag. The attributes of the reconstructed geometry may be decoded using the attribute predictors, for example, based on a quality of prediction of the attributes associated with the reconstructed geometry. The quality of prediction may be determined based a distance of projection of the attributes associated with the decoded geometry. The inter residual activation flag may be associated with a spatial region of the point cloud frame. The computing device may apply/use an intra transform to the attribute predictors. The computing device may decode, from a bitstream, transformed residual attributes indicating differences between transformed attributes of the reconstructed geometry and the transformed attribute predictors. The computing device may determine the transformed attributes, for example, based on adding the transformed attribute predictors and the decoded transformed residual attributes. The computing device may determine the decoded attributes, for example, based on applying an inverse intra transform to the determined transformed attributes. The computing device may entropy decode, from the bitstream, transformed coefficients corresponding to the transformed residual attributes. The computing device may dequantize the transformed coefficients to determine the transformed residual attributes. The computing device may comprise one or more processors and memory, storing instructions that, when executed by the one or more processors, perform the method described herein. A system may comprise the computing device configured to perform the described method, additional operations, and/or include additional elements; and a second computing device configured to encode the point cloud frame. A computer-readable medium may store instructions that, when executed, cause performance of the described method, additional operations, and/or include additional elements.

A computing device may perform a method comprising multiple operations. The computing device may be an encoder. The computing device may determine attributes of reconstructed points of a point cloud frame, for example, based on attributes of points of the point cloud frame. The computing device may determine attribute predictors of the attributes of the reconstructed points, for example, based on attributes of a reference point cloud frame and a motion vector field applied to the reconstructed points. The computing device may encode the attributes of the reconstructed points, for example, based on the attribute predictors determined for the reconstructed points. The reconstructed points may be of a reconstructed geometry of the point cloud frame. The computing device may map attributes of a geometry of the point cloud frame to the reconstructed geometry. The attribute predictors may be determined further based on the mapped attributes. The attributes may be colors. The mapped attributes may be determined, for example, based on recoloring. The mapped attributes for each reconstructed point of the reconstructed geometry may be determined, for example, based on a nearest neighbor search of nearest points, from the reference point cloud frame, to a point corresponding to a motion vector, of the motion vector field, being applied to the reconstructed point. The computing device may determine residual attributes, for example, based on differences between the attributes of the reconstructed geometry and the attribute predictors. The computing device may encode, in a bitstream, the residual attributes. The computing device may determine transformed coefficients, for example, based on applying an intra transform to the residual attributes. The computing device may entropy encode, in the bitstream, the transformed coefficients corresponding to the residual attributes. The computing device may quantize the transformed coefficients. The quantized transformed coefficients may be entropy encoded. The computing device may encode (or signaling), in a bitstream, an inter residual activation flag indicating whether the attributes may be encoded, for example, based on the attribute predictors. The inter residual activation flag may be encoded, for example, based on a quality of projection of the attributes associated with the reconstructed geometry. The attributes of the reconstructed geometry may be encoded using the attribute predictors, for example, based on a quality of prediction of the attributes associated with the reconstructed geometry. The computing device may encode the geometry of the point cloud frame. The computing device may determine the reconstructed geometry, for example, based on decoding the encoded geometry. The computing device may comprise one or more processors and memory, storing instructions that, when executed by the one or more processors, perform the method described herein. A system may comprise the computing device configured to perform the described method, additional operations, and/or include additional elements; and a second computing device configured to decode the point cloud frame. A computer-readable medium may store instructions that, when executed, cause performance of the described method, additional operations, and/or include additional elements.

One or more examples herein may be described as a process which may be depicted as a flowchart, a flow diagram, a data flow diagram, a structure diagram, and/or a block diagram. Although a flowchart may describe operations as a sequential process, one or more of the operations may be performed in parallel or concurrently. The order of the operations shown may be re-arranged. A process may be terminated when its operations are completed, but could have additional steps not shown in a figure. A process may correspond to a method, a function, a procedure, a subroutine, a subprogram, etc. If a process corresponds to a function, its termination may correspond to a return of the function to the calling function or the main function.

Operations described herein may be implemented by hardware, software, firmware, middleware, microcode, hardware description languages, or any combination thereof. When implemented in software, firmware, middleware or microcode, the program code or code segments to perform the necessary tasks (e.g., a computer-program product) may be stored in a computer-readable or machine-readable medium. A processor(s) may perform the necessary tasks. Features of the disclosure may be implemented in hardware using, for example, hardware components such as application-specific integrated circuits (ASICs) and gate arrays. Implementation of a hardware state machine to perform the functions described herein will also be apparent to persons skilled in the art.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein. Computer-readable medium may comprise, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

A non-transitory tangible computer readable media may comprise instructions executable by one or more processors configured to cause operations described herein. An article of manufacture may comprise a non-transitory tangible computer readable machine-accessible medium having instructions encoded thereon for enabling programmable hardware to cause a device (e.g., an encoder, a decoder, a transmitter, a receiver, and the like) to allow operations described herein. The device, or one or more devices such as in a system, may include one or more processors, memory, interfaces, and/or the like.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more of the operations described herein may be conditional. For example, one or more operations may be performed if certain criteria are met, such as in computing device, a communication device, an encoder, a decoder, a network, a combination of the above, and/or the like. Example criteria may be based on one or more conditions such as device configurations, traffic load, initial system set up, packet sizes, traffic characteristics, a combination of the above, and/or the like. If the one or more criteria are met, various examples may be used. It may be possible to implement any portion of the examples described herein in any order and based on any condition.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1.  A method comprising:

    determining, based on decoding points of a point cloud frame associated with content, reconstructed points of the point cloud frame;
    determining, based on attributes of a reference point cloud frame and a motion vector field associated with the reconstructed points, attribute predictors for attributes of the reconstructed points; and
    decoding, based on the determined attribute predictors, the attributes of the reconstructed points.

2.  The method of claim 1, wherein the determining the attribute predictors comprises:
    for each reconstructed point of the reconstructed points:

    determining a point based on a motion vector, of the motion vector field, associated with the reconstructed point;
    selecting, based on the point, one or more reference points from the reference point cloud frame; and
    determining, based on attributes of the selected one or more reference points, an attribute predictor for an attribute of the reconstructed point.

3.  The method of claim 1 or claim 2, wherein the determining the attribute predictors comprises:
    for each reconstructed point of the reconstructed points:

    determining a point based on a motion vector, of the motion vector field, associated with the reconstructed point;
    selecting one or more reference points from the reference point cloud frame based on distances between the one or more reference points and the point; and

determining, based on attributes of the selected one or more reference points, an attribute predictor for an attribute of the reconstructed point.

4. The method of any one of claims 1 to 3, wherein the determining the attribute predictors comprises:
for a reconstructed point of the reconstructed points:
determining, based on translating the reconstructed point by a motion vector of the motion vector field, a point associated with the reconstructed point.

5. The method of any one of claims 1 to 4, wherein the determining the attribute predictors comprises:
for all the reconstructed points:
determining, based on translating the reconstructed points by a same motion vector of the motion vector field, points associated with the reconstructed points.

6. The method of any one of claims 1 to 5, wherein a motion vector of the motion vector field is associated with a plurality of cuboids spatially partitioning a volume containing a decoded geometry of the point cloud frame.

7. The method of any one of claims 1 to 6, wherein the determining the attribute predictors comprises:
generating, based on a space partitioning tree corresponding to the reference point cloud frame, an attribute projection model.

8. The method of any one of claims 1 to 7, wherein the decoding the attributes of the reconstructed points comprises:

decoding, from a bitstream, residual attributes indicating differences between the attributes of the reconstructed points and the attribute predictors; and
determining, based on adding the attribute predictors and the decoded residual attributes, decoded attributes of the reconstructed points.

9. The method of any one of claims 1 to 8, further comprising:
determining, based on an already-coded reference point cloud frame, the reference point cloud frame, wherein the already-coded reference point cloud frame is used to decode a geometry of the point cloud frame.

10. The method of any one of claims 1 to 9, wherein the reconstructed points are of a reconstructed geometry of the point cloud frame.

11. The method of any one of claims 1 to 10, wherein the decoding the attributes of the reconstructed points is based on a quality of prediction of the attributes of the reconstructed points.

12. The method of any one of claims 1 to 11, further comprising receiving, from a bitstream, an inter residual activation flag indicating whether the attributes are coded based on the attribute predictors, wherein the determining the attribute predictors is based on the inter residual activation flag.

13. A computing device comprising: one or more processors; and memory storing instructions that, when executed by the one or more processors, cause the computing device to perform:
the method of any one of claims 1 to 12.

14. A system comprising:

a first computing device configured to perform the method of any one of claims 1 to 12; and
a second computing device configured to encode the points of the point cloud frame.

15. A computer-readable medium storing instructions that, when executed, cause performance of:
the method of any one of claims 1 to 12.

FIG. 1

**FIG. 2**

EP 4 586 196 A1

occW$_{2,2}$ = 10011000

occW$_{3,2}$ = 11110001

occW$_{3,4}$ = 00010010

occW$_{3,3}$ = 00001000

occW$_{1,1}$ = 10000001

occW$_{3,1}$ = 00110001

occW$_{2,1}$ = 10000000

FIG. 3

EP 4 586 196 A1

FIG. 4

FIG. 5

Determine occupancy configuration β
*602*

Dynamically reduce using $DR^n$
*604*

Lookup context index in LUT
*606*

Select context
*608*

Entropy code occupancy of current child cuboid
*610*

FIG. 6

*FIG. 7*

FIG. 8A

FIG. 8B

FIG. 8C

EP 4 586 196 A1

$$u+v+w = 1$$
$$0 \le u, v, w$$

$$P = uA + vB + wC$$

*FIG. 9A*

*FIG. 9B*

EP 4 586 196 A1

already-coded reference frame 1010

current frame 1001

motion search
1020

motion vectors 1021

entropy code motion vectors
1025

motion compensate
reference frame
1030

bitstream 1050

motion compensated frame 1031

inter frame predict current frame
1040

inter residual 1041

entropy code inter residual
1045

bitstream 1050

1000

FIG. 10

EP 4 586 196 A1

EP 4 586 196 A1

FIG. 11

*FIG. 12*

EP 4 586 196 A1

FIG. 13

FIG. 14

FIG. 15

transform along
three directions

*1600*

DC coefficients at
depth d

*1601*

*1610*

DC coefficients at
depth d-1

*1611*

*1620*

*1621*

AC coefficients at
depth d

*FIG. 16*

EP 4 586 196 A1

current frame 1710

Encode geometry of the
current point cloud frame
1720

geometry information 1721

decoded geometry 1722

Reference point cloud
frame for attributes
1741

Map attributes of the current
geometry to the decoded
geometry
1730

Project the attributes of the reference
point cloud frame for attibutes onto the
decoded geometry
1740

Bitstream
1760

mapped attributes
1731

projected attributes 1742

Encode mapped attributes based on
attribute prediction obtained from
projected attributes
1750

attribute
information 1751

FIG. 17

1700

EP 4 586 196 A1

```
Decode geometry of the
current point cloud frame
        1810
```
← - - - - - - - - *geometry information 1811* - - - - - - - - -

↓ **decoded geometry 1812**

*Reference point cloud frame for attributes 1821*

```
Project the attributes of a reference
point cloud frame for attributes onto the
decoded geometry
              1820
```

```
Bitstream
  1840
```

↓ **projected attributes 1822**

*decoded attributes 1832*

```
Decode attribute information based on
attribute prediction obtained from
projected attributes
              1830
```
← - - - - - - - - *attribute information 1831* - - - - - - - - -

*1800*

# FIG. 18

FIG. 19

Reference point cloud frame 2002

Reference point 2012

MV field 2010

MV

Reference point 2014

Current point cloud frame 2006

Current point 2016

p

r1

r1'

Reference point cloud frame 2004

Search 2018

*FIG. 20A*

Reference point cloud frame 2002

Search 2028

Current point 2026

MV field 2020

-MV

Current point cloud frame 2006

Current point 2016

p

r2

p'

Reference point 2032

Motion-compensated current points 2024

*FIG. 20B*

EP 4 586 196 A1

decoded geometry 1914

**2101**

reference point
cloud frame 1902

Generate attributes projection model
2110

*attributes projection model 2104*

MV Field
2102

Perform attributes projection onto
the decoded geometry
2112

*projected attributes 2106*

2100

*FIG. 21*

For each reconstructed point of the decoded geometry
_2202_

Determine a point (p') based on a motion vector associated with the reconstructed point (p)
_2204_

Select one or more reference points from a reference point cloud frame based on distances between the one or more reference points and the point
_2206_

Determine, based on the distances, the one or more reference points as the _k_ nearest points to a position of the point
_2208_

Determine an attribute predictor for an attribute of the reconstructed point based on attributes of the selected one or more reference points
_2210_

Determine the attribute predictor based on the distances between positions of the _k_ nearest points and the position of the point
_2212_

Determine the attribute predictor is for the reconstructed point based on the point being associated with the reconstructed point
_2214_

_2200_

FIG. 22

Determine attributes of reconstructed points of a point cloud frame based
on attributes of points of the point cloud frame
*2302*

Determine attribute predictors of the attributes of the reconstructed
points based on attributes of a reference point cloud frame and a motion
vector field applied to the reconstructed points
*2304*

Encode the attributes of the reconstructed points based on the attribute
predictors
*2306*

*2300*

# FIG. 23

Decode points of a cloud frame to determine reconstructed points of the
point cloud frame
*2402*

Determine attribute predictors of attributes of the reconstructed points
based on attributes of a reference point cloud frame and a motion vector
field applied to the reconstructed points
*2404*

Decode the attributes of the reconstructed points based on the attribute
predictors
*2406*

*2400*

*FIG. 24*

**FIG. 25**

FIG. 26

Europäisches
Patentamt

European
Patent Office

Office européen
des brevets

# EUROPEAN SEARCH REPORT

**Application Number**

EP 25 15 1988

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 202 078 B2 (APPLE INC [US]) 14 December 2021 (2021-12-14) * column 2 * * column 12 - column 16 * * column 18 - column 19 * * column 32 - column 35 * * figures 1, 2, 3, 5 * ----- | 1-15 | INV. G06T9/00 H04N19/597 H04N19/96 H04N19/54 H04N19/70 |
| X | US 2023/290006 A1 (HUR HYEJUNG [KR] ET AL) 14 September 2023 (2023-09-14) * paragraph [0058] - paragraph [0509] * ----- | 1-15 | |
| X | WO 2023/131136 A1 (BEIJING BYTEDANCE NETWORK TECH CO LTD [CN]; BYTEDANCE INC [US]) 13 July 2023 (2023-07-13) * page 11 - page 34 * ----- | 1-15 | |

**TECHNICAL FIELDS SEARCHED (IPC)**

H04N

The present search report has been drawn up for all claims

| Place of search | Date of completion of the search | Examiner |
|---|---|---|
| Munich | 28 May 2025 | Morbee, Marleen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                            

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 25 15 1988

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2025

| Patent document cited in search report | | Publication date | Patent family member(s) | | Publication date |
|---|---|---|---|---|---|
| US 11202078 | B2 | 14-12-2021 | US | 2021099711 A1 | 01-04-2021 |
| | | | WO | 2021062279 A1 | 01-04-2021 |
| US 2023290006 | A1 | 14-09-2023 | US | 2023290006 A1 | 14-09-2023 |
| | | | WO | 2022050650 A1 | 10-03-2022 |
| WO 2023131136 | A1 | 13-07-2023 | CN | 118679741 A | 20-09-2024 |
| | | | CN | 118830249 A | 22-10-2024 |
| | | | EP | 4460971 A1 | 13-11-2024 |
| | | | EP | 4460973 A1 | 13-11-2024 |
| | | | JP | 2025501355 A | 17-01-2025 |
| | | | JP | 2025503813 A | 05-02-2025 |
| | | | KR | 20240132486 A | 03-09-2024 |
| | | | KR | 20240132487 A | 03-09-2024 |
| | | | US | 2024357172 A1 | 24-10-2024 |
| | | | US | 2024357174 A1 | 24-10-2024 |
| | | | WO | 2023131132 A1 | 13-07-2023 |
| | | | WO | 2023131136 A1 | 13-07-2023 |

EPO FORM P0459

For more details about this annex : see Official Journal of the European Patent Office, No. 12/82

**REFERENCES CITED IN THE DESCRIPTION**

**Patent documents cited in the description**

• US 63621100